(19) Europäisches Patentamt
European Patent Office
Office européen des brevets

(11) Publication number : 0 446 036 A2

# (12) EUROPEAN PATENT APPLICATION

(21) Application number : 91301876.8

(22) Date of filing : 06.03.91

(51) Int. Cl.$^5$ : G05B 23/02, B21B 37/00, C02F 1/00

(30) Priority : 09.03.90 JP 56364/90

(43) Date of publication of application : 11.09.91 Bulletin 91/37

(84) Designated Contracting States : DE FR GB

(71) Applicant : HITACHI, LTD.
6, Kanda Surugadai 4-chome
Chiyoda-ku, Tokyo 101 (JP)

(72) Inventor : Takahashi, Kazunori
19-1-303, Ishinazaka-cho, 1-chome
Hitachi-shi, Ibaraki 319-12 (JP)
Inventor : Katayama, Yasunori
449-60 Miwa 1-chome
Mito-shi, Ibaraki 310 (JP)
Inventor : Odamura, Motomi
2917-96 Mawatari
Katsuta-shi, Ibaraki 312 (JP)
Inventor : Abe, Shigeo
3424-1 Higashii-shikawa
Katsuta-shi, Ibaraki 312 (JP)
Inventor : Baba, Kenji
8-6, Mikanohara-cho 1-chome
Hitachi-shi, Ibaraki 316 (JP)
Inventor : Amano, Masahiko
19-1-102, Ishinazaka-cho, 1-chome
Ibaraki-shi, Ibaraki 319-12 (JP)

(74) Representative : Calderbank, Thomas Roger et al
MEWBURN ELLIS 2 Cursitor Street
London EC4A 1BQ (GB)

## (54) Control apparatus.

(57) A control apparatus controls a system (100) such as a rolling mill or sewage plant on the basis of the data received from that system. Firstly, the data is analysed (103) to derive a characteristic of the data, and then that characteristic is investigated (104) to determine a problem of the system (assuming such a problem exists). Then, that problem is analysed automatically (105,106) to derive one or more strategies to resolve that problem, and then the system (100) may be controlled (214) on the basis of that strategy. The analysis may thus be operated automatically, allowing a greater degree of flexibility and responsiveness of automatic control. A model of the system may be provided in a switchable memory (212) for testing the strategy or strategies derived before applying the optimum strategy to the system (100).

EP 0 446 036 A2

FIG.1

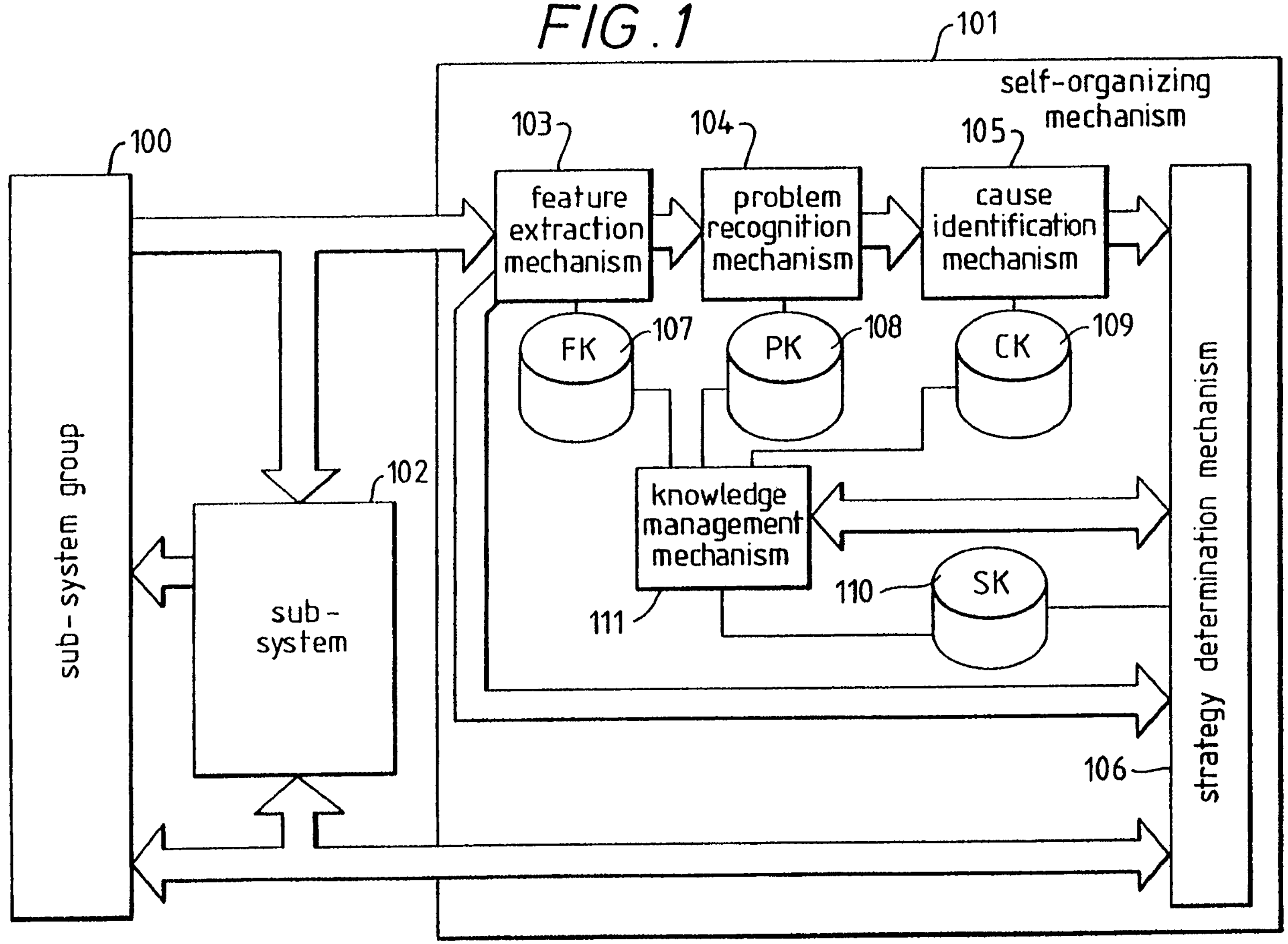
101
self-organizing mechanism
100
103
feature extraction mechanism
104
problem recognition mechanism
105
cause identification mechanism
FK
107
PK
108
CK
109
knowledge management mechanism
111
SK
110
strategy determination mechanism
106
sub-system group
102
sub-system

# CONTROL APPARATUS

The present invention relates to a control apparatus for controlling a system automatically. It is applicable, for example, to control of components of a rolling mill or a sewage treatment plant, or controlling a network of computers.

There have been many proposals for controlling a system automatically. In general, existing systems require the operator to predict, in advance, the type of changes that can occur in the system and define an appropriate operational strategy for overcoming each possible change that is predicted.

It is also known, e.g. from International Application W085/01807 to provide a feedback system in which a plant is controlled on the basis of a controller model, which model sets parameters which are used according to an appropriate parameter relationship to control the plant. The values of those parameters are derived from algorithms to derive the parameters from appropriate outputs of the plant. However, even in such a system, the possible control operations are limited by the pre-defined relationships between the parameters and by the algorithms themselves.

In the mill systems discussed above, the operator must define, to a greater or lesser extent, the control operations which must be used when a particular change in the system has occurred. Thus, the operator must forecast exactly all the possible changes, and provide appropriate strategies, and the amount of work involved in this is large, and increases significantly with increase in complexity of the system to be controlled. Also, the control strategies that are used are limited to those which can be predicted by the operator in advance, and therefore difficulties will arise if unforeseen situations occur, such as accidents, or if the system changes so much that its behaviour falls outside that predicted.

Therefore, it is desirable for the system to be capable of a more varied control operation.

Therefore, the present invention proposes that data from the system is analysed to derive at least one characteristic of the data, and then that at least one characteristic is analysed to identify at least one corresponding problem. From that corresponding problem, an appropriate problem resolution strategy may be obtained. The data will normally be detected by a plurality of detection units, and there will be an appropriate means for controlling the system on the basis of the strategy which has been derived.

According to the present invention, a control apparatus may be formed by a plurality of detection units, and appropriate analysis and control means. However, the detection units will normally be formed by separate components, so the present invention also provides a control mechanism incorporating the appropriate analysis means. Such a control mechanism may then be connected to detection units and to the components for controlling the system itself. Furthermore, the present invention proposes a system with a plurality of components which are connected to a control apparatus discussed above, to enable those components to be controlled. The components may be sub-systems interlinked, with each sub-system being able to perform a plurality of operations. Alternatively, the components may be arranged to interact in a multiplicity of ways, so that the control apparatus controls the appropriate interaction among the components. The former cases applicable, for example, where the sub-systems are computers whilst the later case is appropriate, for example, where the components are components of a rolling mill or sewage treatment plant.

Preferably, an appropriate memory stores a plurality of potential problems, so that at least one characteristic derived from the data from the system may be compared with the plurality of potential problems to identify the problem that is appropriate in view of the data that is obtained from the system. In a similar way, a memory may store cause data representing a plurality of potential causes of problems, so that the problem derived from the data from the system may be compared with the potential problem causes, to enable to strategy of the resolution of the problem to be derived more easily.

Embodiments of the present invention will now be described in detail, by way of example, with reference to the accompanying drawings in which:

Fig. 1 is a block diagram showing one embodiment of this invention;

Fig. 2 is a diagram of a sub-system of the embodiment of Fig, 1;

Fig. 3 is a diagram of a sub-system group;

Fig. 4 and Fig. 5 are diagrams showing a modification of the embodiment shown in Fig. 1;

Fig. 6 is a diagram of a feature extraction mechanism in self-organizing mechanism shown in Fig. 1;

Fig. 7 is a diagram of a problem recognition mechanism of the self-organizing mechanism shown in Fig. 1;

Fig. 8 is a diagram of a cause identification mechanism of the self-organizing mechanism shown in Fig. 1;

Fig. 9 is a diagram of a strategy determination mechanism of the self-organizing mechanism shown in Fig. 1;

Fig. 10 is a diagram of a parameter modification mechanism of the strategy determination mechanism

shown in Fig. 9;

Fig. 11 is a diagram of a method change mechanism of the strategy determination mechanism shown in Fig. 9;

Fig. 12 is a diagram of a function modification mechanism of the strategy determination mechanism shown in Fig. 9;

Fig. 13 is a diagram of a further embodiment in which the present invention is applied to a roller system;

Fig. 14 is a diagram of a further feature extraction mechanism;

Fig. 15 is a diagram of a further evaluation mechanism;

Fig. 16 is a diagram showing a processing operation for an n-th evaluation element;

Fig. 17 is a diagram showing the processing operation for a reasonsing mechanism;

Fig. 18 is a diagram showing processing by forward reasoning;

Fig. 19 is a diagram showing the processing occurring in the forward reasoning loop;

Fig. 20 is a diagram showing processing by backward reasoning;

Fig. 21 is a diagram showing the processing occurring in the backward reasoning loop;

Fig. 22 is a diagram showing the processing occurring in the problem recognition mechanism;

Fig. 23 is a diagram showing a knowledge base which may be used in a problem recognition mechanism of an embodiment of the present invention;

Fig. 24 is a diagram showing the processing occurring in the self-organizing design mechanism;

Fig. 25 is a diagram showing a knowledge base which may be used for the reasoning processing for a control plan modification;

Fig. 26 is a diagram showing a knowledge base for function modification;

Fig. 27 is a block diagram of one example of a plate thickness control system for one stand of a roller of a rolling mill;

Fig. 28 is a diagram showing the relationship between matrix disturbance and plate thickness, and depression command and plate thickness;

Fig. 29 and Fig. 30 are diagrams for explaining the motion of the processing of the roller system;

Fig. 31 is a block diagram showing roller eccentricity;

Fig. 32 is a diagram showing the relationship between the deviation of the plate thickness just under the roll of the rolling mill when the deviation of the matrix changes stepwise;

Fig. 33 and Fig. 34 are diagrams showing the movement of the processing of the roller system;

Fig. 35 is a block diagram showing an arrangement in which eccentricity detection meachnism is provided, and in which frequency, phase and amplitude deviations are detected with the plate thickness as an input;

Fig. 36 is a diagram showing another embodiment in which the present invention is appied to operation management of a sewage disposal process;

Fig. 37 is a diagram showing the processing of the feature extraction mechanism in the embodiment of Fig.. 36;

Fig. 38 is a diagram showing the processing of the measuring instrument check step in the embodiment of Fig. 36;

Fig. 39 is a diagram showing the processing of the measuring instrument check step in the embodiment of Fig. 36;

Fig. 40 and Fig. 41 are diagrams showing the fluctuation patterns of the measuring instrument in the embodiment of Fig. 36;

Fig. 42 is a diagram showing a membership function;

Fig. 43 is a diagram showing the processing occuring in the problem recognition mechanism in the embodiment of Fig. 36;

Fig. 44 is a diagram showing the processing occurring in the cause identification mechanism of the embodiment of Fig. 36;

Fig. 45 is a diagram showing the cause identification mechanism itself;

Fig. 46 is a diagram showing a neural network;

Fig. 47 is a diagram for explaining the basic calculations occurring in a neuron element model;

Fig. 48 is a diagram showing the relationship between the calculated value of the neuron element model and the input summation;

Fig. 49 is a diagram showing the constitution of the strategy determination mechanism;

Fig. 50 is a diagram of an information processing system having a plurality of sub-systems, which is another embodiment of the present invention;

Fig. 51 is a diagram of the self-organizing design mechanism of the embodiment of Fig. 50;

Fig. 52 is a block diagram showing the execution sequence for the self-organizing operation;

Fig. 53 is a diagram of the function hierarchy of the dispersion control in the embodiment of Fig. 50; and

Fig. 54 is a diagram of a frequency control system for an electric power system.

A first embodiment of the present invention will now be explained, referring first to Fig. 1. Fig. 1 shows a diagram of a connecting relationship between one or more sub-system groups 100, a sub-system 102, and a self-organizing mechanism 101, and also shows the internal construction of the self-organizing mechanism 101. The sub-system 102 executes processing by repeatedly communicating information to the sub-system group 100. The self-organizing mechanism 101 receives the information being communicated and can also communicate information to the sub-system group 100 and the sub-system 102.

The construction of the sub-system 102 will now be explained with reference to Fig. 2. The sub-system 102 has an administration mechanism 1021 to communicate the information or controlling procedure of a process, a mechanism 1022 for executing a function of the sub-system, a mechanism 1023 to store a function to be executed in mechanism 1022, and a mechanism 1024 to modify the function stored in mechanism 1023. Input/output with the extension of the system is executed through the administration mechanism 1021. In the sub-system 102 the sub-system function execution mechanism 1022, the sub-system function storage mechanism 1023, and the sub-system modification mechanism 1024 are connected to the administration mechanism 1021, and the sub-system function execution mechanism 1022, and the sub-system function storage mechanism 1023 and the sub-system modification mechanism 1024 are also inter-connected.

The construction of the sub-system group 100 will now be explained with reference to Fig. 3. The subsystem group 100 has one or more sub-systems 102A1, 102A2, and a self-organising mechanism group 101A, and these communicate with each other through a communication means 1001. The construction of the sub-systems 102A1 and 102A2 are the same as the sub-system 102, and group 101A has one or more mechanisms which are similar to the self-organizing mechanism 101.

The self-organizing mechanism 101 shown in Fig. 1 has a feature extraction mechanism 103 which takes in information from the sub-systems. The feature extraction mechanism 103 is connected to a problem recognition mechanism 104, which is connected in turn to a cause identification mechanism 105 and then to a strategy determination mechanism 106. There is also a direct connection to the sub-system 102 and the sub-system group 100 from the strategy determination mechanism 106, and also the feature extraction mechanism 103 is connected directly to the strategy detemination mechanisn 106. The feature extraction mecahnism 103, the problem recognition mechanism 104, the cause identification mechanism 103, the problem recognition mechanism 104, the cause identification mechanism 105, and the strategy determination mechanism 106 are connected to a series of databases containing information (knowledge). As showin in Fig. 1, there is a knowledge of features (FK) database 107, a problem related knowledge (PK) database 108, a cause related knowledge (CK) database 109, and a strategy determination knowledge (SK) database 110 respectively. Moreover, these databases 107, 108, 109 and 110 are connected to a knowledge management mechanism 111. The knowledge management mechanism 111 is connected to the strategy determination mechanism 106.

Although Fig. 1 shows an arrangement in which the self-organizing mechanism 101 is connected exclusively with the sub-system 102, the self-organizing mechanism 101 can alternatively be connected to two or more sub-systems such as sub-systems 102B1 and 102B2 of the self-organizing mechanism 101B shown in Fig. 4. A further alternative is for all of the sub-system group 100C to be connected with one self-organizing mechanism 101C as shown in Fig. 5. In the arrangement shown in Fig. 5, the sub-system group 100C does not include a self-organizing mechanism group 101A in the sub-system group 100. The sub-system group 100C has a similar construction to the sub-system group 100, and sub-systems 102B1 and 102B2 have a similar construction to the sub-system 102.

The structure of the feature extraction mechanism 103 of the self-organizing mechanism 101 in Fig. 1 is shown in Fig. 6. In the feature extraction mechanism 103, first information from the sub-system group is inputted to a feature extraction selection mechanism 1032. Mechanism 1032, determines which of a plurality of features to be selected from a plurality (n) extraction mechanisms 1033 and 1034, which features are prepared on the basis of information stored in the FK database 107, and the information from the sub-system group is sent to a selected mechanism. Each of the n feature extraction mechanisms 1033 and 1034 converts the information from the sub-system group to a characteristic amount according to a determined processing procedure. The converted characteristic amounts from each of the n feature extraction mechanism 1033, 1034 are inputted to an output control mechanism 1035, and are outputted sequentially to a problem recognition mechanism 104 and the strategy determination mechanism 106.

The construction of the problem recognition mechanism 104 of the self-organizing mechanism 101 in Fig. 1 is shown in Fig. 7. The problem recognition mechanism 104, receives characteristic amounts from the feature extraction mechanism 103, which characteristic amounts are then inputted to an input control mechanism 1041. The input control mechanism 1041 sends the inputted information to all of a plurality (n) of problem matching detecting mechanisms 1042 and 1043. In each problem matching detection mechanism 1042, 1043, matching is executed if the characteristic amount coincides with knowledge of the problem stored in the PK database

108. A recognition result and the characteristic amount are sent to an output control mechanism 1044. When the characteristic amount does not coincide, nothing is done and the characteristic amounts from the feature extraction mechanism 103 is directly outputted to the next cause identification mechanism 105 in order from 1044.

The structure of the cause identification mechanism 105 of the self-organizing mechanism 101 in Fig. 1 is shown in Fig. 8. The cause identification mechanism 105 identifies a potential cause of the problem by use of reasoning mechanism 1051 and the cause related knowledge from the CK database 109 from the recognition result and the characteristic amount sent from the problem recognition mechanism 104. Then, the type of the identified cause is sent to the strategy determination mechanism 106.

The construction of the strategy determination mechanism 106 of the self-organizing mechanism 101 in Fig. 1 is shown in Fig. 9. A strategy for the solution of a problem is determined from the type of cause from the cause identification mechanism 105 by means of strategy determination knowledge from SK database 110. Although there are various strategies, they can be classified into three types. The first type is a strategy intended to solve the problem by changing parameters for prescribing processing executed in the sub-system. The second type is a strategy intended to solve the problem by changing parameters for prescribing processing executed in the sub-system to a different one provided but carrying out the same function. The third type is a strategy intended to solve the problem by executing a function that differs from existing strategy of the sub-system. Thus, first of all, the type of cause from the cause identification mechanism 105 is received by a type selection mechanism 1062. That mechanism 1062 selects which type is suitable for solving the problems by means of the strategy determination knowledge of SK database 110. Then, the information is sent to a mechanism for performing the selected strategies. Three strategies are performed by a parameter modification mechanism 1063, a method determination mechanism 1064, and a function modification mechanism 1065 respectively. After the information is sent to these three mechanisms, practical modification is executed using these informations as a center. When these mechanisms operate, processing is executed with reference to the strategy determination knowledge of the SK database 110.

Because shifts in related knowledge is accompanied by shifts in function modification, the function modification mechanism 1065 is connected to a knowledge management mechanism 111, and is arranged so that it can grasp the situation of both itself and also other sub-systems by communication among the self-organizing mechanisms connected to the feature extraction mechanism 103 to recognize the situation of the other sub-system needed for a practical shift in function.

The construction of the parameter modification mechanism 1063 will now be explained with reference to Fig. 10. The parameter modification mechanism 1063 receives information from the type selection mechanism 1062 by an input/output control mechanism 10631. Then, the degree to which a parameter is to be changed is calculated in a parameter modification calculation mechanism 10632 as occassion demands, or is determined in a parameter modification reasoning mechanism 10633 by means of knowledge for a parameter change (PMK) in the strategy determination knowledge of the SK database 110. The amount of change is sent to the sub-system 102 or the sub-system group 100. At the sub-system 102, the sub-system function modification mechanism 1024 receives a new value of the parameter through the management mechanism 1021, and modification is concluded by rewriting the parameter value stored in the sub-system function storage mechanism 1023 by using the new value.

Next, the construction of the method modification mechanism 1064 will be explained with reference to of Fig. 11. The method modification mechanism 1064 receives information from the type selection mechanism 1062 via a method selection mechanism 10641. One or more of a plurality of method modules and knowledge for these methods are stored in the strategy determination knowledge of the SK database 110. The method to be selected is determined, based on the knowledge and the information from upstream in the method selection mechanism 10641. A method call mechanism 10642 receives the result, calls out a method module being an object in the strategy determination knowledge of the SK database 110, and sends that module to the sub-system 102 or the sub-system group 100. The sub-system function modification mechanism 1024 receives the module of the method through the management mechanism 1021 and a modification is completed by replacing the module and the parameter value stored in the sub-system function modification mechanism 1024.

The construction of the function modification mechanism 1065 will now be explained with reference to Fig. 12. The function modification method determination mechanism 1065 receives information from the type selection mechanism 1062 in the function modification method determination mechanism 10651. The appropriate function modification method, such as cancel, addition, or copying, is determined in mechanism 10651 by means of the strategy determination knowledge in SK database 110 so that the appropriate modification is executed in the appropriate manner. A knowledge modification execution mechanism 10652 executes shifting, cancel, addition, and copying etc. among the self-organizing mechanisms 101 through the knowledge management mechanism 111. For a module corresponding to a "cancel" operation, the information is sent to the sub-system

via a function modification mechanism 10653. In the sub-system 102, the sub-system function modification mechanism 1024 (see Fig. 2) cancels the module stored in a sub-system function storage mechanism 1025, via the management mechanism 1021. For a module corresponding to a "copying" operation, the sub-system that is the most suitable is found by means of communication with the other self-organizing mechanisms, and additional information is sent to the sub-system to be copied, and information for copying is sent to the original sub-system. In the sub-system 102, the information for copying is received by the function modification mechanism 1024, via the management mechanism 1021, and the mechanism 1024 sends a copy of the module stored in the mechanism 1025 to other sub-systems through the management mechanism 1021. For an addition, the module that has been sent is received by the mechanism 1024 through the management mechanism 1021, and it is added to the memory of mechanism 1023. Finally, module shifting can be achieved by combining module copying and module cancelling.

An example will now be discussed in which a plurality of tasks are executed in a system in which a plurality of CPUs communicate with each other and by means of the arrangements of Figs. 6 to 9. In this case, information detected by the feature extraction mechanism 103 in the self-organizing mechanism 101 are a user CPU time for executing the task, a system CPU time needed during execution of the task (memory swaps when using virtual memory swap time etc.), and communication time and number of times for communication. The variations determined in mechanism 103 can be provided in the feature extraction mechanisms 1033 and 1034 by storing detection of these information in the knowledge of features in FK database 107. Then, in mechanisms 1033 and 1034, two CPU times and two communication information items from the various information flowing in are extracted and sent to the output control mechanism 1035. Mechanism 1035 sends a plurality of characteristic amounts to the next problem recognition mechanism 104, and are also sent to the strategy determination mechanism 106.

The following are considered as a problem in the problem recognition mechanism 104. The first one is when the execution latency time for executing a plurality of tasks needs to be more than a prescribed value for a task in a small processing operation. The second one is when the CPU time needed occupies more than a certain prescribed value of total CPU time, that total CPU time being the sum of user CPU time and system CPU time when executing a certain task. The third one is when the communication needed is repeated more than a number of times over a certain prescribed time. Mechanism 104 is capable of setting a problem to be detected in a problem matching detection mechanism 1042 and 1043 by storing these problems in the problem related knowledge of PK database 108. The characteristic amoumt sent from the feature extraction mechanism 103 (CPU time, the amount of communication) is received in the input control mechanism 1041, and all of the characteristic amounts are sent to mechanisms 1042 and 1043. It is then decided if the characteristic amounts that have been sent match a problem that is provided in the mechanism in each problem matching detection mechanism; no characteristic amount is output if there is no match. If there is a match, information and the characteristic amount for the problem are sent to the output control mechanism 1044. If a decision of the problem existance is not ouput from all the problem matching detection mechanisms, it is decided that there is no problem in the sub-system, and the self-organizing mechanism 101 repeats its monitoring of the characteristic amount without operating the sub-system. If it is decided that there is a problem, information about the problem and the characteristic amount are sent to the cause identification mechanism 105.

In the cause identification mechanism 105, a potential cause of the problem is determined by a reasoning mechanism 1051 by means of the cause related knowledge in CK database 109 based on the information of the problem and the characteristic amount sent from mechanism 104. The following are considered as cause related knowledge. A cause that needs a lot of latency time corresponds to the case where there are too many tasks to be executed in the CPU, or the length of time allotted to a plurality of tasks is not suitable. A cause corresponding to the case in which system CPU time needs to be long results when the number of times of memory swap is large, or the user CPU time divided for the task is short. A cause corresponding to the case where the communication time needs to be long is when the amount of communication itself is large, or communication takes a lot of time to pass a communication path. The cause that has been derived according to this knowledge and the characteristic amount are sent to the strategy determination mechanism 106.

In the strategy determination mechanism 106, the cause and the characteristic amount that are sent from the cause identification mechanism 105 are received by the type selection mechanism 1062, and a strategy is selected to give an appropriate method. Mechanism 1062 determines which method should be adopted, making use of the parameter modification mechanism 1063, the method modification mechanism 1064, and/or the function modification mechanism 1065 from the type of the cause and the characteristic amount by using the strategy determination knowledge in SK database 110. Various types of strategy determination knowledge will now be discussed.

If the number of the tasks is too great (i.e. the CPU is overloaded), the tasks are shifted to a CPU that has fewer or smaller tasks allotted than the tasks to be executed in the overloaded CPU. If there is no CPU which

has a smaller number of tasks than the overloaded CPU, the value of upper limit for the size of task being executed is reduced and the CPU time allotted for each task is measured. The former is equal to function modification, and the latter is equal to parameter modification.

When the proportion of CPU time that is allotted for a plurality of tasks is not appropriate, a changeover timer for the CPU is set to give a time priority, that is to say, is set to give longer CPU times to tasks with a higth degree of priority. This is equal to a parameter modification.

When reducing the number of swaps, one or more important segments are set to be an object which undergoes no swaps, if possible, by giving a priority to that important segment, and making an object which can readily undergo swaps to have a low degree of priority. When a lot of memory domains are needed at one time, the method of operation is changed so that each task is given a degree of priority for memory use and the number of usable segments can be changed according to the degree of priority. Both of these methods correspond to method modification. To increase the user CPU time that is allotted to a single task, a degree of priority associated with the CPU time of the task.

When the level of communication operations is itself high, if the degree of priority for a given communication is high, high speed communication can be executed by setting the management mechanism of each sub-system to give a preferential right of use for a particular communication route. If the degree of priority is low, when there is a problem, and there is no essential executing operation, processing is continued under the same conditions. The former is equal to a parameter change.

For transmission on a communication route for which transmission takes a long time, the distance between a plurality of tasks communicating with each other may be reduced. For this, a task is shifted, so that tasks which need too communicate with each other are executed on the same CPU, or, a near CPU as close as pssible when one CPU is full. This is equal to a function modification.

One method out of three methods is selected in the type selection mechanism 1062 by means of the above-mentioned knowledge. Two of these methods will now be explained with reference to Figs. 10 to 12.

In the parameter modification mechanism 1063, information from the type selection mechanism 1062 is received by the input/output control mechanism 10631. That information may be, for example, the degree of priority for each task when CPU time is allotted based on the degree of priority for a task. In this case, the ratios of a sumtotal of degrees of priorities for all tasks to the degree of priority of each task are calculated in the parameter modification calculation mechanism 10632, and the ratios are output as parameteres. Alternatively, a suitable change is determined by the reasoning mechanism 10633 by means of knowledge for parameter change in the strategy determination knowledge of SK database 110. The information used at this time may be, for example, that a number of tasks are decreased by one when there is a large number of tasks, or that the degree of use of priority for a communication route is increased by one when the volume of communication exceeds a prescribed value and the degree of priority is high.

In the method modification mechanism 1064, the information from the type selection mechanism 1062 is received by the method selection mechanism 10641. That information may be, for example, that the number of swap times for a memory when decreasing the number of swap times for that memory, a degree of priority of a segment/task, and the amount of memory use. The method selection mechanism 10641 determines which method should be selected by means of the knowledge for strategy in determination SK database 110. For example, if the number of swap times for the memory is decreased, knowledge such as that the method is changed to one in which a number of usable segment is allotted proportional to the domain when the task needs a memory domain larger than a certain prescribed size, or that the method is changed to one in which a degree of priority for a segment is increased when a large memory domain is not needed. Next, the method call mechanism 10642 receives the result, identifies a selected method module from the strategy determination knowledge of SK database 110, and outputs that selected module.

In the function modification mechanism 1065, the information from the type selection mechanism 1062 is received by the function modification method determination mechanism 10651.That information may be, for example, a shift in the task, the size of the task, and also the location of tasks communicating with each other, when shifting tasks communicating whith each other. When shifting is executed, the shifted place of the function module is identified. Then, if two or more self-organizing mechanisms exist, the function modification method determination mechanism 10651 communicates the information with a function modification method determination mechanism in the other self-organizing mechanism, identifies a sub-system in which the number of tasks being executed is small, and shifts the task correspondingly. In the same way, when shifting a module in communication, the function modification method determination mechanism determines the location to which the module is to be shifted by communication of the information of the number of tasks. Then, when are plurality of self-organizing mechanisms, knowledge for the module to be shifted is shifted to the self-organizing mechanism for managing a sub-system to be shifted by the knowledge modification execution mechanism 10652. A copying command may be sent to a sub-system in a former place, and then an additional command is sent to

a sub-system in the shifted place by the function modification execution mechanism 10653. At the stage that the functions have copies wholely in the shifted place, a cancel command is sent, and shifting finishes.

Next, an example of an application of the present invention will be discussed. First, Fig. 13 shows one embodiment where the present invention is applied to a roller system.

The operating state of a roller system 200, which is the object of control, is detected through a sensor system 203 as the state amount S200, and is input to a self-organizing mechanism 101 which may correspond to that described with reference to Fig. 1. In the self-organizing mechanism 101, the input state amount S200 is converted to a characteristic amount S201 by the feature extraction mechanism 103 and the knowledge of features in FK database 107. That characteristic amount S201 is input to an evaluation mechanism 205, which determines if the problem recognition mechanism 104 and a self-organizing design mechanism 209 (the self-organizing design mechanism 209 is an element of the strategy determination mechanism 106 shown in Fig. 1) should be activated by means of knowledge for evaluation from EK database 206. When activation occurs, a characteristic amount evaluation result S202 that is the total of the characteristic amount S201 and the evaluation result of the evaluation mechanism 205 are ouput to the problem recognition mechanism 104. The problem recognition mechanism 104 identifies the kind of problem that has occured by means of a knowledge base 208 that contains knowledge showing the causal relationships of a problem of the roller and the characteristic amount evaluation result S202, and ouputs the appropriate type of problem S203 to a self-organizing design mechanism 209. The self-organizing design mechanism 209 determines a design result S206 that is a specific control operation executed by a control device 202. A command S204 from the control device 202 and the state amount S200 causes an object model S205 to be produced in a model production mechanism 210 by using the characteristic amount S201 and a knowledge base 211 for modifying the control method, function, or structure according to the the type of problem S203.

Moreover, the correctness of the design result S206 is determined by a simulator 212, which combines a characteristic of the control device 202 to the model S205 produced by mechanism 210, and a re-design is executed when the design result S206 does not satisfy the desired conditions. The self-organizing design mechanism 209 is activated by an operator by means of an input/output device 213, and reflects to the design result S206 ouput to the control device 202 by inputting the information needed.

The control device 202 produces a command S204 by means of the state amount S200 of the rolling system 200 based on a design result S2065, and ouputs it to an actuator system 214. The actuator system 214 receives the command 204, and activates the roller system by command S200.

Fig. 14 shows the detailed organization of the feature extraction mechanism 103. The state amount of the roller system 200 received from the sensor system203 is input to a feature extraction control mechanism 2041 of the feature extraction mechanism 103. The feature extraction control mechanism 2041 has a fonction which controls the state amount S200, and a signal flow that is equal to one of several kinds of characteristic amount from one of feature extraction mechanisms 2042 to 2048 that will be explained below. A frequency analysis mechanism 2042 outputs a characteristic amount after executing frequency analysis of high speed Fourier transformation etc. by using information received from the feature extraction control mechanism 2041. A decision tree mechanism 2043 outputs a feature by means of the knowledge of features in FK database 107 for determining the characteristic amount. A correlation function mechanism 2045 outputs the characteristic amount after finding a correlation function between a wave form stored in advance and the characteristic amount S200. A Rumelhart type neuron computer extracts the amount of the feature, treating this as a characteristic amount because it has extracted the degree of similarity to a wave form studied in advance, and extracts the characteristic amount in a vector operation comparison mechanism 2047 for extracting a vector that is most similar to a vector spreading with the various characteristic amount S200 input as the characteristic amount in a vector space spread with the various characteristic amounts. A pattern matching mechanism 2048 extracts a similar pattern by means of pattern matching. Then, the characteristic amount S201 is ouput to the evaluation mechanism by the feature extraction control mechanism 2041.

Fig. 15 shows the processing operations of the evaluation mechanism 205. The evaluation mechanism 205 receives the characteristic amount S201 that is ouput from the feature extracting mechanism 103, and has an input interface mechanism 2051 for converting a signal level etc., a first 2052 to n-th 2053 evaluation element for evaluating based on each evaluation standard of a plurality of evaluation standards that exists based on the kind of problems, and ouputs the characteristic amount/evaluation result S202 added up an evaluation result of an evaluation element and the characteristic amount to the problem recognition mechanism 104 located next step by using a knowledge base 206 for storing data for evaluation.

Fig. 16 shows the processing operation of the n-th evaluation element 2053. There are several methods for evaluation such as a method for deciding if a value simply exceeds a certain level to a complicated method for utilizing knowledge processing. As an example, the n-th evaluation element 2053 shows an evaluation method based on fuzzy reasoning. Data is input from an input interface mechanism 2051 to a classification

mechanism 20531, and is output to a problem recognition mechanism 20532 via a classification mechanism 20531 (for classifying input signals and finding the degree of conviction by means of a membership function 2071 in a knowledge base 207 provided as a data for evaluation), a reasoning mechanism 20532 (for finding a conclusion by means of the degree of conviction and a rule base for reasoning 2071 described as "if ... then"), and a total evaluation mechanism 20533 generating conclusions corresponding to each rule (i.e. finding a centre of gravity for a reasoning triangle etc.).

Fig. 17 shows the processing operations of the reasoning mechanism 20532. The reasoning mechanism 20532 carries out one or more of: a step 20540 for deciding the kind of reasoning to be activated, a step 20541 for selecting a production rule, a step 20542 for selecting frame knowledge, a step 20543 for selecting script knowledge, a step 20544 for selecting forward or backward reasoning, and steps for executing forward reasoning 2055 or backward reasoning 2056 as selected at steps 20544.

Fig. 18 shows forward reasoning 2055. In forward reasoning 2055, there is a step 20511 stores an input to be reasoned (occurred condition, etc.) to a register, a step 20552 causing a pointer for the reasoning to be at the forefront of the rule, and a sub-routine 2053 of a forward reasoning loop.

Fig. 19 shows the processing of the forward reasoning loop 20553. That loop 20553 has a step 20556 for deciding if reasoning should be finished when a value of pointer has increased to a final value +1 or more, a step 205580 for setting a flag to indicate a failure when reasoning is finished, a step 20557 for extracting a front section of a rule indicated by the pointer when reasoning is not finished and deciding if the content of the register coincide, a step 20558 for causing the content of the pointer to increase by 1 when there is no such coincidence, a step 20559 for deciding if a rear section of the rule shows a conclusion if there is coincidence, a step 20570 for pushing the content of the register and making the content of register the rear section of the rule when there is no conclusion, a step 20571 for generating a flag to indicate a reasoning success and making a return value from a sub-routine to the rear section of the rule when there is a conclusion, a step 20573 for triggering a forward reasoning loop 20554 recurrently after the step 20570 and after that deciding if the flag during return succeeds, a step 20574 for popping the contents of the register from a stack and returning it to step 20570 in the case of a failure, and subsequently executing the step 20558 mentioned above.

The backward reasoning 20546 mentioned with reference to Fig. 17 will now be explained with reference to Fig. 20. Step 20561 and 20562, which are the same as in the forward reasoning 2055 are executed, and a sub-routine of a backward reasoning loop 20563 is triggered.

Fig. 21 shows the processing of the backward reasoning loop 20563. The backward reasoning loop 20563 contains virtually the same steps as in Fig. 19, and only the different parts will be discussed in detail. A step 20567 decides if a rear section of a rule indicated by a pointer coincides with the contents of a register, a step 20569 decides if the front section of the rule coincides to indicate a cause when the rear section coincides, a step 20581 causes a flag to indicate success when there is coincidence, a step 20580 pushes the content of the register to a stack and makes the content of the register correspond to the front section when no cause is identified, and a step executing a sub-routine of the backward reasoning loop 20563.

Fig. 22 shows the processing of the problem recognition mechanism 104 shown in Fig. 13. The problem recognition mechanism 104 carries out a step 2070 for making a reasoning object a knowledge base 208, and a backward reasoning mechanism 2071.

Fig. 23 shows the knowledge base 208 used in the problem recognition mechanism 104. For example, in rule number 1, if one component of direct current in a deviation is larger then the other component is set as a leading subject section, the subsequent subject section indicates that the steady-state deviation is large. In rule number 2, if the steady-state deviation is large, and a direct current component has a constant value, the subsequent subject section sets the order of a control system and a command system so that they differ by one order. In rule number 3, if the steady-state deviation is large, and the direct current component increases in proportion to time in the leading subject section, the order number of the control system and the command system differs by two orders.

Fig. 24 shows the processing operating of the self-organizing design mechanism 209 in Fig. 13. The self-organizing design mechanism 209 carries out a step 2091 for deciding the type of the problem based on a conclusion part of the problem recognition mechanism 104, and a control device modification processing step 2095 for activating one of: a reasoning mechanism 2092 for a construction modification when the type of problem is a construction modification, a reasoning mechanism 2093 for a function modification when the type of problem is a function modification, and a reasoning mechanism 2094 for a control plan modification when the type of problem is a control plan modification.

Fig. 25 shows an example of knowledge for a control plan modification 2111 in the knowledge base 211 used for the reasoning processing of the control method modification in Fig. 24.

Where the order number of the control system and the command system in the leading subject section of rule number 1 of the knowledge 2111 differs by one order, the subsequent subject section is arranged to indicate

an integral type control system. When the leading subject section of rule number 2 indicates an integral type control system and also a conventional control line is PID, the subsequent subject section indicates that an integrator is added. When the leading subject section of rule number 3 indicates an integral type control system and also a conventional control system is the optimum control system, the subsequent subject section is arranged as an optimum servo system.

Fig. 26 shows an example of knowledge for function modification 2112 of a knowledge base 211 for a function modification.

For instance, when the problem eccentricity of the roller, knowledge that makes a plate thickness deviation an input has a feedback system composed of an eccentricity detection mechanism, a sinusoidal wave generation mechanism and a gain mechanism, and issues the input to a roller gap command is shown as an addition/cancel function of the subsequent subject section.

The knowledge 211 used in the reasoning processing 2092 for a construction modification contains knowledge 2113 for a construction modification corresponding to the knowledge 2111 for control plan modification and the knowledge 2112 for the function modification explained with reference to Fig. 25 and Fig. 26.

Fig. 27 shows a block diagram of a plate thickness control system for one stand of the roller system. A depression position command $S_p$ is input to the roller system 200. The depression position command $S_p$ is received by the roller system 200, and is changed and appears as a rolling load p based on the physical phenomenon of the rolling load formula. Then, a disturbance is added to the load p, is multiplied by 1/K ($\Delta p$) in an elastic module block 221, and corresponds to the plate thickness. That product is passed to a plate thickness detector through a block 222 of a dead time L. Because the plate thickness deviation $\Delta h$ includes a dead time L, $\Delta p'$ of a load meter is detected as a feedback output. However, the steady-state deviation, which cannot be measured as a load, is added by a gauge meter AGC block 223 to return it to the roller gap command and is not corrected after time L, the plate thickness deviation $\Delta h$ is sent to the roller gap command as feedback through a monitor control 224.

When the control system is constructed as described above, the plate thickness deviation $\Delta h$ occurs a time L after a matrix disturbance is input as shown in Fig. 28. However, when a rolling interval command equivalent to a depression command is input as shown in Fig. 28(b), the plate thickness is changed, and a steady-state deviation $\Delta h$ from an ideal plate thickness results.

The flow of the processing operations in this embodiment will now be explained with these states as an example, referring to Fig. 29.

When the type of a system including a control device is a zero order system for the operating condition of the roller system 200, a consideration during design is regulation, and the operating condition at this time is from a servo line. The actual plate thickness can be determined by a plate thickness sensor 203, and the characteristic amount can be determined by finding the plate thickness deviation from a desired value of the plate thickness and the actual plate thickness and executing a high speed Fourier transform in the feature extraction mechanism 204. In this case, the direct current part is large because a steady-state deviation has occurred. By using the result of Fig. 29, as shown in Fig. 30, a conclusion is generated in a knowledge base 206 as the characteristic amount in the evaluation mechanism 205 in that a problem solution is necessary when the amplitude *w* of the direct current portion of the plate thickness deviation is larger than $S_O$. Then, the problem recognition mechanism 104 is activated. In the knowledge base 208, the characteristic amount coincides with the fact that direct current component of the deviation is large in the leading subject section, the above-mentioned processing in Fig. 19 is executed because the steady-state deviation is large in the subsequent subject section, and the conclusion is provided that the order number differs by one order in the subsequent subject section by coincidence with the fact that the steady-state deviation is large and the direct current component has a constant value in the leading subject section. Then the self-organizing design mechanism 209 operates, and the conclusion generated is that an integrator should be added through the rule number 1 and 2, and the integrator is mounted just before the block 220 in Fig. 27.

Fig. 31 shows an equivalent block diagram when roller deflection occurs. The roller deviation has an amplitude $S_r$ and a period *wt* are added in parallel to a disturbance. When the matrix plate thickness deviation changes stepwise, the load deviation $\Delta p$ changes with the same phase as the matrix plate thickness deviation, and as the result, the change in the plate thickness deviation $\Delta h'$ under the roller is shown in Fig. 32.

When a roller deviation occurs, the matrix plate thickness deviation is flat, and the roller rises upward, the load deviation decreases because of a decrease in the load applied to the plate. The Plate thickness deviation increases because of a position of the roller rising upward for the plate thickness, and the load deviation and a plate thickness deviation $\Delta h'$ under the roller differs by 180 degrees. Therefore, when the load in a gauge meter AGC decreases as shown in Fig. 31, it is evident that the plate thickness deviation has decreased and a deviation of a loop of the gauge meter AGC 223 has decreased, and a command changes small. As the result, the gauge meter ASGC is controlled so as to increase the deviation according to the increase of the plate thickness deviation, and this is undesirable.

As the result, the roller 200 moves as shown in Fig. 33, and the frequency $w_R$ is a characteristic amount output by the feature extraction mechanism 205, as shown in Fig. 29.

The characteristic amount is extracted, and is input to the evaluation mechanism 205 as shown in Fig. 34. Then the evaluation mechanism operates in the same manner as was described with reference to Fig. 30. Moreover, the problem recognition mechanism 104 derives the conclusion that the roller angular velocity coincides with the plate thickness angular velocity and the amplitude of the characteristic amount is large in the leading subiect section, and roller eccentricity control is necessary, by referring to a knowledge base 208. The self-organizing design mechanism 209 makes a plate thickness deviation $\Delta h$ an output as shown in Fig. 35 by using knowledge 2112 in Fig. 26, and adds a roller deviation control section for applying a frequency, phase and amplitude signal to the roller gap command via an eccentricity detection mechanism 226 detecting the deviation. That signal is received by a mechanism 227 for generating a sinusoidal wave by using an output of the detection mechanism 226, and a gain signal generator 228.

Another embodiment of the present invention will now be described. Fig. 36 shows an embodiment in which the present invention is applied to the operation management of a sewage disposal process 300. The total construction of this embodiment will now be explained, referring to Fig. 36.

The state of the sewage disposal system 300 is measured by a sensor system 303, and the state amount 303S is input to a self-organizing mechanism 301. As can be seen, the state amount 303S is input to a control device 302 and to an object model production mechanism 310. The object model production mechanism 310 receives the state amount 303S and a command 302S is output from the control device 302, and produces automatically an arithmetic model of an object process. The state amount 303S is also input to a feature extraction mechanism 304 in the self-organizing mechanism 301. The feature extraction mechanism 304 receives the state amount 303S, and also extracts a feature of an operating state of the process utilizing a knowledge base for feature extraction 304K, and outputs the characteristic amount 304S. A problem recognition mechanism 305 receives the characteristic amount 304S, and also outputs a recognition result 305S by utilizing knowledge from a problem recognition knowledge base 305K. A cause identification mechanism 307 receives the recognition result 305S, and also outputs a cause 307S by utilizing knowledge from a cause identification 307K. Strategy determination mechanism 309 receives the cause 307S, and outputs a strategy 309S by utilizing a strategy determination knowledge base 309K. The strategy determination mechanism 309 receives a model from an object model production mechanism 310, sends it to a simulator 312 and exceeds simulation, and also supports strategy determination by communication with an operator from a communication means 313. The communication means 313 is also used for a communication with the operator, and is used in the feature extraction mechanism 304, the problem recognition mechanism 305, and the cause identification mechanism 307 that were also explained above.

The control device 302 receives the strategy 309S and outputs the command 302S for control of the sewage disposal process 300. An actuator system 314 is a specific operation terminal for controlling the sewage disposal process 300.

Next, the detailed constitution and operation of this embodiment will be explained.

First, the flow of the sewage disposal process is explained. Waste flows into a first precipitation pond 3005 from an inflow pipe 3020 through a precipitation pond for sand (not shown). Miscellaneous things in the waste and a part of the floating material are removed by gravity precipitation in the first precipitation pond 3005. The waste that overflows the first precipitation pond 3005 and returned sludge from a return sludge pipe 3040 flows into an aeration tank 3010. Aerated oxygen is supplied from a blower 3050 by a diffuser 3065, and also the waste and the return sludge are agitated to mixture in the aeration tank 3010. In that tank 3010, active sludge that is returned as return sludge absorbs hydrogen in the supplied air, acts on soluble organic matter in the waste by aerobic metabolism, and converts to carbon dioxide and water. A part of the removed organic matter provides energy for active sludge. The waste from which the organic matter has been removed by active sludge is led to a final precipitation pond 3015. In the final precipitation pond 3015, the waste is separated by solid-liquid separation using active sludge and treated waste is discharged through a treated water drainage pipe 3030. Active sludge precipitated in the final precipitation pond 3015 is drawn from a sludge draw pipe 3035, and a part is discharged by a surplus sludge pump 3060. The remaining active sludge that has not been discharged is returned to the aeration tank 3010 as return sludge through a return sludge pipe 3040 via a return sludge pump 3055.

Next, the sensor system 303 will be explained. A measuring instrument 3070 is installed in the drainage inflow pipe 3020 for measuring the quality of the inflowing waste. Here, the amount of inflow waste, the density of floating materials, the required amount of oxygen, pH, nitrogen density, ammonia density, nitric acid type nitrogen density, nitrous acid type nitrogen density, phosphorous density, normal hexane extract density, and cyano-compound density etc are measured. There is also a measuring instrument 3075 in the first precipitation

pond 3005, and the boundary between the precipitated sludge and liquid i.e. the sludge interface height is measured as are the quantities measured by the measuring instrument 3070.

There is a measuring instrument 3080 and an image information measuring device 3085 such as a submerged camera etc. in the aeration tank 3010. The measuring instrument 3080 measures the dissolved oxygen density etc. in addition to the quantities measured by the measuring instrument 3070. The image information measuring device 3085 measures distribution and a colour of active sludge in the aeration tank 3010, size of an agglutination type microorganism (floc) of the active sludge, and the shapes and the amount of filamentous type microorganisms and protozoa.

There is a measuring instrument 3090 and an image information measuring device 3095 in the final precipitation pond 3015. The measuring instrument 3090, measures the sludge interface height etc. in addition to the quantities measured by the measuring instrument 3070. The image information measuring device 3095 measures existence of a hydrophobic microorganism film (scam) on the surface of the water in the final precipitation pond 3015 in addition to the quantities measured by the image information measuring device 3085. A measuring instrument 3100 is installed in the treated water discharge pipe 3030, and the quantities measured by the measuring instrument for the treated water are measured. The measured amounts from the sensor system 303, in online measuring, correspond to the state amount 303S.

The following steps (1) to (3) are executed interactively with an operation using a communication means, e. g. a CRT (VDU ) and a keyboard.

(1) Manual analysis data that cannot be measured on-line.

(2) Data that cannot be measured by the image information measuring instruments (can be measured only by observation through the five senses of an operator).

(3) Data that are recognised by a support system to be necessary.

This communication means 313, as occasion demands, serves as a monitor indicating pictures from the image information measuring systems 3085 and 3095. The communication means 313 may also be used when changing a control set point and the amount of operation are executed by a suitable communication from the operator.

Next, the operation of the self-organizing mechanism 301 of this embodiment (details are explained later) will be explained with reference to Fig. 36.

A database 3240 preserves all data of the state amount 303S after imposing a structure on the data, input data from the communication means 313 and an execution result (explained below), as occasion demands, are preserved in a database 3240.

The characteristic amount extraction mechanism 304 receives a signal corresponding to the characteristic amount 301S. The characteristic amount extraction mechanism 304 utilizes knowledge needed for extracting a feature from inside a knowledge base 304K for feature extraction. When it is difficult to extract the feature with only knowledge from the knowledge base 304K, a data input request is transmitted to the operator through the communication means 313, and an input from the operator is received from the communication means 313. The characteristic amount extraction mechanism 304 extracts the characteristic amount 304S of a process operating condition based on these numerical value data (the state amount 301S) and appropriate knowledge (knowledge from the knowledge base for feature extraction 304K and knowledge input by the operator etc.). An extraction result is indicated in the communication means 313, and also the characteristic amount 304S is sent to a problem recognition mechanism 305.

The problem recognition mechanism 305 receives the characteristic amount, and is determines if a problem exists in the operating condition. Therefore, knowledge needed for problem recognition is used from inside the knowledge base 305K. When it is difficult to recognize the problem by using only knowledge from the knowledge base 305K, a data input request is transmitted to the operator trough the communication means 313, and the input from the operator via the communication means 313 is received. The history of a past state amount 303S is compared to assist in recognizing the problem. Thus, with reference to a database 3240 and to the characterstic amount 301S it is determined if the change pattern has occurred previously. If the change pattern has occurred previously, it is decided if a feature of the operation is equal to "abnormal". When it is recognized as "abnormal", a type of the problem of "abnormal" is converted to a mark or a numerical value, and is output as a recognition result 305S.

The cause identification mechanism 307 receives the recognition result 305S and identifies a cause of the problem. Knowledge needed for identifying the cause is utilized from the knowledge nase 307K. When it is difficult to recognize the problem with knowledge from only the knowledge base 307K, a data input request is transmitted to the operator through the communication means 313, and an input from the operator via the communication means 313 is received. The cause identification mechanism 307 identifies a cause of abnormality based on these results, and a signal indicating the cause 307S is output. Further, when required, operator guidance is indicated to the operator via the communication means 313.

The strategy determination mechanism 309 receives the signal indicating the cause 307S, and (1) determines the strategy for controlling the process (or a control method) and outputs a signal to the control device 302, or (2) determines the strategy corresponding to a system structure change. Knowledge needed for determining these strategies is utilized from the knowledge base 309K. When it is difficult to determine the strategy using only the knowledge from the knowledge base 309K, data input from the operator is requested through the communication means 313, and the input from the operator is received via the communication means 313.

In operation (1) above, the signal of the cause 307S output from the cause identification mechanism 307 is received, and the strategy and a control method to be executed are determined. The strategy is flexibly determined in response to expansion and modification of the process. For example, methods such as floating matter density control (MLSS control), dissolved oxygen density control (DO control), sludge daily control (SRT control), total control of the amount of sludge, sludge swelling (bulking) depression control, nitration control, DO distribution control, or organic matter load control etc. may be selected. A simulator is utlized to select the appropriate method(s) by using a model provided in an object model production mechanism 310.

In operation (2) above, a control strategy determination is executed to correspond to consolidation and expansion of a sub-system.

The object model production mechanism 310 automatically produces an object model and a control model by a method using a neutral network according to the state amount 303S and the command 302S. A simulator 312 simulates the model produced by the object model production mechanism 310 or a well-known physical model.

The control device 302 receives a signal from the strategy determination mechanism 309, outputs the command 302S to the actuator system 314, and controls the sewage disposal system.

Next, the detailed operation of each mechanism will be explained below with reference to Fig. 37.

In Fig. 37, a solid line shows the flow of the execution sequence, and a dotted line shows the flow of data.

When the characteristic amount extraction mechanism 304 is activated, an input data setting process 3122 is executed first. In this process 3122, the types of data and the input mode for each type of data to be input to the characteristic amount extraction mechanism 304 are selected. The input mode indicates three input methods such as (1) inputting daily mean value off-line, (2) inputting original data at a certain time off-line, (3) reading data at a constant time interval. These steps are executed again when a modification occurs.

A numerical data input step 3123 reads numerical data from a data set in an input data setting step 3122 corresponding to each input mode from a database 3240, or such data is input from the communication means 313.

In non-numerical data input step 3124, non-numerical data provided by observation of the process by the operator is input from the communication means 313. For example, when the image measuring device 3085 and 3095 etc. are not provided, data such as property and state of sludge, kinds of filamentous microorganisms and protozoa etc. are read.

In a data evaluation step 3125, the value of data that has been input in the non-numerical value input step 3124 is evaluated. This evaluation is executed by comparing the data with a data evaluation reference value stored in the knowledge base (for feature extraction) 304K. This process will be explained with reference to Fig. 38. First, a data item corresponding to a regulated value is evaluated to determine if it is an "emergency" value in an emergency detection step 3126. In this embodiment, a reference value set e.g. by a relevant Sewage Water Law is applied for discharge water. When the regulated value does not correspond to an "emergency", the data is evaluated to determine if it is an "abnormal" value in an abnormality detection step 3127. A reference value based on the experience of the operator is used for this evaluation. When the regulated value does not correspond to an "abnormal" value, the data is evaluated to determine if it requires "caution" in a caution detection process 3128. A reference value found probably/statistically from past historical data is used for this evaluation. In this step, when the data is not regarded as needing "caution", it is considered to be normal. The result of the data evaluation is indicated by the communication means 313 as a guidance to the operator. The reference value (shown as $S_v$) used in the abnormality detection step 3127 and the caution detection process 3128 is multiplied by a fluctuation correction value (a value corresponding to the pattern of a typical annual fluctuation $R_y$ and a daily fluctuation $R_d$ for each data item and indicated by a fluctuation ratio) stored in a knowledge base 304K for the feature extraction. The decision for a data value D at h-hour on d-th of m-month is executed according to that if a formula (1) is satisfied.

$$D \geqq R_y(m, d) \cdot Rd(h) \cdot S_v \quad (1)$$

By providing these three extraction steps, careful data decision becomes practicable. Further, a different knowledge source can be utilized without depending on experience of the operator.

The respective measuring instruments in the sewage disposal process cannot maintain their accuracy if not performed frequently. Therefore, some of the on-line data measured by measuring instruments 3070, 3075, 3080, and 3090 etc. shown in Fig. 36 as being "emergency" or "abnormal" value by the data evaluation process

3125 are "emergency" or "abnormal" because of defect/failure of a measuring instrument for the data. The characteristic feature extraction mechanism 304 should not use data when there is a defect/failure of the measuring instrument. Therefore the measuring instrument check process 3125 identifies these defect/failures of the measuring instrument by the same consideration process as the operator. This process will now be explained with reference to Fig. 39. First, a deviation comparison process 3126 checks if the data has deviated from the normal mean value. When the deviation of the data is clearly so large that it could not occur as a phenomenon in the process, this is considered as a defect/failure of the measuring instruments. A fluctuation intensity comparison process 3127 checks the state of data fluctuation to detect an unusual fluctuation corresponding to a defect/failure of the measuring instruments, by looking for a fluctuation which is extremely excessive. These fluctuations are evaluated by a decision value $V_t$ of a fluctuation coefficient (=standard deviation/mean value). In this process, the observed value of a fluctuation coefficient $V_d$ is found by a plurality of data measured from the present time to a later fixed time, and this is compared with the above-mentioned value $V_t$. When the formula(s) (2) is satisfied, it is decided that there is a defect/failure of the measuring instruments.

$$V_d = 0.0 \text{ or } V_d \geqq \alpha \quad (2)$$

The value α differs for each measuring instrument, for example, it is about 0.1 for a MLSS meter. In a fluctuation speed comparison process 3128, a change velocity of data is found, and is checked to see it is a fluctuation velocity v* specifically corresponding to a defect/failure of the measuring instruments. The fluctuation velocity v is defined by formula (3) below by using a deviation d from rising to peak of a data and a change time Δt as shown in Fig. 41.

$$v = d / \Delta t \quad (3)$$

$$v \geqq v^* \quad (4)$$

When formula (4) is satisfied, there is a defect or failure of one of the measuring instruments. When data is abnormal a concurrent phenomenon confirmation process 3129, checks if data that indicates always and habitually at the same time an abnormal value (concurrent phenomenon) indicates abnormal. For example, when the pH of the aeration tank 3010 decreased by nitration, the PH of the final precipitation pond 3015 always decreases. Therefore, if the pH of the aeration tank 3010 indicates an abnormally low value, this may not correspond to an abnormal value due to a defect/failure of the pH meter in the aeration tank 3010 when pH of the final precipitation pond 3015 indicates a low value at the same time.

Steps 3126, 3127 and 3128 are executed in sequence, and an indication of a result is sent to the operator through the communication means 313. If a defect/failure of a measuring instrument is confirmed in a step, subsequent steps are omitted. Knowledge for each step is preserved in the knowledge base 304K A procedure for each process of measuring instrument check steps 3125 is arranged taking the operator into account, and with reference to the knowledge preserved in the knowledge base 304K when required. Therefore, the failure extraction capacity is the same as would be carried out by the operator, and the execution is easy for the operator to understand.

Next, a qualitative step 3145 shown in Fig. 37 will be explained. Numerical value data is converted to qualitative data by using a membership function derived from fuzzy logic theory (for details, refer to text such as Mathematics Library 48: "Fuzzy set and its Application"; Nishida and Takeda (1978) published by Morikita Syuppan etc.), and are sent to a forward reasoning process 3155. An example of a memnership function is shown in Fig. 42; when MLSS is 2000 (mg/ *l*), it is converted to qualitative data being "MLSS is high by degree of 0.8". In the membership function, "usual" and "low" are defined, and are preserved in the knowledge base 304K.

Converting numerical value data to qualitative data in this way is to cause the data to correspond not to a numerical value itself but to a decision of qualitative degree, in that the data value is "higher than usual" or "same as usual", when the operator determines the situation.

The final step of the characteristic feature extraction mechanism 304 is the forward reasoning process 3155, and this combines two reasoning mechanisms. In the first reasoning mechanism, reasoning for finding all phenomena (conclusion) newly derived from input data is executed. A second reasoning mechanism extracts a feature of the process by using both input data and the phenomenon derived by the first reasoning mechanism. By dividing the reasoning mechanisms in this way, the reasoning operations change intelligibly for the operator. Also, the rule used by each reasoning mechanism is clearly limited. Therefore, the efficiency of the reasoning is increased.

A well-known technique (refer to "Artificial Intelligence", by P.H. Winston, Addison Wesley (1977) etc. for details) is used as the algorithm for forward reasoning. Forward reasoning extracts a feature of the operation of the current step, based on data provided from a non-numerical value data input process 3124 and a qualitative step 3145. Rules used in the reasoning step are of if-then form, or of other form (e.g. Frame form), which forms preserved in the knowledge base for 304K, and the form is converted during execution. The above description illustrates the operation of the characteristic amount extraction mechanism 304. The result of the

characteristic amount extraction by the mechanism 304 is sent to the problem recognition mechanism 305, and is returned to the numerical value input 3123 when required.

The problem recognition mechanism 305 receives the characteristic amount 304S and two processes are executed. In the first process, a value of the characteristic amount 304S and a predetermined value are compared, and it is decided if a problem exists from consideration of the deviation as positive/negative (or large/small). At this time, the problem is determined and recognized by means of knowledge in the knowledge base 305K, and is output as the recognition result 305S.

In the second process, the history of previous characteristic amounts 305S is compared for recognition of the problem. This step is shown in Fig. 43. First, in a history comparison step 3325, it is decided if the combination of the value of each data item at a certain time, as shown in Fig. 44(a), or the trend of variation of a particular data item, as shown in Fig. 44(b), (both being called a data pattern) has occurred previously. A decision section 3326 decides when a data pattern at a particular time (time is $T_n$) is similar to a data pattern at an earlier time (time is $T_o$), referring to operating conditions before and after time $T_o$ and indicates a guidance in a next history reference step 3330. The operation history before and after time $T_o$ produces effective information to forecast the transition of an operating condition. The history comparison step 3325 uses study of history data, and application of a neural network (details will be explained later). Since the neural network can detect a studied pattern (previous data pattern) and a similar pattern, it can decide if the input data pattern has occurred previously. The history data not treated by a rule is effectively utilized by the second processing. When a feature of the operation is recognized as "abnormal" the type of a problem corresponding to this "abnormal" result is converted to a mark or a numerical value and is output as the recognition result 305S. When an abnormality is recognized in the recognition result of a process operating condition, the cause identification mechanism 307 is activated.

The operation of the cause identification mechanism 307 is illustrated in Fig. 45. When the cause identification mechanism 307 is activated, a backward reasoning step 3162 is executed first. In this step, the characteristic amount extraction mechanism 304 identifies a possible cause of the problem, such as filamentous bulking, scum occurrence, decomposition of sludge, and nitration etc., with backward reasoning in high priority order (the membership value is large), and it is determined which cause is most probable. The algorithm used in the backward reasoning is well-known in the art, as is forward reasoning. The rule used in the backward reasoning is preserved in the knowledge base 307K, which is referred to as occasion demands. Other data may be stored in a database 3240, and read from there when needed. When suitable data is not found in the database 3240, the operator is requested to input that data via the communication means 313. The result of the backward reasoning step 3162 is sent to a deciding section 3163, and if no cause can be identified as truly probable, by that section 2136, the cause identification operation finishes. If there is a probable cause, a detailed data collection step 3164 is executed. In that step 3164, detailed data of the probable cause is collected. Next, a cause determination reasoning step 3165 is executed. In this step 3165, by the backward reasoning, a cause creating the existing operating conditions at this time is used. This gives the advantage that the reasoning and the rule to be used is provided by separating the backward reasoning step 3162 and a cause determination reasoning step 3165.

The reasoning result guides the operator via the communication means 313. Any rule used is preserved in the knowledge base 307K.

The final step in the cause identification mechanism 307 is an explanation mechanism 3166. In this step; (1) a cause creating current operating conditions, (2) a corresponding plan for the current operating conditions, and (3) the basis leading to the operating condition, are indicated in the communication means 313 in response to a request from the operator by e.g. menu. The corresponding plan set at (2) is sent to the control device 302 through the strategy determination mechanism 309, is converted to the command 302S, and changes the operating conditions of the actuator system 314.

Further, all execution results and data of the cause identification mechanism 307 are preserved in the database 3240 when required, and are utilized with the operating history. By dividing the reasoning step into respective purposes, such as the flow, in this mechanism, the processing procedure and required knowledge became understandable for a system planner and the operator.

Before explaining the strategy determination mechanism 309, the organization and operation of the object model production mechanism 310 will now be explained in detail.

The input to the object model production mechanism 310 is the state amount 303S and the command 302S, and the output is the model 301S of an object process. In the object model production mechanism 310, an object model is produced automatically by using the state amount 303S, the command 302S, and the neural network (nerves circuit network). The characteristic amount 304S is a physical amount extracted from the state amount 303S, and is substantially equal to the characteristic amount 303S. Therefore, the characteristic amount 304S is treated as included in the state amount 303S, and further explanation is omitted. A feature of the neural network is that it can determine strategy coinciding with an object by selecting the state amount 303S and the command 302S according to the control object. Setting of the state amount 303S and the command 302S are executed in the strategy setting mechanism 309. In this embodiment, the state amount 303 is the amount measured by the measuring instruments 3075, 3080, 3085, 3090 and 3095.

A method of automatic production of the object model will now be explained with reference to Fig. 46. The structure shown in Fig. 46 is a neural network (nerves circuit network). First, the symbols in Fig. 46 will be explained. In Fig. 46, "O" is a neuron element model 3701, and a solid line connecting one "O" and another "O" shows information exchange between neuron element models. The neural network has an input layer 3710, a middle layer 3720, and an output layer 3730. Each layer has of a finite number of neuron element models, and there is coupling between each adjoining neuron element model. However the middle layer may alternatively be a plurality of layers; a single middle layer is shown to simplify the explanation of this embodiment.

The state amount 303S is input to the input layer 3710, and the command 302S is selected for the output layer 3730. A control variable (command 302S) is given to the output layer 3070 for an object. A factor (the state amount 303S) influencing the control is set for the input layer 3710.

A value of the state amount 303S is assumed as $Y_i$. A function for a variable value $Y_i$ at a time $t_i$ is considered to be pattern 1 and is shown as $P_1$ $(Y_1(t_1), Y_2(t_1), \cdots Y_n(t_1))$. This is abbreviated to $P_1(t_1)$. Each pattern $P_1(t_1)$, $P_2(t_2)$, $\cdots$ at different times are studied by the neural network. These patterns are stored in a database 3240. The patterns $P_i(t_i)$ are input from a database 3240 to each neuron element model of the input layer 3710. it is desirable to set these values so that their minimum value is 0 or more and their maximum value is 1 or less. The command 302S is set for each neuron element model of the output layer 3730.

The basic calculation of the neuron element model 3701 is explained with reference to Fig. 47. Here, the values of n items of the state amount are considered as $Y_1$ to $Y_n$. First the method of setting $Y_1$ to $Y_n$ will be explained. $Y_1$ through $Y_n$ are values of the state amount at a particular time in the past, and this time is selected by the operator, or is selected automatically. The operator selects a pattern of the state amount considered to reflect in the subsequent operation later and a pattern at an accident which it may be necessary to refer to in the future. Because the neural network operates on its own, this selection is important. Entrusting selection to the operator relies on the operator's experimental and synthetic data decision ability. In this case, a pattern learned is a pattern at a different time, and a plurality of patterns are learned repeatedly. Thus, the neural network has a network model corresponding to the operator's mental model of the object system.

Communication with the operator is executed through the communication means 313.

On the other hand, when this effect is achieved automatically, statistical analysis of the state amount 303S is necessary in advance. The highest frequency is found by a statistical analysis and this is regarded as a stationary time. The lowest frequency is regarded as an abnormal time.

The basic calculating method in the neural network will now be explained. First, each of set values $Y_1$ to $Y_n$ is multiplied by a significance coefficient $W_{ji}$, the products are added (procuct summation calculation) according to formula (5).

$$Z_j(2) = \sum_{i=1}^{n} W_{ji}(2-1) \cdot Y_i(1) \qquad \cdots (5)$$

$Y_i(1)$ is the value of an input layer (first layer), $W_{ji}(2\text{-}1)$ is a significance coefficient for a i-th variable value of the input layer (first layer) to a j-th neuron element model of the middle layer (second layer), and $Z_j(2)$ is an input summation to the j-th neuron element model of the middle layer (second layer).

In a neuron element model 3701, an output value is calculated from formula (6) according to the size of $Z_j(2)$.

$$Y_j(2) = 1 / (1 - e^{-Zj(2)}) \qquad (6)$$

The result of formula (6) is shown in Fig. 48. The calculated value $Y_j(2)$ is sent to the output layer, and the calculation is executed in the output layer.

Next, an outline of the calculation method of the neural network will be explained. The value $Y_i(1)$ is input to the input layer in Fig. 46, and the signal (value) is output to the neuron element model of the middle layer. The neuron element model of the middle layer calculates the multiplication-addition $Z_j(2)$ of these output value $Y_i(1)$ and the significance coefficient $W_{ji}(2\text{-}1)$ is calculated by formula (5), and the output value $Y_j(2)$ to the output layer is determined. By the same method, a multiplication-addition $Z_j(3)$ between a significance coefficient $W_{ji}(3\text{-}2)$ of the middle layer (second layer) and of the output layer (third layer) are calculated by formula (7) for the output value $Y_j(2)$ to the middle layer.

$$Z_j(3) = \sum_{i=1}^{n} W_{ji}(3-2) \cdot Y_i(2) \quad \cdots (7)$$

Here, $Y_i(2)$ is the value of the middle layer (second layer), $W_{ji}(3-2)$ is a significance coefficient from a i-th variable of the middle layer (second layer) to a j-th neuron element model of the output layer (third layer), and $Z_j(3)$ is the input sum total value of addition to the j-th neuron element model of a middle layer (second layer).

An output value $Y_j(3)$ to the output layer 3730 is calculated by formula (8) according to the size of $Z_j(3)$.

$$Y_j(3) = 1 / (1 - e^{-Zj(3)}) \quad (8)$$

By this method, the calculation value $Y_j(3)$ is found.

To enable the neural network to learn, a comparison layer 3740 and a teaching signal layer 3750 are provided after the output layer 3730. Then, a signal 3730S from the output layer 3730 and a teaching 3750S from the teaching signal layer 3750 are applied to the comparison layer 3740, and the output signal 3730S and the teaching signal 3750S are compared. The size of the significance coefficient $W_{ji}(3-2)$ and $W_{ji}(2-1)$ are corrected to make the deviation small. When the calculation of formulae (5) to (8) and the comparison with a teaching signal are executed using this corrected value, a deviation is found. The size of the significance coefficient $W_{ji}(3-2)$ and $W_{ji}(2-1)$ are again corrected according to the deviation. The significance coefficient is corrected repeatedly in this way, and this iteration continues until the deviation is sufficiently small. Since the significance coefficient is initially random (is a random number), the initial deviation is large, and the output signal value gradually approaches a teaching signal value. Therefore, the distribution of the significance coefficient $W_{ji}$ indicates how a command 302S value $Y_j$ of the output layer 3730 is determined from a value $Y_i$ of the state amount 303S in the input layer 3710.

Correction of deviation in this way is called an error reverse propagation method, and utilizes a well-known technique conceived by Runmelhart etc. For details, refer to "Parallel Distributed Processing", MIT Press, Vol. 1, (1986)).

Although this learning operation is itself wellknown, the present invention causes repeated learning, particularly for a plurality of patterns of the state amount 303S at different times, and is provided with a function equal to the past experience of the operator by executing this repeated learning. By this method, an object model (distribution of the significance coefficient of the neural network) is produced automatically equal to the past experience of the operator. Moreover, because the object model can be changed freely by the state amount 303S and the command 302S, learning is executed according to the control strategy, and a new model is automatically produced.

Next, the strategy determination mechanism 309 will be explained with reference to Fig. 49. Because the cause is identified in the leading part of the cause identification mechanism 307, it is necessary to have a measure corresponding to a probable cause. Therefore, this measure is primarly executed in the strategy determination mechanism 309. The strategy determination mechanism 309 is composed of five main menus as shown below.

(i) A control method determination function 320S
(ii) A referring/indicating function for concomitant knowledge 3210
(iii) A calculation function 3220
(iv) An operation history data referring/showing function 3230
(v) A structure change function

This construction is shown in Fig. 49, and will be explained below. When the strategy determination is executed, menus (ii) to (iv) are utilized for menu (i), the control method determination, or for executing menu (v), the structure change. Menus (i) to (v) are supported by interaction through the communication means 313 as occasion demands. The control method determination mechanism 3205 determines the control method by referring to the result of the simulator 312.

Arithmetic models used in the simulator 312 are as follows.

(1) A model produced automatically in the object model production mechanism 310.
(2) A model for incomings and outgoings of sludge material.
(3) A model for nitration.
(4) A model for microorganism reactions.
(5) A model for flow-down characteristic of treated waste.
(6) A model for sedimentation characteristics of waste.

These models are stored in the simulator 312, and addition to or correction of these models occurs as occasion demands. Well-known arithmetic formulas are used for models (2) to (6). Model (1), the automatically produced model, is the model for forecasting the control result for setting the set point for control, and for executing

control itself. Simulations are executed with arithmetic models for the processes in models (2) to (6). In model (1), there is a relationship between the state amount 303S and the command 302S, which has been learned by the model, which is thus a type of self-growing model, growing according to conditions. For example, it executes guidance of the quantitative operating management guide (one example is the control set point) according to the state amount of the process.

This control of the method of guidance will be explained below. The control method determination function 3205 identifies an item of the command 303S to be controlled based on the cause 307S identified in the cause identification mechanism 307. For this reason, a rule base in a knowledge base 309K is utlized. This rule base pre-selects an item of the command 302S corresponding to the cause. The state amount 303S corresponding to the cause and the item of the command 302S is identified. The state amount 303S and the command 302S are passed from a control method determination function 3205 to the object model production mechanism 310, and an object model is produced automatically based on the database 3240. The object model production mechanism 310 can produce automatically a suitable number of models for the state amount 303S of voluntary number and a suitable number of the command 302S. It is also free to select a suitable number of the state amount 303S, and also it is free to select the state amount 303S and the command 302S. Therefore, the system may operate flexibly to change to new conditions and add or delete a new state amount 303S.

Because the object model production mechanism 310 can automatically produce a model in this way, as it has learned the history of the state amount 303S and the command 302S, it can operate automatically to set a control set point and operating condition by means of the model. As explained in the above, past experiences have been added to the distribution of the values of the significance coefficient $W_{ij}$ in the neural network shown in Fig. 46. Then, the command value 302S is output to the output layer by inputting a value of $Y_i$ of the current state amount 303S to the input layer, and by means of a calculation with the significance coefficient $W_{ij}$ learned in advance. This calculation is called "remembrance" in this embodiment. By such rememberance, the command value 302S can be output to the control device 302.

Next, the functions menus (ii) to (iv) will be explained. The functions of menus (ii) to (iv) support the strategy determination. First, reference identification function 3210 is a function indicating in a suitable form when the operator requires various manuals and literature needed for operation management in the sewage disposal process. This function may have sub-menus such as (1) indicating detailed content of each data items, (2) indicating a detailed explanation, cause, and measure for each operating condition, and (3) indicating a manual for daily maintenance management. A database 3240 is utilized for this.

In menu (iii), a calculating function 3220 provides a function for various calculations needed for generating rules for the knowledge base 304K, 305K, 307K, and 309K in the self-organizing mechanism 301. The function has sub-functions such as (4) calculating data items from e.g. the sludge volume index (SVI), and the sludge residence time (SRT) etc., (5) calculating an annual change component $R_y$ used in a data evaluation step 3125, and (6) defining a membership function used in the qualititative step 3145.

In menu (iv) the operation history data referring/indicating function 3230 has (7) an operating history data reference indication for designated date and hour, (8) a graphic indication for the fluctuation tendency of data before and after the designated date and hour, and (9) a reference and indication of the date and time when the designated operating condition has occurred and each data at the time. The database 3240 is utilized for this.

Menu (v) has a structure change function with sub-functions corresponding to: (1) when a physical structure of the object system has changed, and (2) when the object system is divided into sub-systems or is generalized within other system. The control strategy is determined by utilizing the object model production mechanism 310 that is the same as menu (i) and by producing automatically a new model corresponding to the time when physical construction has been changed to correspond to sub-menu (1). When a sub-system division unity rule stored in the knowledge base 309K is activated, and division and unity of the sub-system corresponding to the cause 307S are executed, this corresponds to sub-menu (2). When the operation has finished, (i) the control method determination mechanism 3205 is activated, and the command 302S is output.

The detailed operation of this embodiment has been explained above. In this embodiment, a problem solution can be executed by feature extraction - problem recognition - cause identification - object model production - strategy determination, in a sewage disposal processing control. For this, the solution strategy can be provided automatically by producing automatically a model which corresponds to a new problem. Therefore, replacement of the control system is not required to enhance the system or to modify the method of operation of the system, and also the control system has a self-growth effect.

These effects of this invention are not limited to a sewage disposal system but may also be achieved in any operation involving monitoring and determination of process conditions.

Another embodiment of this invention will now be explained with reference to Fig. 50.

The system shown in Fig. 50 has a communication mechanism 410 and a plurality of sub-systems 411.

The system communicates with the outside through an input-output interface 412. Each sub-system is provided with a coordination mechanism 413 for coordinating with another sub-system and the outside, an application program 414 for carrying out a function of the sub-system, and a database 415. A problem recognition mechanism 416, a self-organizing design mechanism 417, and a self-organized execution mechanism 418 are also provided. In Fig. 50, the problem recognition mechanism 416 has a similar effect to the problem recognition mechanism 104 and the cause identification mechanism 105 in Fig. 1. Similarly, the coordination mechanism 413, plus the self-organising mechanism 417 and the self-organising execution mechanism 418 are similar to the strategy determination mechanism 106, but also carry out a similar function to the feature extraction mechanism 103.

The self-organized design mechanism 417 has a self-organizing method determining section 420, a problem solution plan generating section 421, a feasibility deciding section 422, a problem solution plan evaluating section 423, and a problem solution coordinating section 424 as shown in Fig. 51.

An example will now be explained in which there is a change in a database of a failure recovery sub-system, corresponding to a change of system configuration, when the system is used for monitoring an electric power system.

A monitoring control system of an electric power system has various functions such as system monitoring, operation, and record, and each function is executed by each sub-system 411. Failure recovery is one of these functions, and a recovery sequence is generated when there is a failure. Because the recovery sequence depends on the construction of the system, if the construction of the system changes, the sequence also changes. Therefore, this is used for generating the sequence for a common modification such as opening or shutting of a switch. In this embodiment, data corresponding to a permanent changes in configuration, such as addition of a power transmission wire is automatically changed by the self-organizing mechanism.

For example, assume that information that a power transmission wire A is added to the system is input through the input/output interface 412. The coordination mechanism 413 of the trouble recovery sub-system 411 receives this information through the communication means 410, and analyses this as corresponding to the addition of the power transmission wire. Then, the content of a database is changed by the self-organizing function.

Fig. 52 shows the sequence of the self-organizing process. This process will now be explained with reference to the drawing.

First, the problem recognition mechanism 416 decides if a problem has occurred (step 430). In this case, organisation of the system to indicate addition of the power transmission wire has not yet occurred, and "change of system configuration" is a kind of problem. Therefore, "addition of power transmission wire A" is set as the problem which is sent to the self-organized design mechanism 417.

The problem solution plan generating section 421 generates a method to solve the problem (step 431). At this time, the planned solution i.e. "change a database explaining the system configuration" is generated by utilizing knowledge i.e. "changing a database for explaining a system organization constitution corresponding to a change of a system configuration" provided by the problem solution plan generating section.

Next, a probability deciding section 422 decides if the planned solution is feasible (step 432). The coordination mechanism 413, examines if the self-organized execution mechanism 418 is provided with a modification means for the database, and the planned solution is feasible if it possesses such means.

If there is a feasible plan, the problem solution draft evaluating section 423 evaluates the planned solution (step 433), the problem solution coordinating section 424 coordinates with the planned solution of another sub-system (step 434), and a self-organizing method determining section 420 determines the final solution (step 435). At this time, because there is only one proposed solution and it is not related to other sub-systems, the method can be determined simply.

Next, the self-organizing execution mechanism 418 executes the solution (step 436). In this case, data corresponding to the system construction is identified in the database 415, a part of that data corresponding to the addition of the power electric wire is modified, and the result is stored in the database 415. Detailed information for the addition of the power transmission wire A, such as how it is connected, and to which bus cable in which sub-station, has been received by the coordination mechanism 413, and this detailed information is used when modifying the database. After modifying the database, a signal is sent to the coordination mechanism 413 indicating that the problem has been solved.

This embodiment has the advantage that, for a permanent configuration modification of the electric power system, (such as the addition of power transmission wire), it is sufficient to input only the information for the modification, and it is not necessary to correct the database correspondingly.

Next, an example in which this invention is applied to a monitoring control system for an electric power system and division of the system for a distributed control of frequency according to changes in condition in the system will be explained.

Frequency control of an electric power system regulates output of a generator to maintain a constant frequency, irrespective of changes in demand for power. For a large system, the system may be divided into parts, to permit a distributed control. For example, the method may be as shown in page 33 to 39 of "Large Scale System" edited by Tamura and issued by Shookoodoo.

While it is preferable to classify generators having a similar behaviour in the same group, the optimum division may change due to changes in the conditions of the system. The optimum division corresponding to a changed system is determined according to the present invention, by a self-organizing function in this embodiment.

An example of a function hierarchy configuration for distributed control is shown in Fig. 53(a). A control station A 441 controls generators 1 to 3, a control station B 442 controls a generator 4 through 6, and a coordinating control station 440 coordinates the other control stations A, B. The system configuration is shown in Fig. 54, and in each case the three control stations (sub-station) are connected to each other through a communication means 410 (see also Fig. 50).

The problem recognition mechanism 416 of the coordinating control station 440 receives information about the electric power system through the input/output interface 412, and finds the optimum division by means of a method such as an eigenvalue analysis. Then, when the division differs from the optimum, a problem has occurred. For example, the self-organizing design mechanism 417 generates a plan of "changing a function hierarchy configuration to cause the control station A to control generators 1 and 2, and to cause a control station B to control the generators 3 to 6".

Thus, the self-organizing execution mechanism 418 issues a command to each control station to change the controlled generators. The self-organizing execution mechanism 418 of the control station A changes a corresponding database based on the command. The control station B also changes in the same way. The changed function hierarchy configuration is shown in Fig. 53(b).

In this embodiment, an optimum division is always obtained in the distribution control system of frequency, and improvement of control efficiency can be obtained.

The present invention may also be applied to automatic changes in a control system corresponding to an increase in the self-organizing function when a new monitoring control system is increased in the electric power system, since a few monitoring control systems are installed in every area.

Further, the present invention may also be applied to an automatic change from a centralized control system to a divided control system when a system is divided into two separate systems by a failure of a power transmission wire.

Still further, the invention may also be applied for planning operation of the system to change the calculation method automatically to solve a problem by a division method by using a decomposition theory of Dantzig-Wilfe, accompanying enlargement of a system in a load allocation calculation of a generator by using linear programming.

Moreover, the invention may also be applied to re-allocation of a sub-system so that there is always optimum allocation when a computer is added or cancelled to the system, sharing out the processing of the plurality of sub-systems among a plurality of computers.

Further, the invention may also be applied to automatic generation of an optimum function hierarchy configuration among the sub-systems and an optimum allocation to the computer by the self-organizing function, when an external goal of the system is provided, when a plurality of computers or a sub-system equipped with a plurality of functions is provided.

While various application examples and modified examples are explained, this invention is not limited to the specific embodiments, and can be applied widely to, for example, an electric power total system, a new urban system, or a high speed traffic system.

As explained above, the present invention can achieve adaptation to changes of the object and environment over a broad range without human aid by incorporating a self-organizing mechanism to a system consisting a plurality of sub-systems, and can site superior system constitution/operation reliability and flexibility.

## Claims

**1.** A control apparatus for controlling a system (100) automatically, the apparatus comprising:

a plurality of units (203) for obtaining data from the system (100);

first means (103) for analysing automatically said data to derive at least one characteristic of said data;

second means (104) for analysing automatically said at least one characteristic and for identifying at least one corresponding problem of said system;

third means (105,106) for analysing automatically said at least one problem to derive at least one strategy for resolution of said at least one problem; and

fourth means (214) for controlling said system automatically on the basis of said at least one strategy.

2. An apparatus according to claim 1, wherein said second means (104) includes a first memory (108) for storing problem data representing a plurality of potential problems therein, and said second means (104) is arranged to compare said at least one characteristic with said plurality of potential problems.

3. An apparatus according to claim 1 or claim 2, wherein said third means (105,106) includes cause-identification means (105) for analysing said at least one problem to identify at least one cause thereof, and strategy-determination means for deriving said at least one strategy from said at least one problem and said at least one cause.

4. An apparatus according to claim 3, wherein said third means (105) further includes a second memory (104) for storing cause data representing a plurality of potential causes therein, and said cause-identification means (105) is arranged to compare said at least one problem with said plurality of potential causes.

5. An apparatus according to any one of the preceding claims, wherein said fourth means (214) includes a plurality of control units for controlling said system automatically on the basis of said at least one strategy.

6. An apparatus according to any one of the preceding claims, further including means (212) for generating a representative model of said system for testing said at least one strategy.

7. An apparatus according to any one of the preceding claims, further including means (209) for determining if said at least one strategy is capable of being performed by said system.

8. A control mechanism comprising:

an input for receiving data;

first means (103) for analysing automatically said data to derive at least one characteristic of said data;

second means (104) for analysing automatically said at least one characteristic and for identifying at least one corresponding problem associated with said data;

third means (105) for analysing automatically said at least one problem to derive at least one strategy for resolution of said at least one problem; and

fourth means for generating a control output on the basis of said at least one strategy.

9. A system having a plurality of components arranged to interact in a multiplicity of ways, and a control system according to any one of the preceding claims.

10. A system according to claim 9, wherein said fourth means is arranged to control said system automatically on the basis of said at least one strategy so that, said at least one strategy determines in which of said multiplicity of ways said components are to interact.

11. A system according to claim 9 or claim 10, wherein said plurality of components comprise components of a rolling mill.

12. A system according to claim 9 or claim 10, wherein said plurality of components comprise components of a sewage treatment plant.

13. A system having a plurality of interlinked sub-systems, each of said sub-systems (440,441,442) being arranged to perform a plurality of operations, at least one of said sub-systems (440) having a control apparatus for controlling said at least one sub-system, said control apparatus being according to any one of claims 1 to 8.

14. A system according to claim 13, wherein each of said sub-systems has a corresponding control apparatus.

15. A system according to claim 13, wherein said control apparatus of said at least one sub-system is arranged

to control the interactions of a plurality of said sub-systems.

**16.** A system according to any one of claims 13 to 15, wherein each of said sub-systems (440,441,442) is arranged to perform a plurality of tasks, and said control apparatus of said at least one sub-system (440) is arranged to transfer at least one of said plurality of tasks of one of said sub-systems such as to be included in the plurality of tasks of another of said sub-systems.

**17.** A system according to any one of claims 13 to 16, wherein each of said sub-system is a computer apparatus.

**18.** A method of automatically generating control data for controlling a system the method comprising the steps of:

a) obtaining data from the system;
b) analysing automatically said data and deriving at least one characteristic of said data;
c) analysing automatically said at least one characteristic and identifying at least one corresponding problem of the system;
d) analysing automatically said at least one problem and deriving at least one strategy for resolution of said at least one problem; and
e) generating control data for controlling said system on the basis of said at least one strategy.

**19.** A method according to claim 18, further including the step of storing problem data representing a plurality of potential problems, and wherein said step (c) further includes comparing of said at least one characteristic with said plurality of potential problems, and identifying said at least one problem among said plurality of potential problems.

**20.** A method according to claim 18 or claim 19, wherein said step (d) involves analysing said at least one problem to identify at least one cause thereof and deriving at least one strategy from said at least one problem and said at least one cause.

**21.** A method according to any one of claims 18 to 20, further including the step of storing cause data representing a plurality of potential causes, and wherein said step (d) further includes comparing said at least one problem with said plurality of potential causes, and identifying said at least one cause among said plurality of potential causes.

**22.** A method according to any one of claims 18 to 21, wherein said step (e) involves automatically controlling a plurality of control units on the basis of said at least one strategy, said control units generating said control data for controlling said system.

**23.** A method according to any one of claims 18 to 22, wherein, when said at least one strategy comprises a plurality of strategies, said plurality of strategies are tested by means generating a representative model of said system, and an optimum one of said plurality of strategies is determined, said optimum one of said plurality of strategies being used in step (e).

**24.** A method of controlling a system according to any one of claims 19 to 23, wherein, said system comprising a plurality of components arranged to interact in a multiplicity of ways; and said method further includes the step of:

controlling at least some of said plurality of components on the basis of said control data.

**25.** A method of controlling a system, said system being according to any one of claims 13 to 17, wherein the method comprises:

performing said plurality of operations in said sub-systems;

monitoring said sub-systems using said control apparatus so as to detect overload of at least one of said sub-systems; and

transferring at least one operation of said plurality of operations of said at least one overloaded one of said sub-systems to be inclined in the plurality of operations of another of said sub-systems, when said overload is detected.

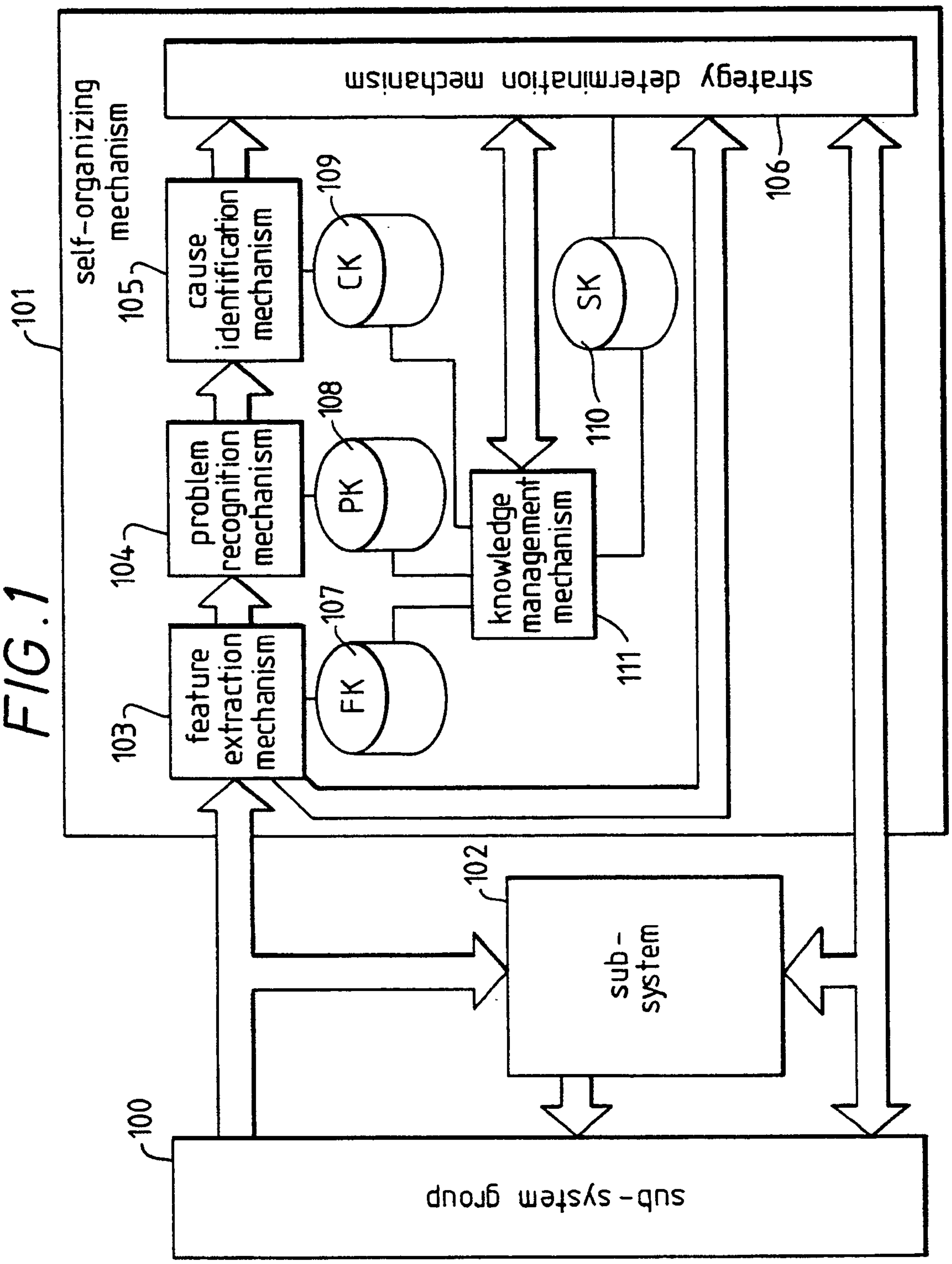
101
self-organizing mechanism
103
feature extraction mechanism
104
problem recognition mechanism
105
cause identification mechanism
107
FK
108
PK
109
CK
110
SK
111
knowledge management mechanism
106
strategy determination mechanism
102
sub-system
100
sub-system group

FIG. 1

# FIG. 2

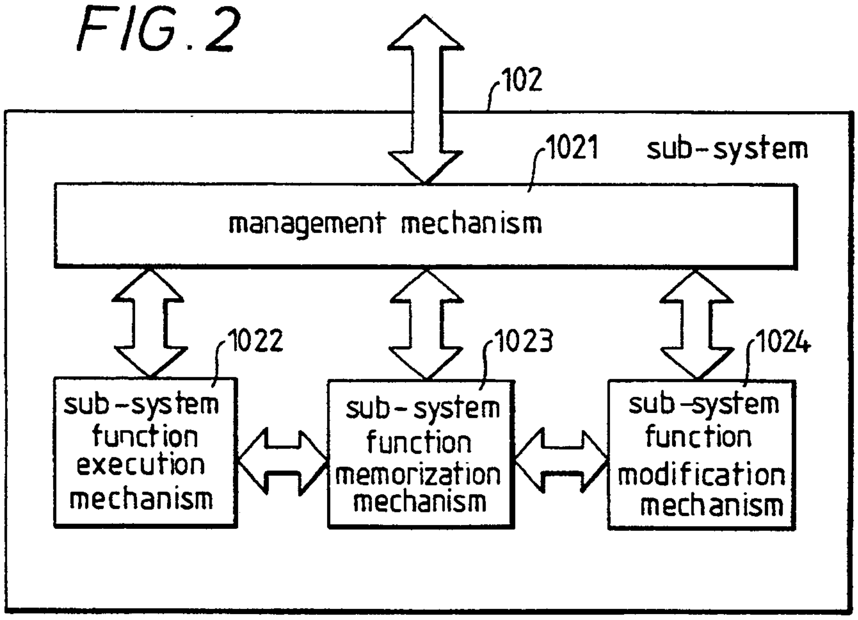
102
1021
sub-system
management mechanism
1022
1023
1024
sub-system function execution mechanism
sub-system function memorization mechanism
sub-system function modification mechanism

# FIG. 3

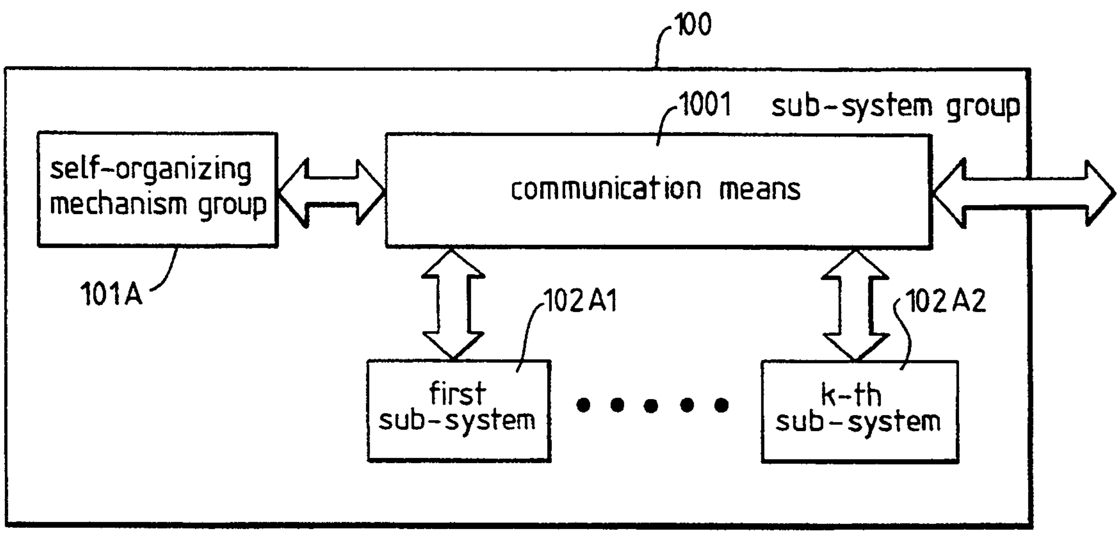
100
1001
sub-system group
self-organizing mechanism group
communication means
101A
102A1
102A2
first sub-system
k-th sub-system

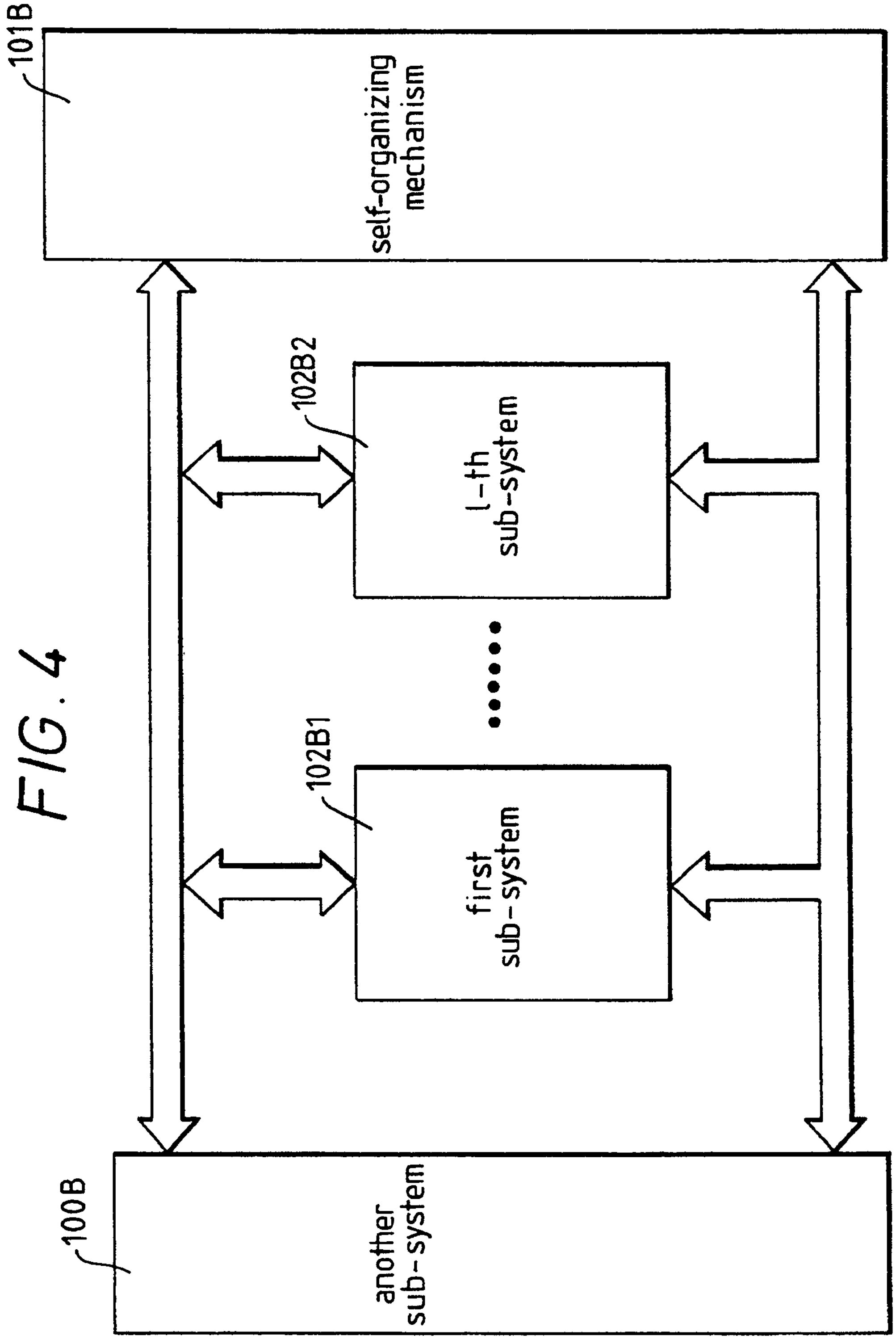
101B
self-organizing mechanism
102B2
l-th sub-system
102B1
first sub-system
100B
another sub-system

FIG. 4

FIG. 5

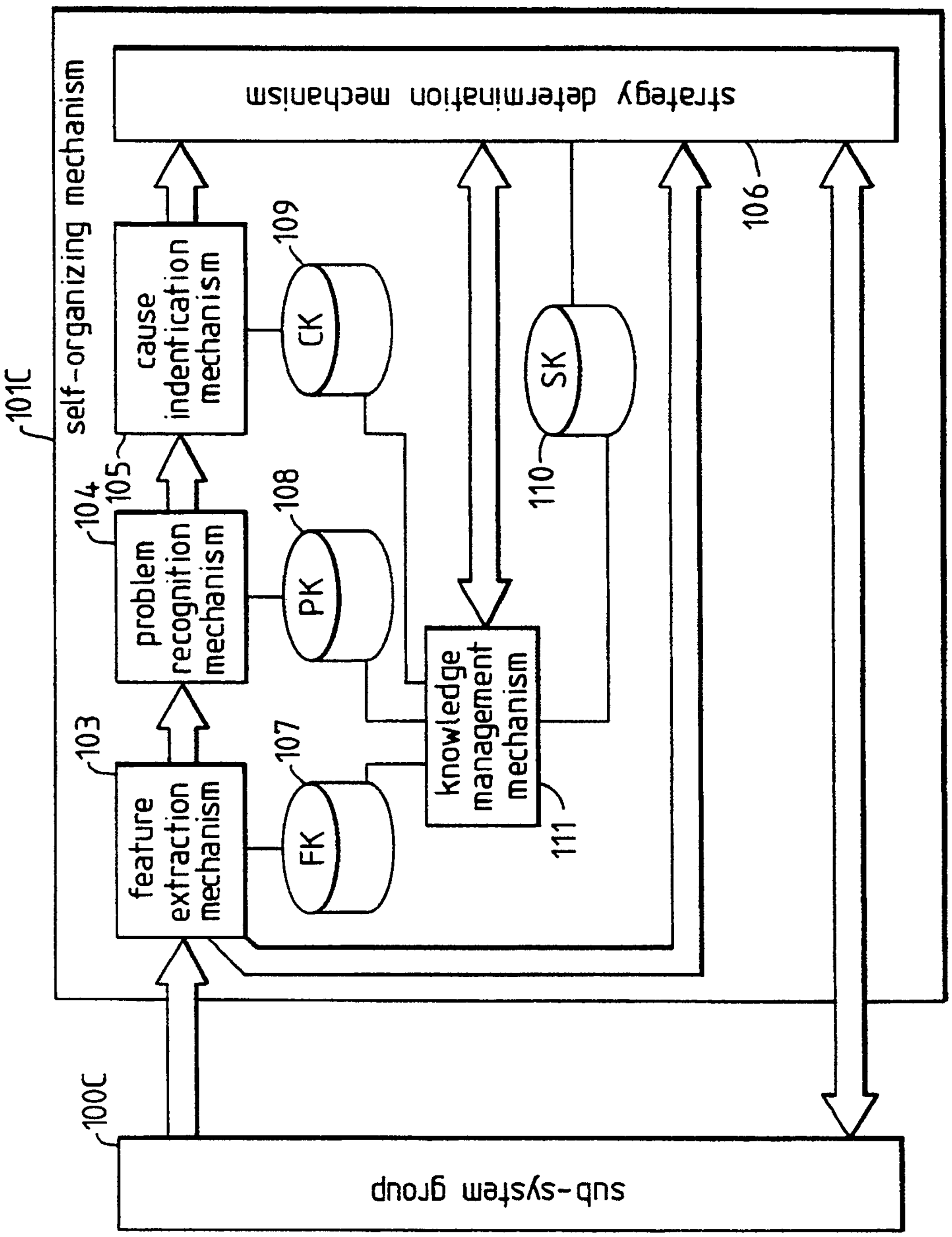
101C
self-organizing mechanism
strategy determination mechanism
106
103
feature extraction mechanism
104
105
problem recognition mechanism
cause indentification mechanism
107
FK
108
PK
109
CK
110
SK
knowledge management mechanism
111
100C
sub-system group

FIG. 6

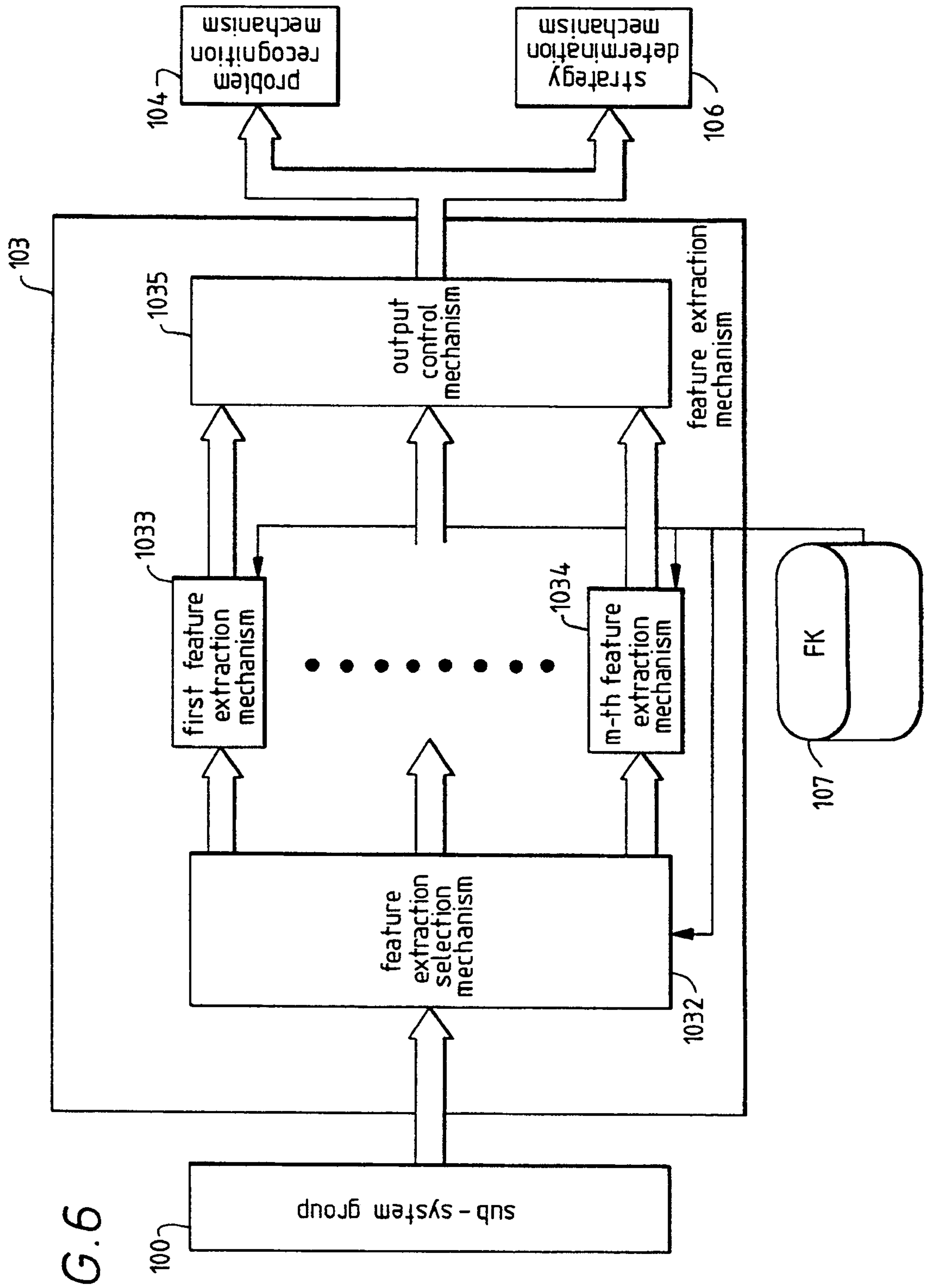
100
sub-system group
103
feature extraction selection mechanism
1032
first feature extraction mechanism
1033
m-th feature extraction mechanism
1034
output control mechanism
1035
feature extraction mechanism
FK
107
problem recognition mechanism
104
strategy determination mechanism
106

FIG. 7

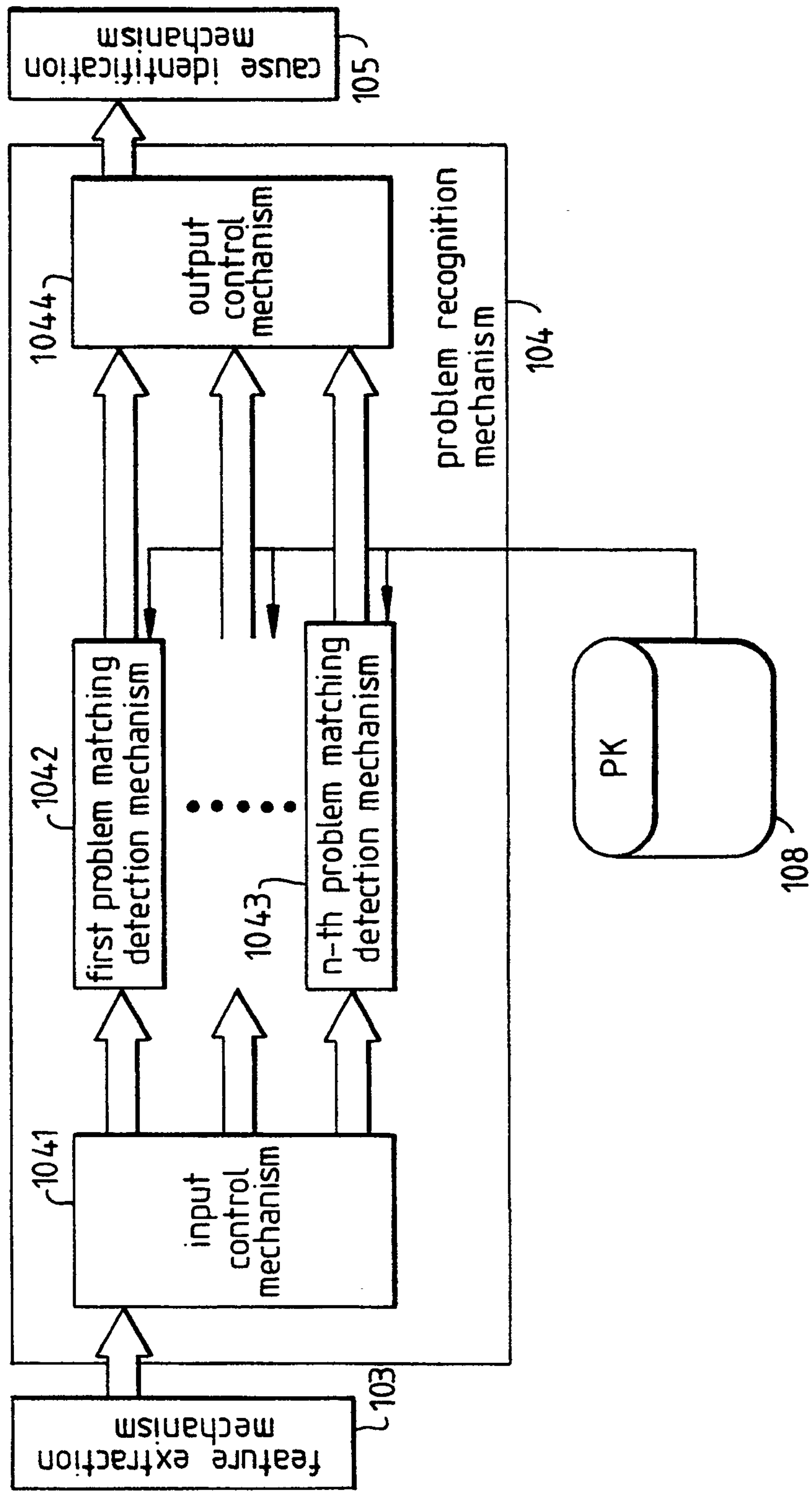

cause identification mechanism
105
output control mechanism
1044
problem recognition mechanism
104
first problem matching detection mechanism
1042
n-th problem matching detection mechanism
1043
PK
108
input control mechanism
1041
feature extraction mechanism
103

FIG. 8

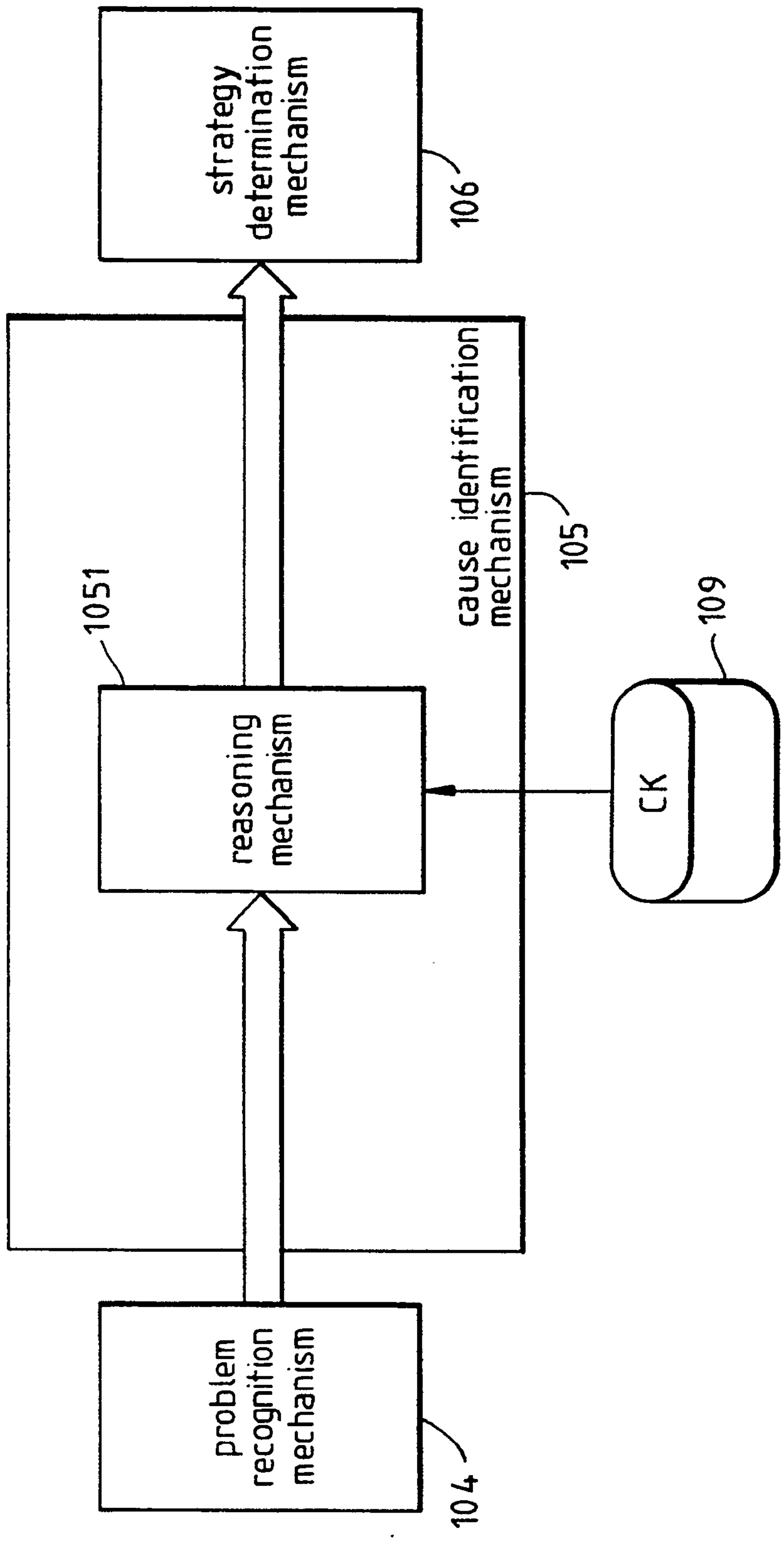
strategy determination mechanism
106
cause identification mechanism
105
1051
reasoning mechanism
CK
109
problem recognition mechanism
104

FIG. 9

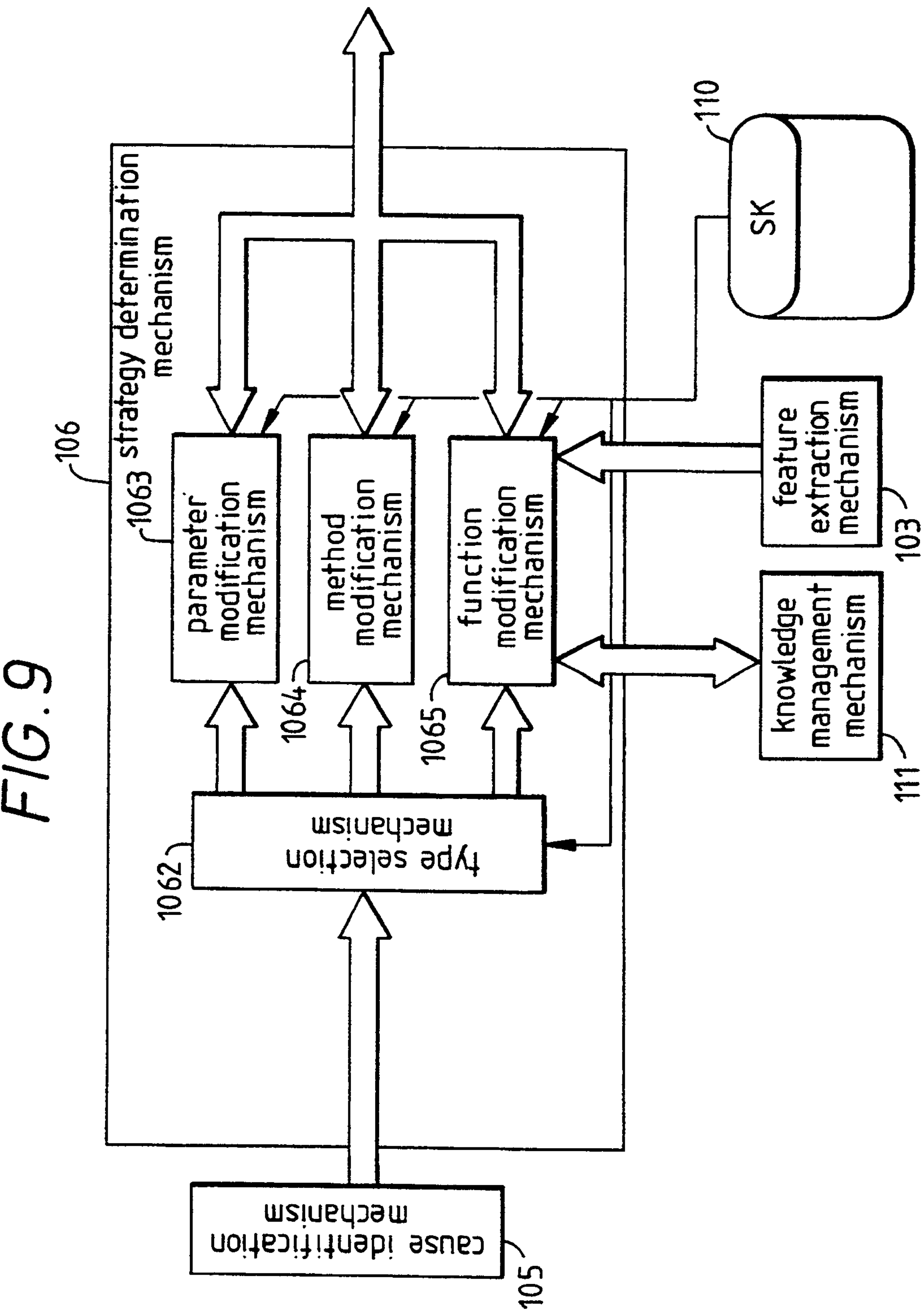
106
strategy determination mechanism
1063
parameter modification mechanism
1064
method modification mechanism
1065
function modification mechanism
1062
type selection mechanism
110
SK
feature extraction mechanism
103
knowledge management mechanism
111
cause identification mechanism
105

FIG. 10

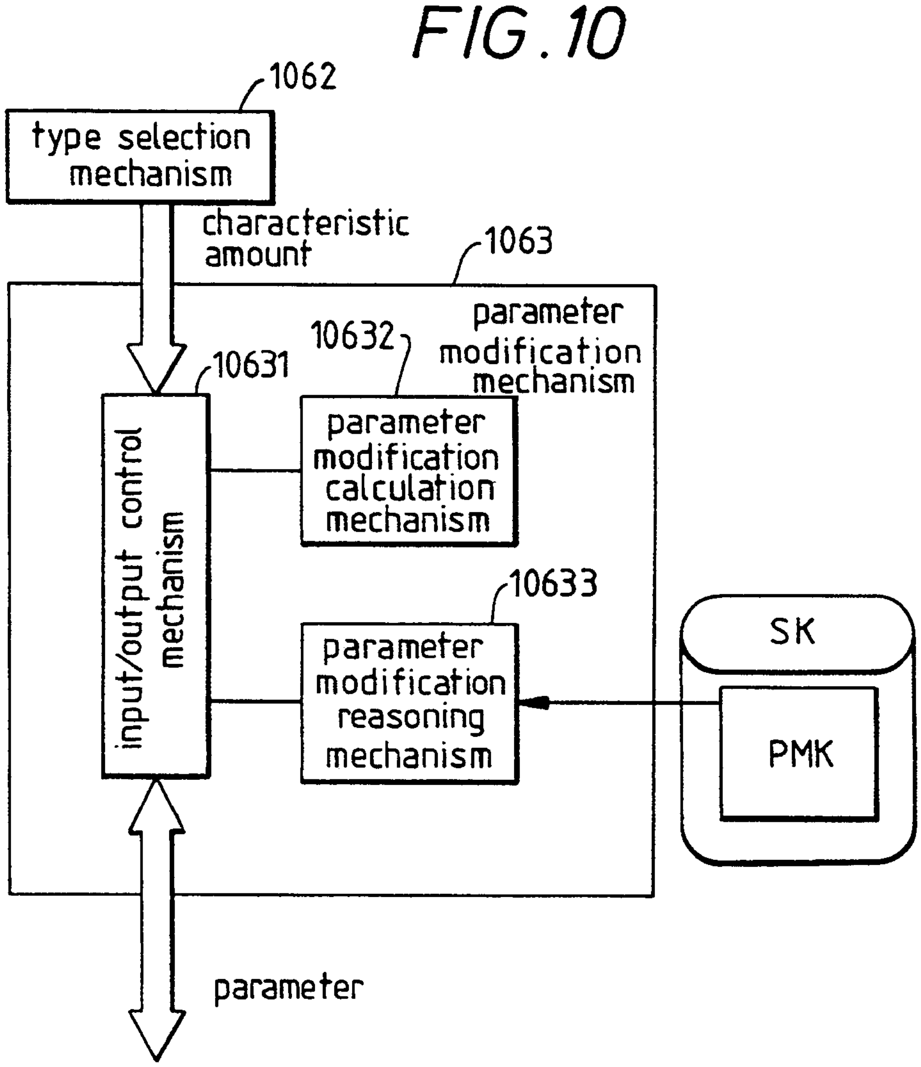
1062
type selection mechanism
characteristic amount
1063
parameter modification mechanism
10632
10631
input/output control mechanism
parameter modification calculation mechanism
10633
parameter modification reasoning mechanism
SK
PMK
parameter

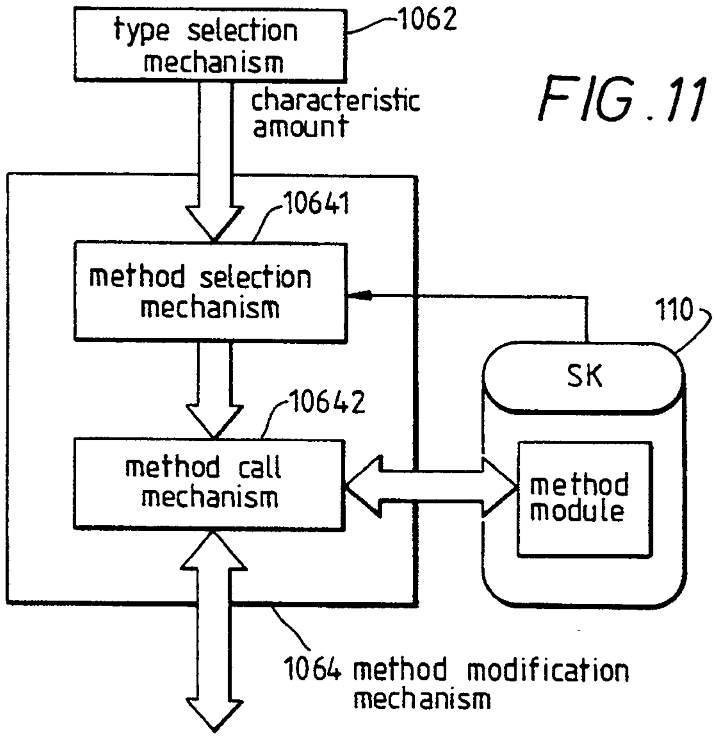
type selection mechanism
1062
characteristic amount
10641
method selection mechanism
110
SK
10642
method call mechanism
method module
1064 method modification mechanism

FIG. 11

FIG. 18

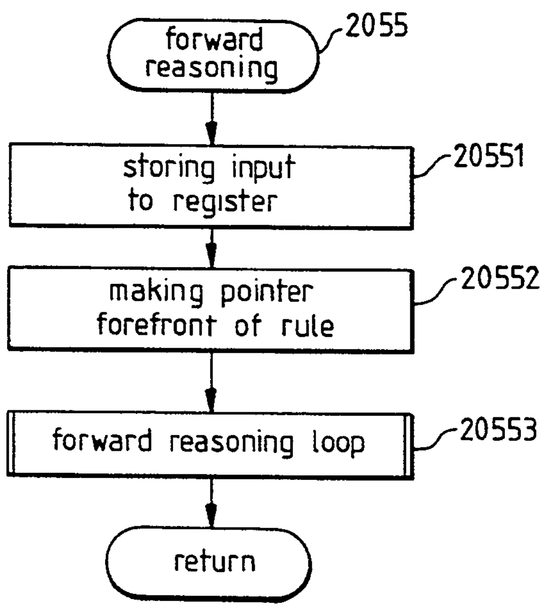
forward reasoning
2055
storing input to register
20551
making pointer forefront of rule
20552
forward reasoning loop
20553
return

FIG. 12

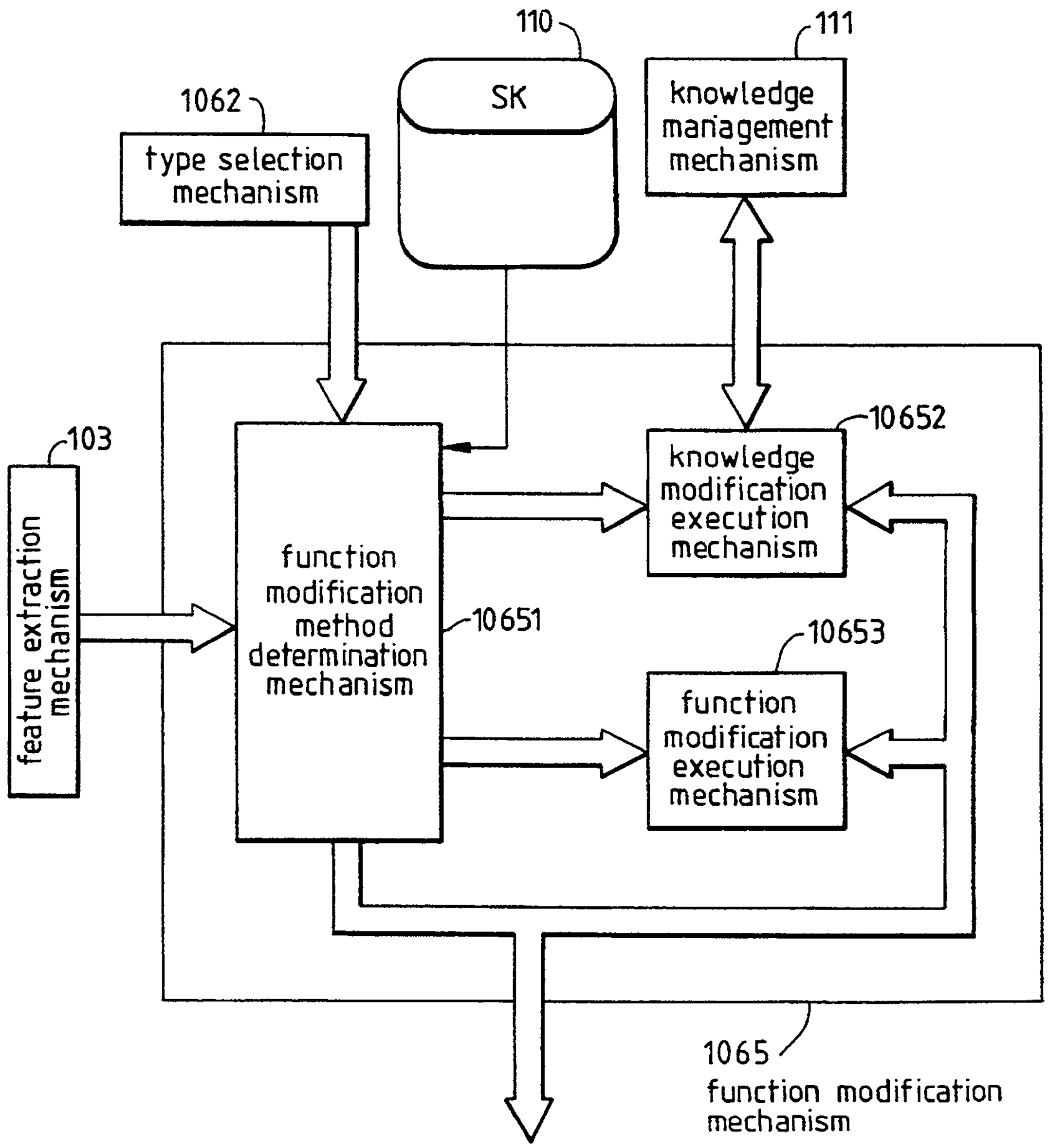
110
SK
111
knowledge management mechanism
1062
type selection mechanism
103
feature extraction mechanism
function modification method determination mechanism
10651
10652
knowledge modification execution mechanism
10653
function modification execution mechanism
1065
function modification mechanism

FIG. 13

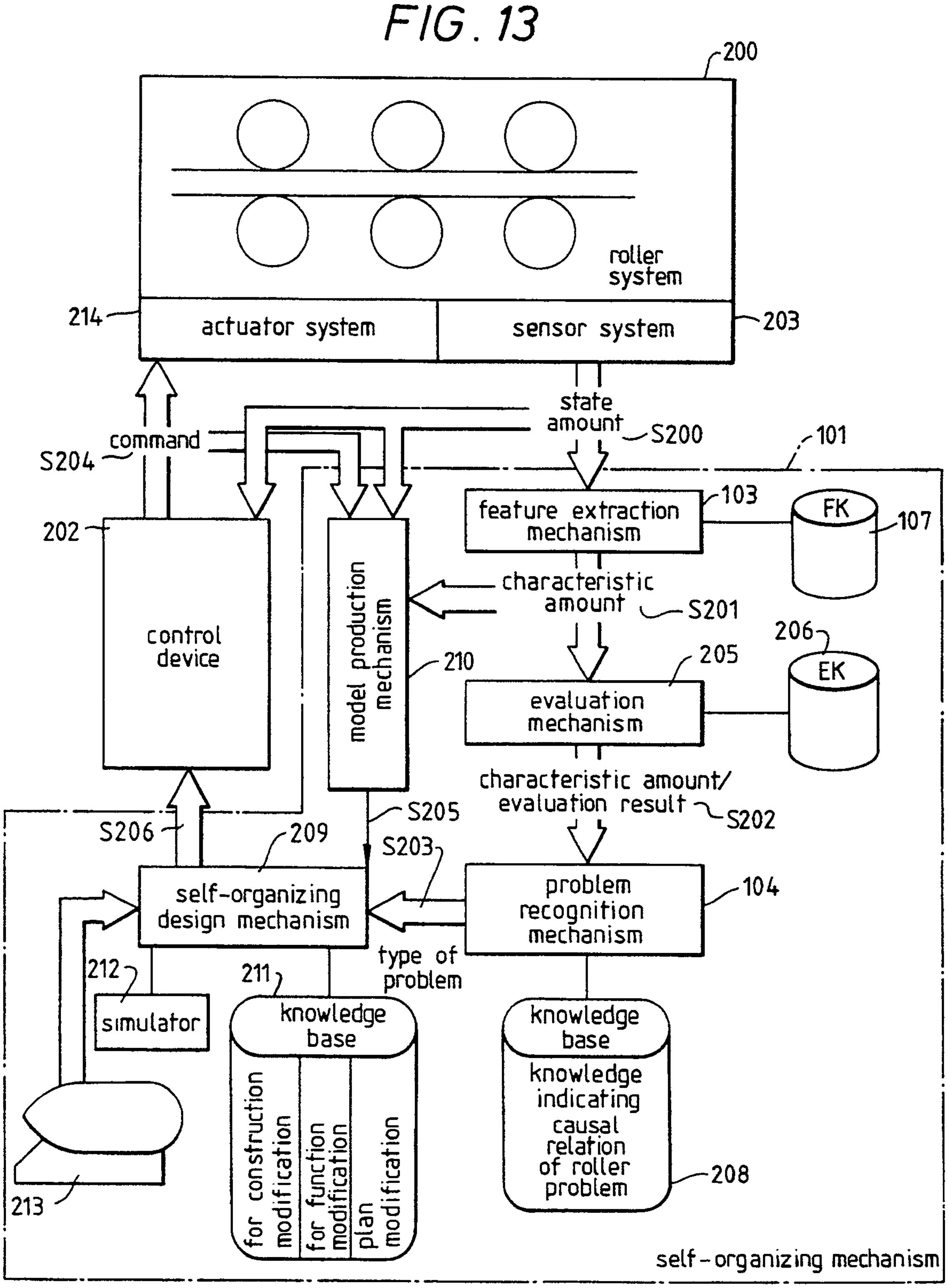

200
roller system
214
actuator system
sensor system
203
state amount
S200
command
S204
101
feature extraction mechanism
103
FK
107
202
control device
model production mechanism
characteristic amount
S201
206
205
EK
210
evaluation mechanism
characteristic amount/ evaluation result
S202
S205
S206
209
S203
self-organizing design mechanism
problem recognition mechanism
104
type of problem
212
simulator
211
knowledge base
for construction modification
for function modification
plan modification
knowledge base
knowledge indicating causal relation of roller problem
208
213
self-organizing mechanism

FIG. 14

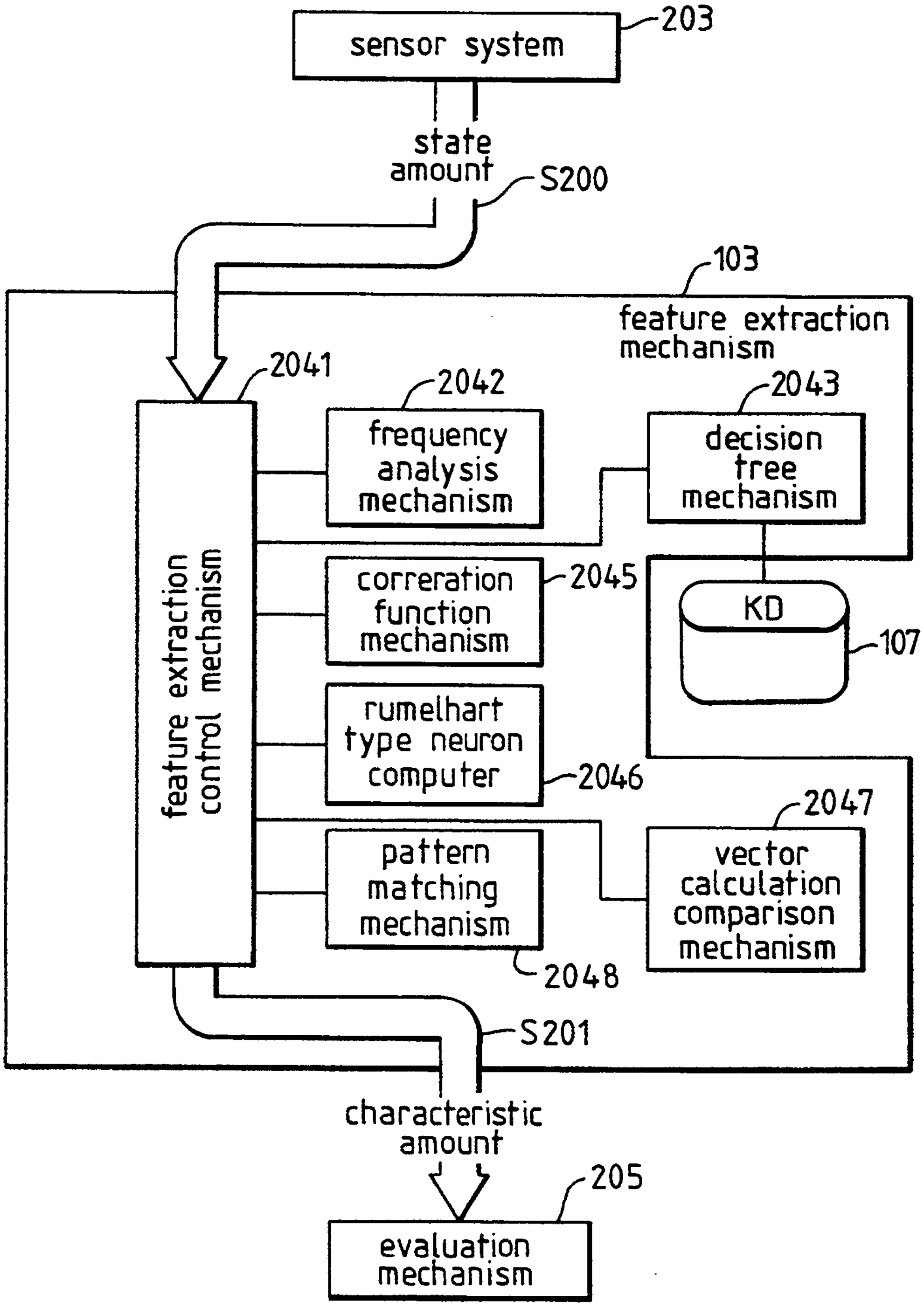
sensor system
203
state amount
S200
103
feature extraction mechanism
2041
2042
frequency analysis mechanism
2043
decision tree mechanism
feature extraction control mechanism
correration function mechanism
2045
KD
107
rumelhart type neuron computer
2046
2047
vector calculation comparison mechanism
pattern matching mechanism
2048
S201
characteristic amount
205
evaluation mechanism

FIG. 15

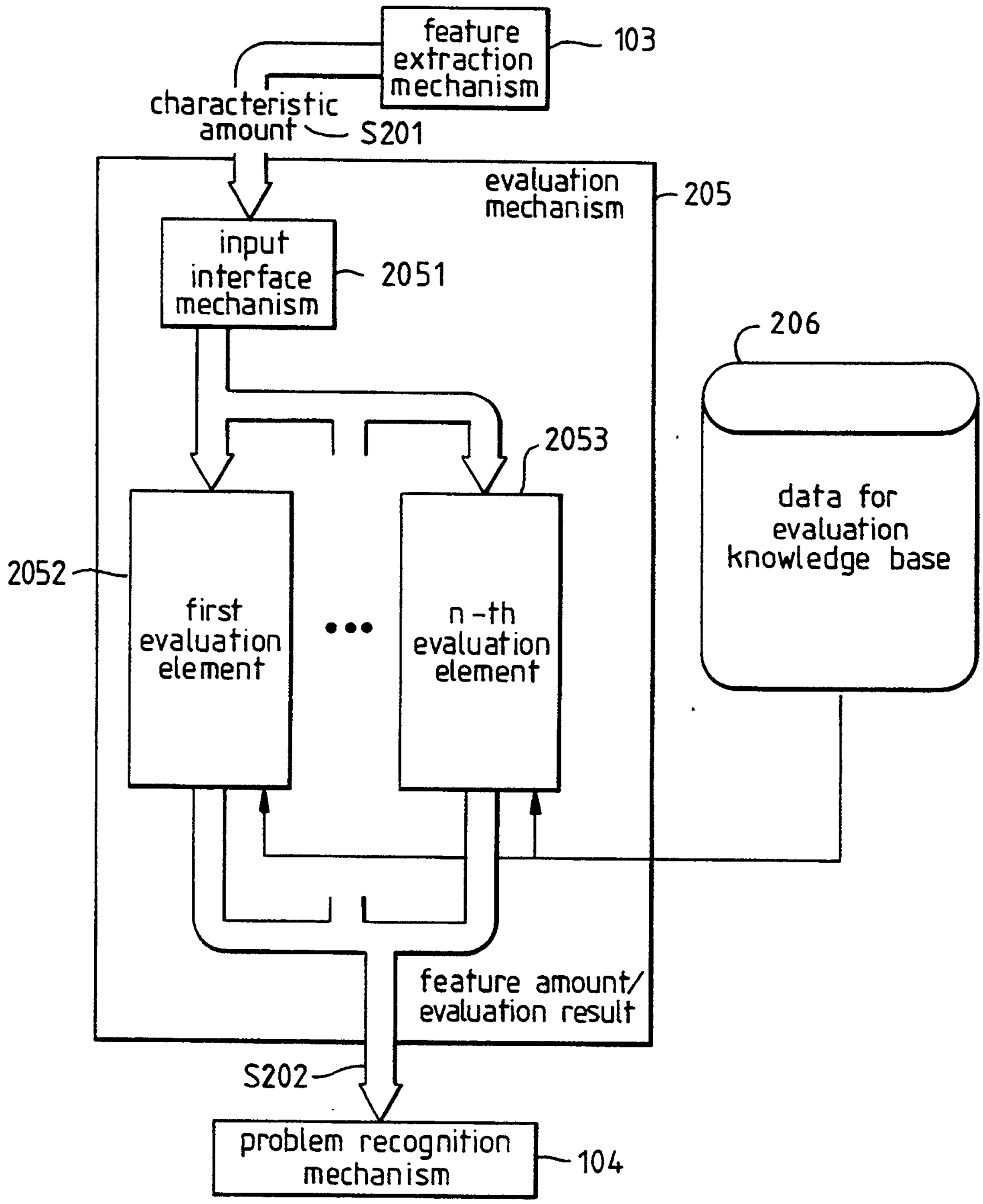
feature extraction mechanism
103
characteristic amount
S201
evaluation mechanism
205
input interface mechanism
2051
206
2053
data for evaluation knowledge base
2052
first evaluation element
n-th evaluation element
feature amount/ evaluation result
S202
problem recognition mechanism
104

FIG. 16

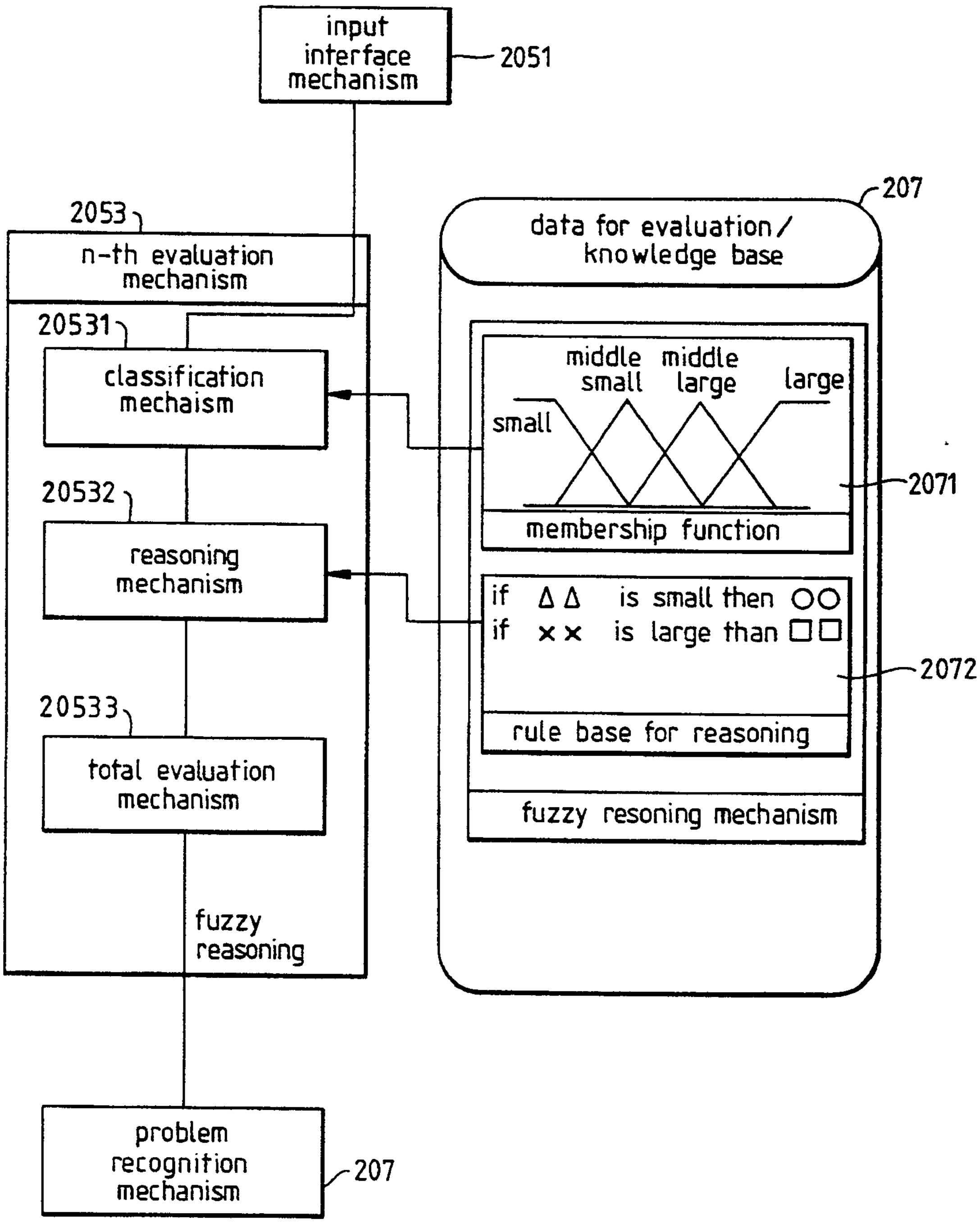
input interface mechanism
2051
2053
n-th evaluation mechanism
20531
classification mechaism
20532
reasoning mechanism
20533
total evaluation mechanism
fuzzy reasoning
problem recognition mechanism
207
207
data for evaluation / knowledge base
middle small
middle large
large
small
membership function
2071
if ΔΔ is small then ○○
if ×× is large than □□
2072
rule base for reasoning
fuzzy resoning mechanism

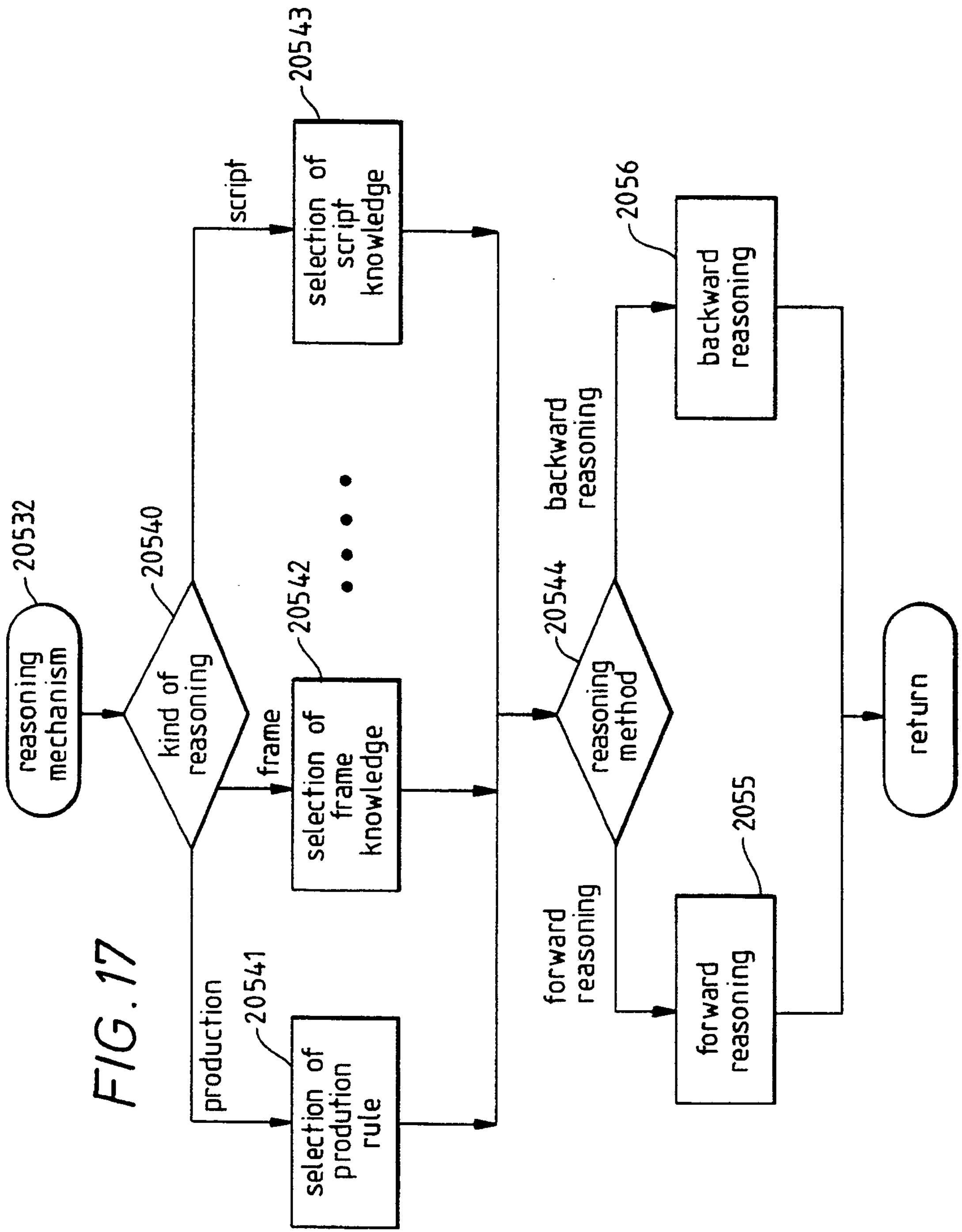
reasoning mechanism
20532
kind of reasoning
20540
production
frame
script
20541
selection of prodution rule
20542
selection of frame knowledge
20543
selection of script knowledge
reasoning method
20544
forward reasoning
backward reasoning
2055
forward reasoning
2056
backward reasoning
return

FIG. 17

FIG.19

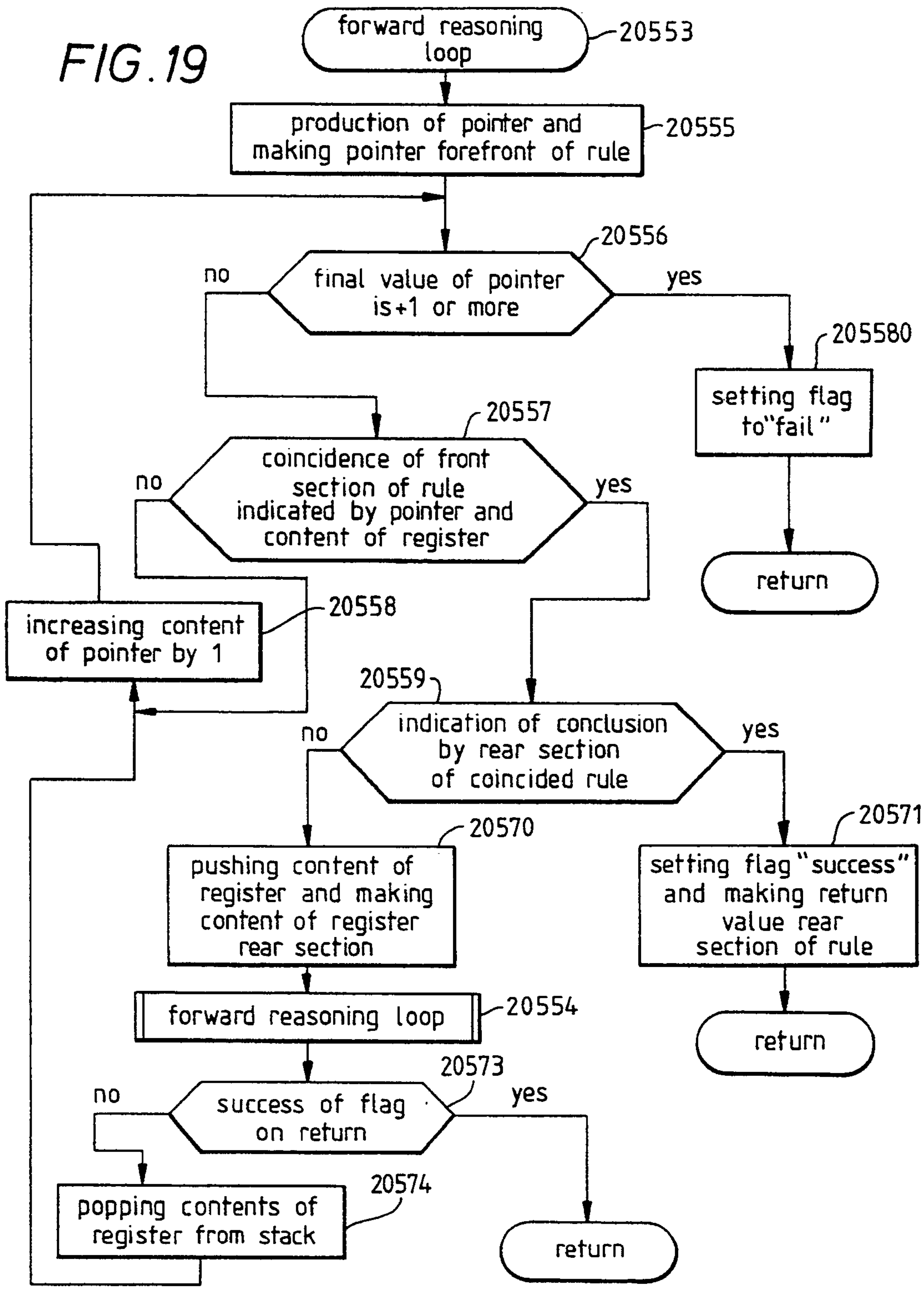

forward reasoning loop
20553
production of pointer and making pointer forefront of rule
20555
20556
final value of pointer is+1 or more
no
yes
205580
setting flag to"fail"
return
20557
coincidence of front section of rule indicated by pointer and content of register
no
yes
increasing content of pointer by 1
20558
20559
indication of conclusion by rear section of coincided rule
no
yes
20570
pushing content of register and making content of register rear section
20571
setting flag "success" and making return value rear section of rule
forward reasoning loop
20554
return
20573
success of flag on return
no
yes
popping contents of register from stack
20574
return

FIG. 20

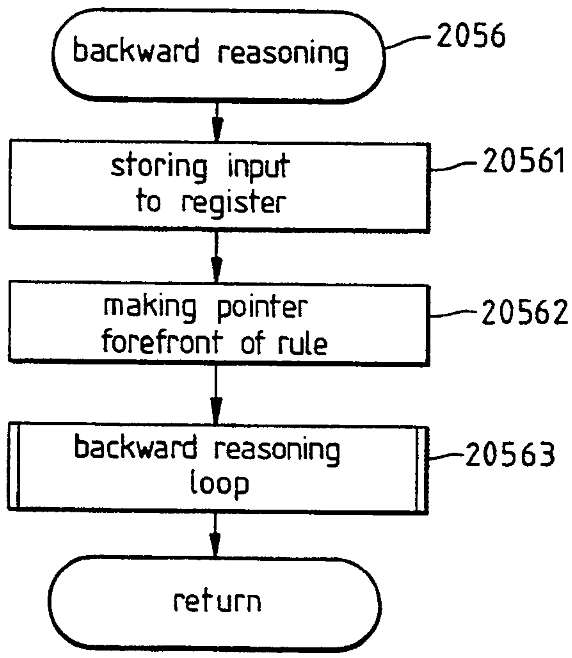
backward reasoning
2056
storing input to register
20561
making pointer forefront of rule
20562
backward reasoning loop
20563
return

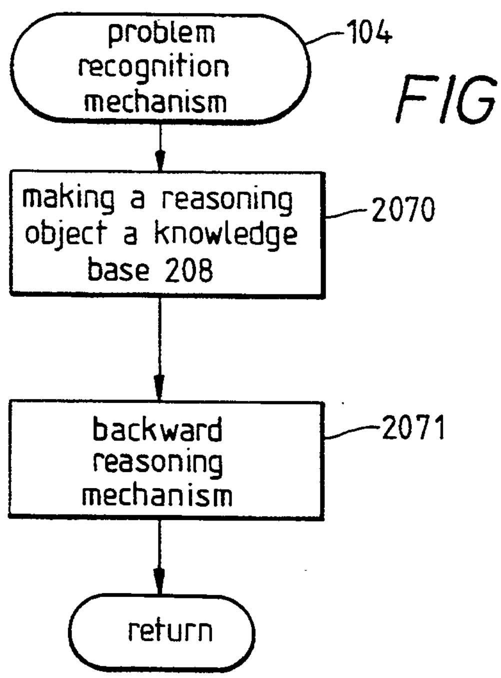
problem recognition mechanism
104
making a reasoning object a knowledge base 208
2070
backward reasoning mechanism
2071
return

FIG. 22

FIG. 21

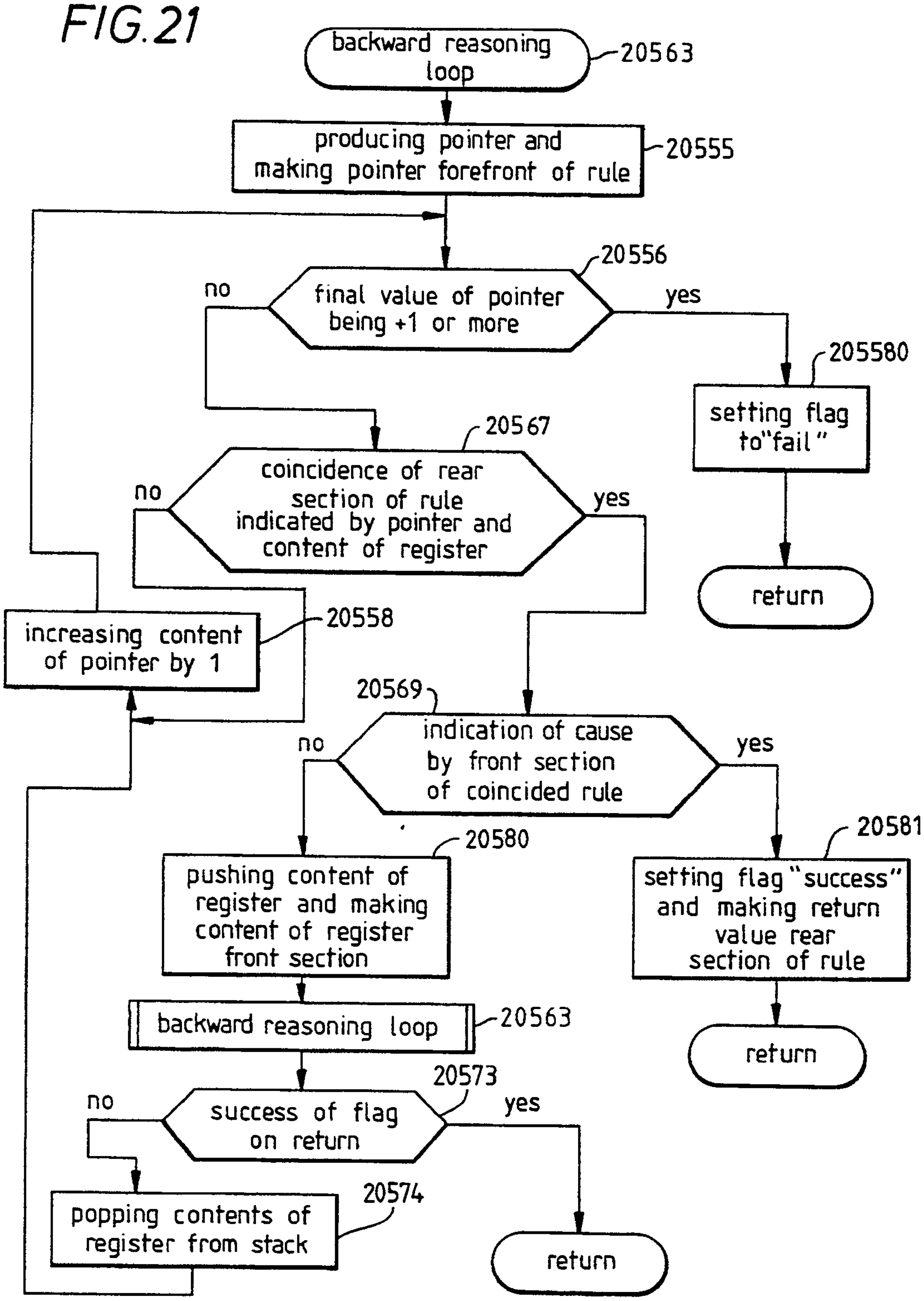

backward reasoning loop
20563
producing pointer and making pointer forefront of rule
20555
20556
final value of pointer being +1 or more
no
yes
205580
setting flag to "fail"
return
20567
coincidence of rear section of rule indicated by pointer and content of register
no
yes
increasing content of pointer by 1
20558
20569
indication of cause by front section of coincided rule
no
yes
20580
pushing content of register and making content of register front section
20581
setting flag "success" and making return value rear section of rule
return
backward reasoning loop
20563
20573
success of flag on return
no
yes
20574
popping contents of register from stack
return

FIG. 23

208

knowledge base

| rule number | leading subject section | subsequent subject section |
|---|---|---|
| 1 | DC component in deviation is larger than the other component | steady-state deviation is large |
| 2 | steady-state deviation is large, and direct current component is large | number of order between control system and command system differs by one order |
| 3 | steady-state deviation is large and direct current component is large in proportion to time | number of order between control-system and command system differs by two orders |
| | | |

FIG. 24

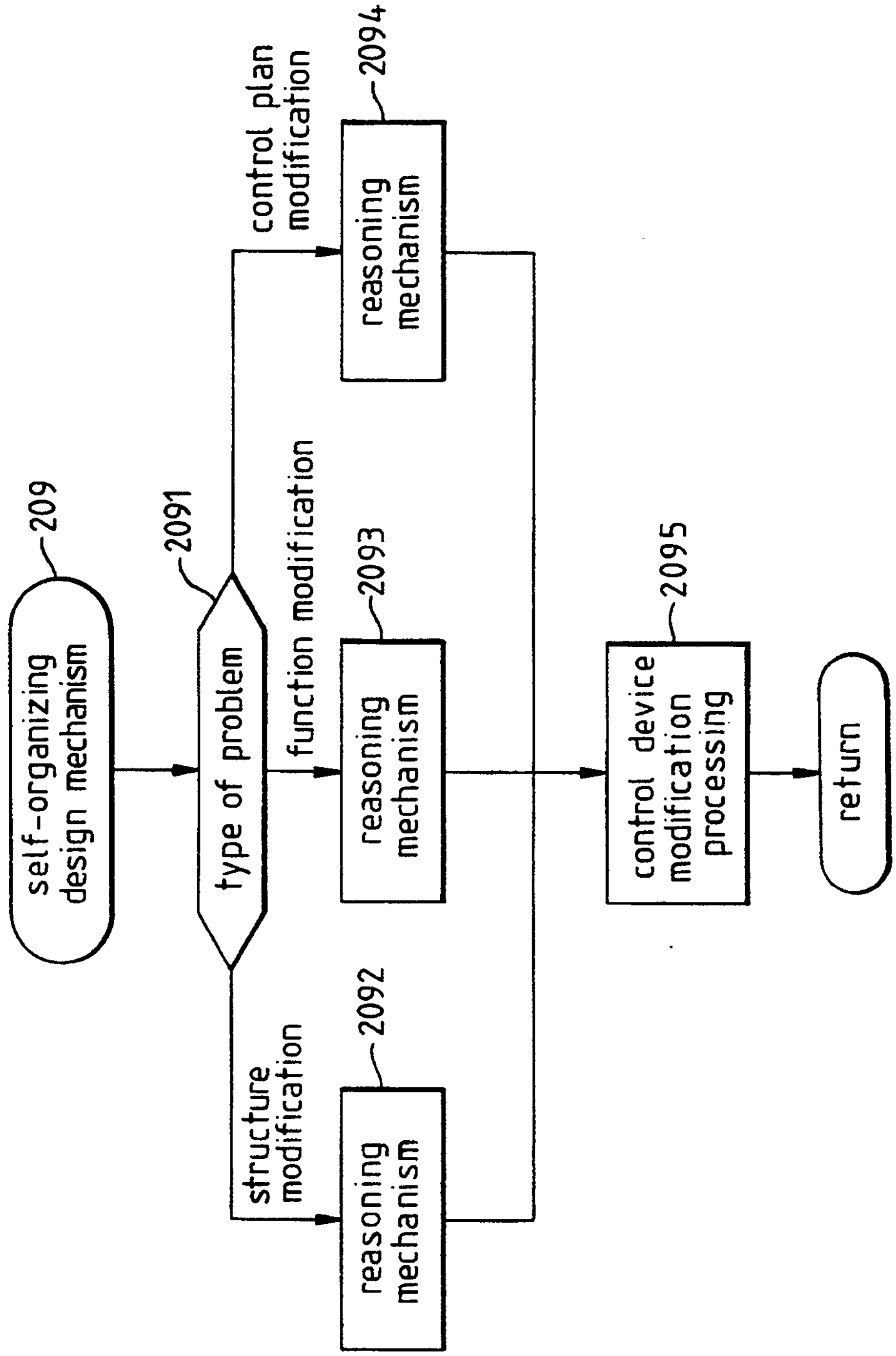
self-organizing design mechanism
209
type of problem
2091
structure modification
function modification
control plan modification
reasoning mechanism
2092
reasoning mechanism
2093
reasoning mechanism
2094
control device modification processing
2095
return

# FIG. 25

211

knowledge base

for control method modification

2111

| rule number | leading subject section | subsequent subject section |
|---|---|---|
| 1 | number of order between control system and command system differs by one order | integral type control system |
| 2 | integral type control system, and conventional control system is PID. | addition of integrator |
| 3 | integral type control system, and conventional system is optimum control system | setting optimum servo system |
| | | |

FIG. 26

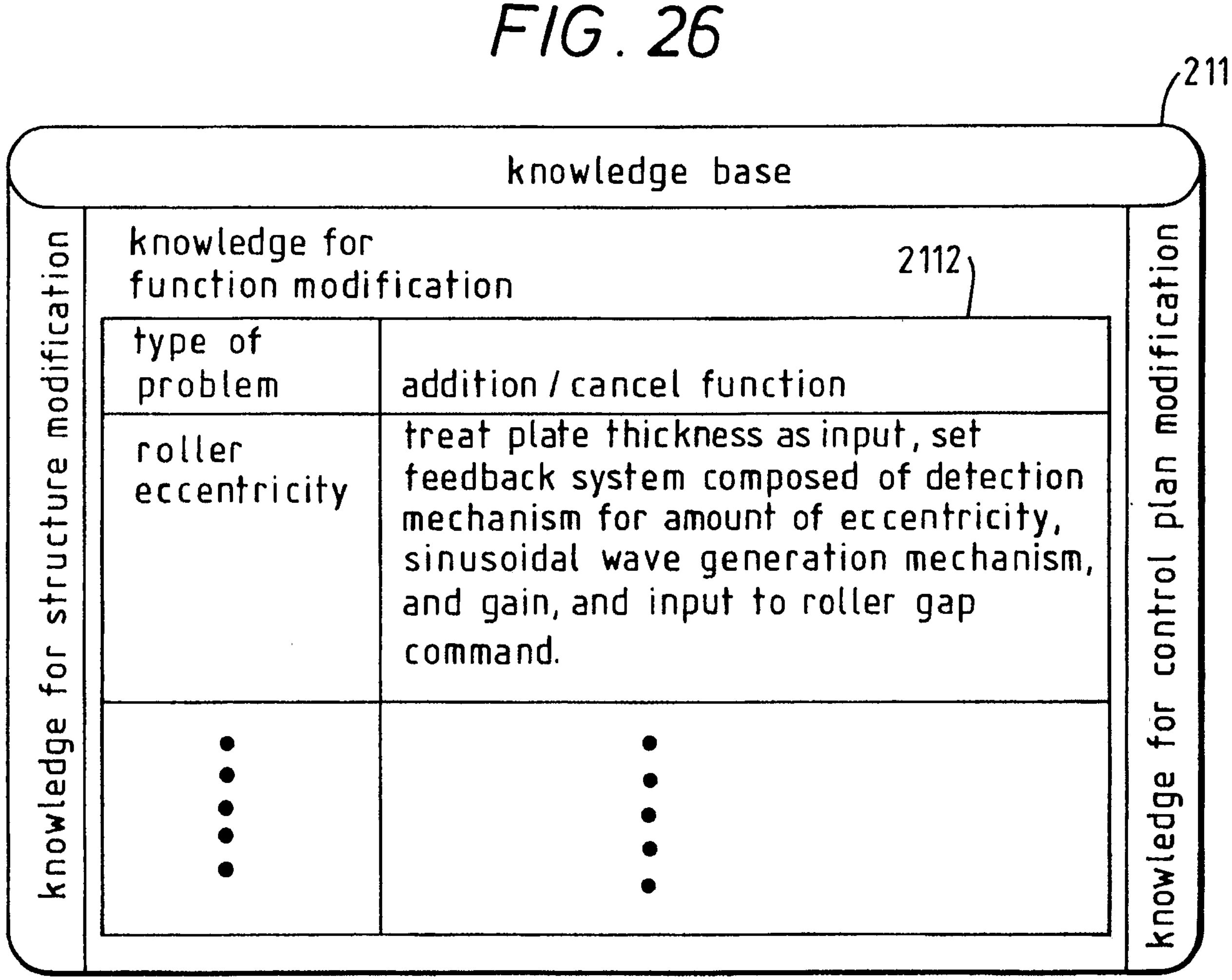
211
knowledge base
knowledge for structure modification
knowledge for function modification
2112
type of problem
addition / cancel function
roller eccentricity
treat plate thickness as input, set feedback system composed of detection mechanism for amount of eccentricity, sinusoidal wave generation mechanism, and gain, and input to roller gap command.
knowledge for control plan modification

FIG. 27

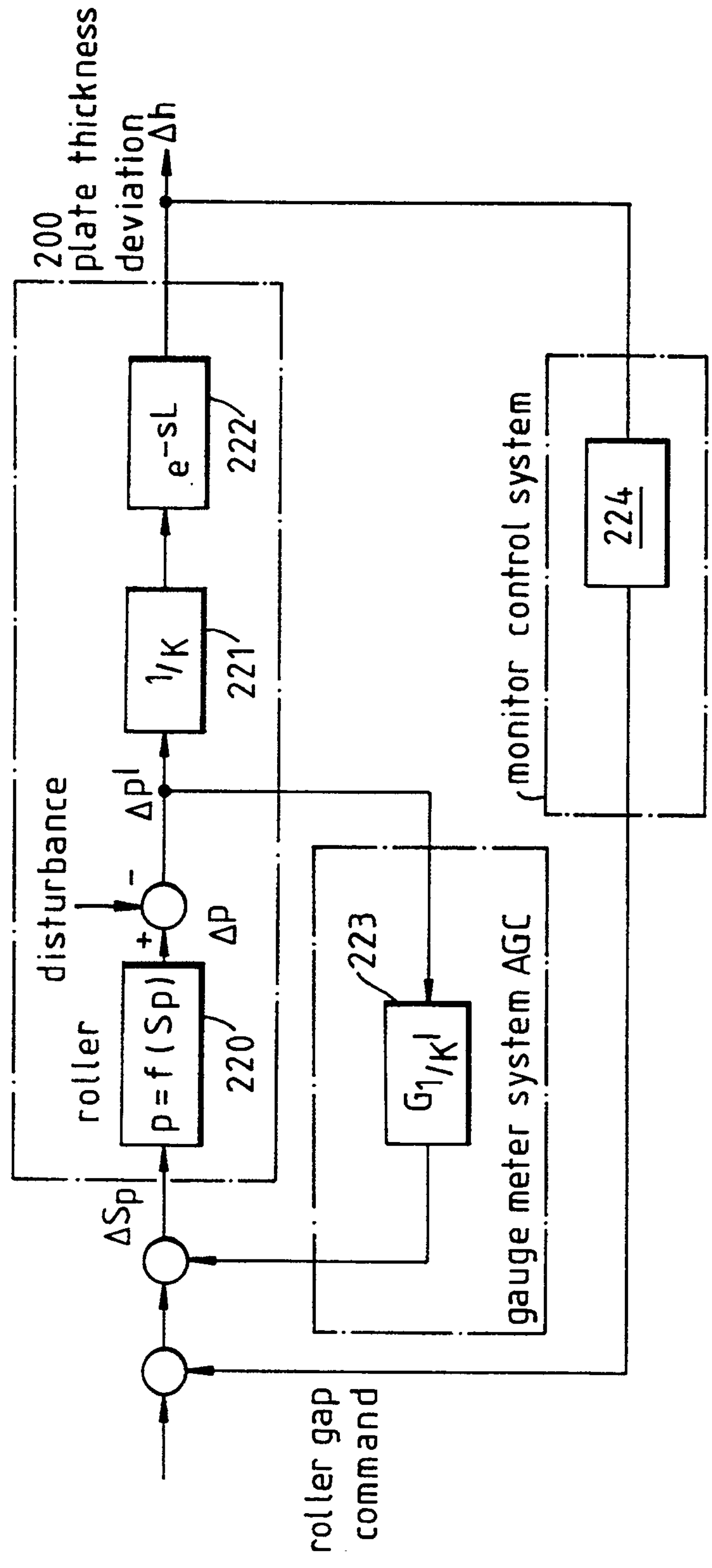

200
plate thickness deviation
Δh
disturbance
roller
p = f (Sp)
220
+
−
ΔP
ΔP'
1/K
221
e^−sL
222
ΔSp
223
G1/K'
gauge meter system AGC
224
monitor control system
roller gap command

FIG.28

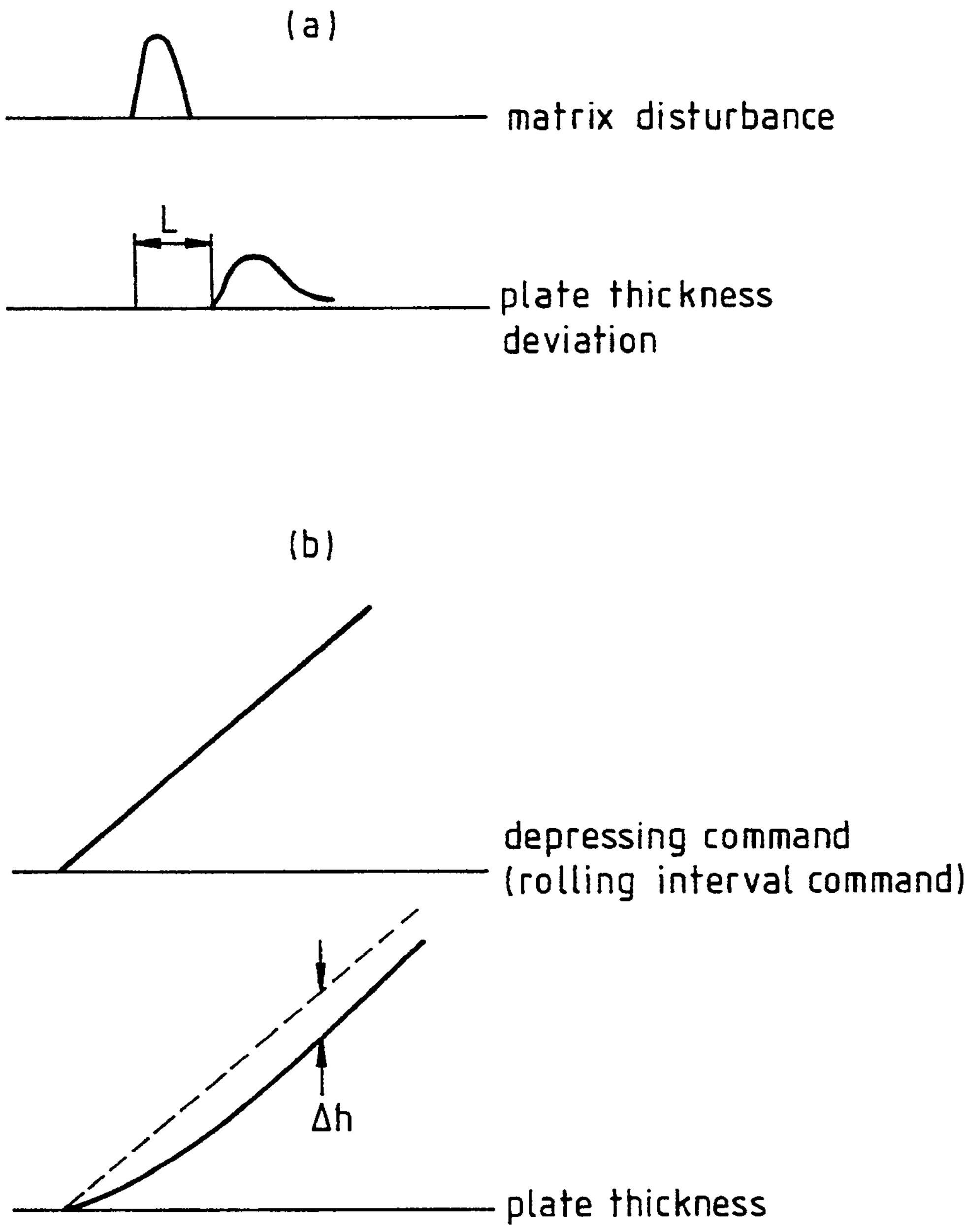
(a)
matrix disturbance
L
plate thickness deviation
(b)
depressing command (rolling interval command)
Δh
plate thickness

FIG. 29

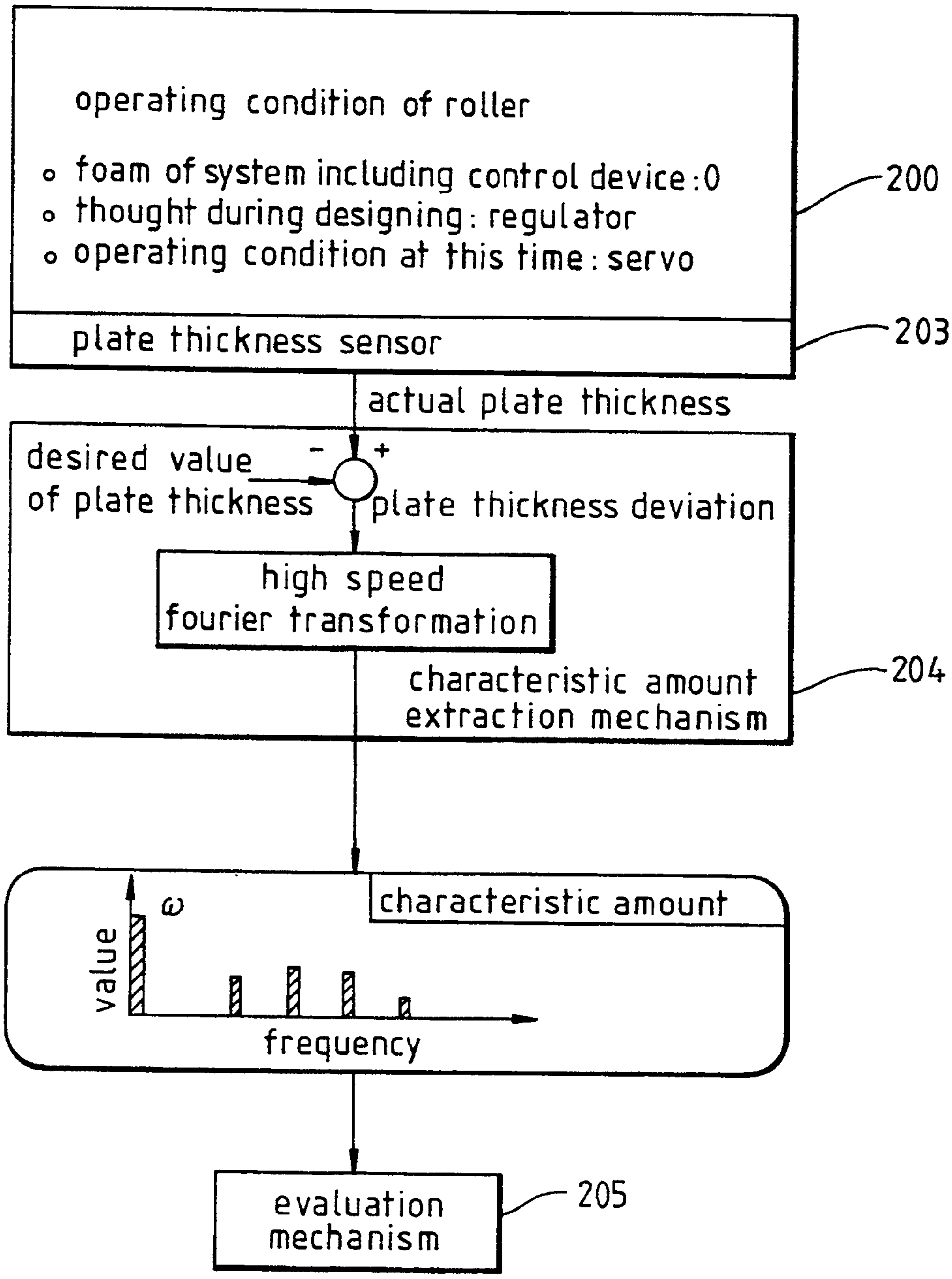
operating condition of roller
o foam of system including control device: 0
o thought during designing: regulator
o operating condition at this time: servo
200
plate thickness sensor
203
actual plate thickness
desired value of plate thickness
-
+
plate thickness deviation
high speed fourier transformation
characteristic amount extraction mechanism
204
ω
value
characteristic amount
frequency
evaluation mechanism
205

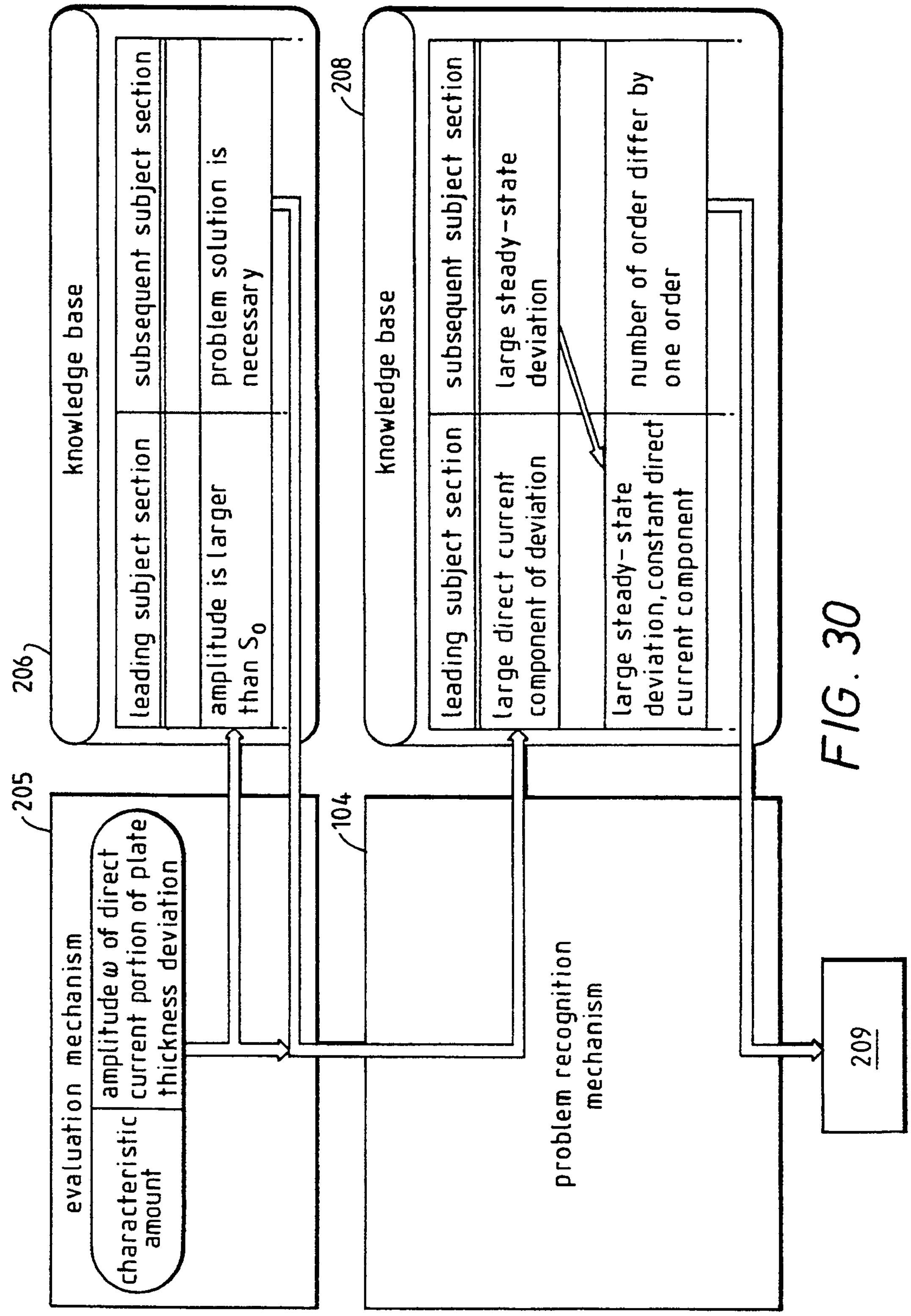
205
evaluation mechanism
characteristic amount
amplitude ω of direct current portion of plate thickness deviation
206
knowledge base
leading subject section
subsequent subject section
amplitude is larger than $S_0$
problem solution is necessary
208
knowledge base
leading subject section
subsequent subject section
large direct current component of deviation
large steady-state deviation
large steady-state deviation, constant direct current component
number of order differ by one order
104
problem recognition mechanism
209

FIG. 30

FIG. 31

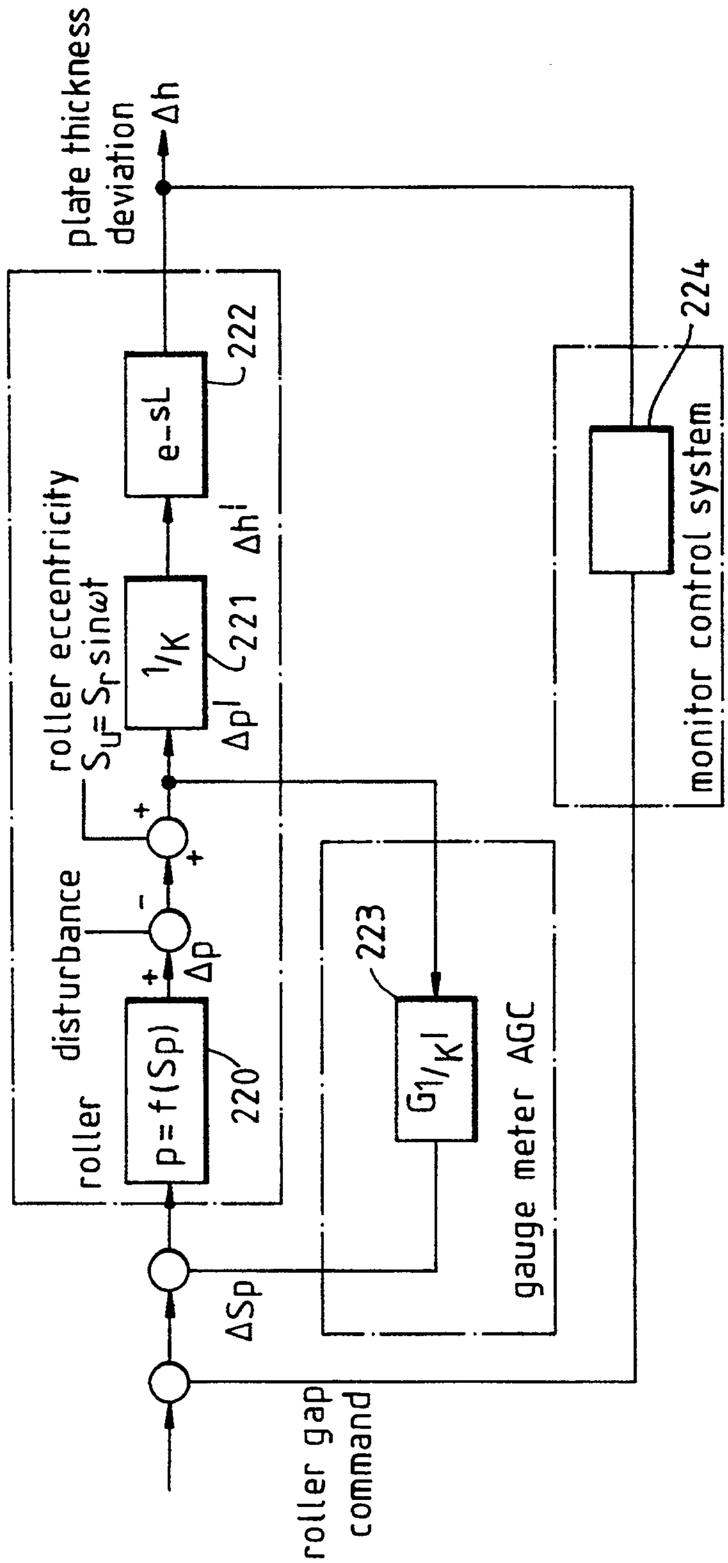
plate thickness deviation
Δh
roller eccentricity
$S_U = S_r \sin\omega t$
disturbance
roller
p = f(Sp)
220
Δp
1/K
221
Δp'
Δh'
e-sL
222
223
G1/K'
gauge meter AGC
ΔSp
roller gap command
224
monitor control system

FIG. 32

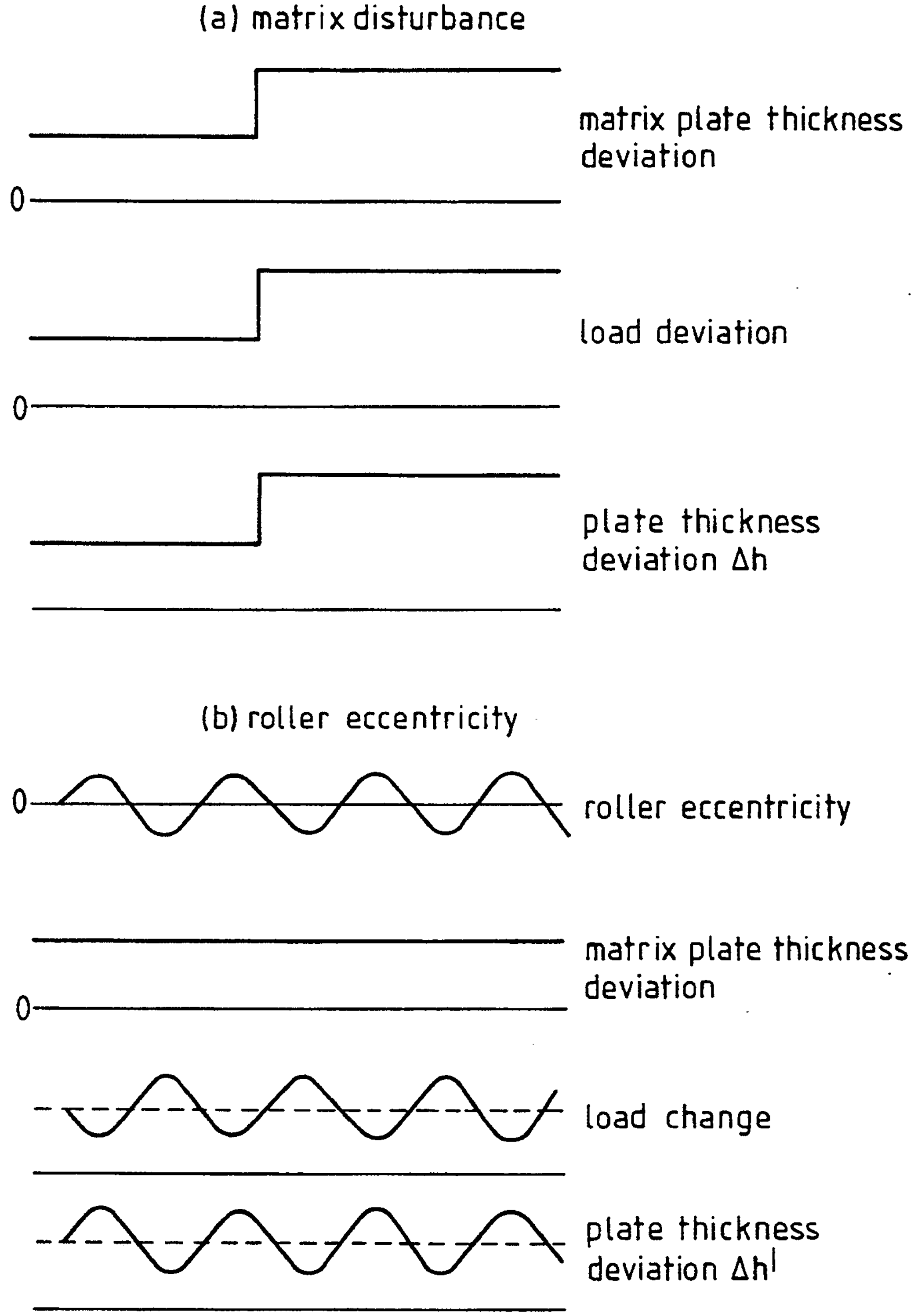
(a) matrix disturbance
matrix plate thickness deviation
0
load deviation
0
plate thickness deviation Δh
(b) roller eccentricity
0
roller eccentricity
matrix plate thickness deviation
0
load change
plate thickness deviation Δh'

FIG. 33

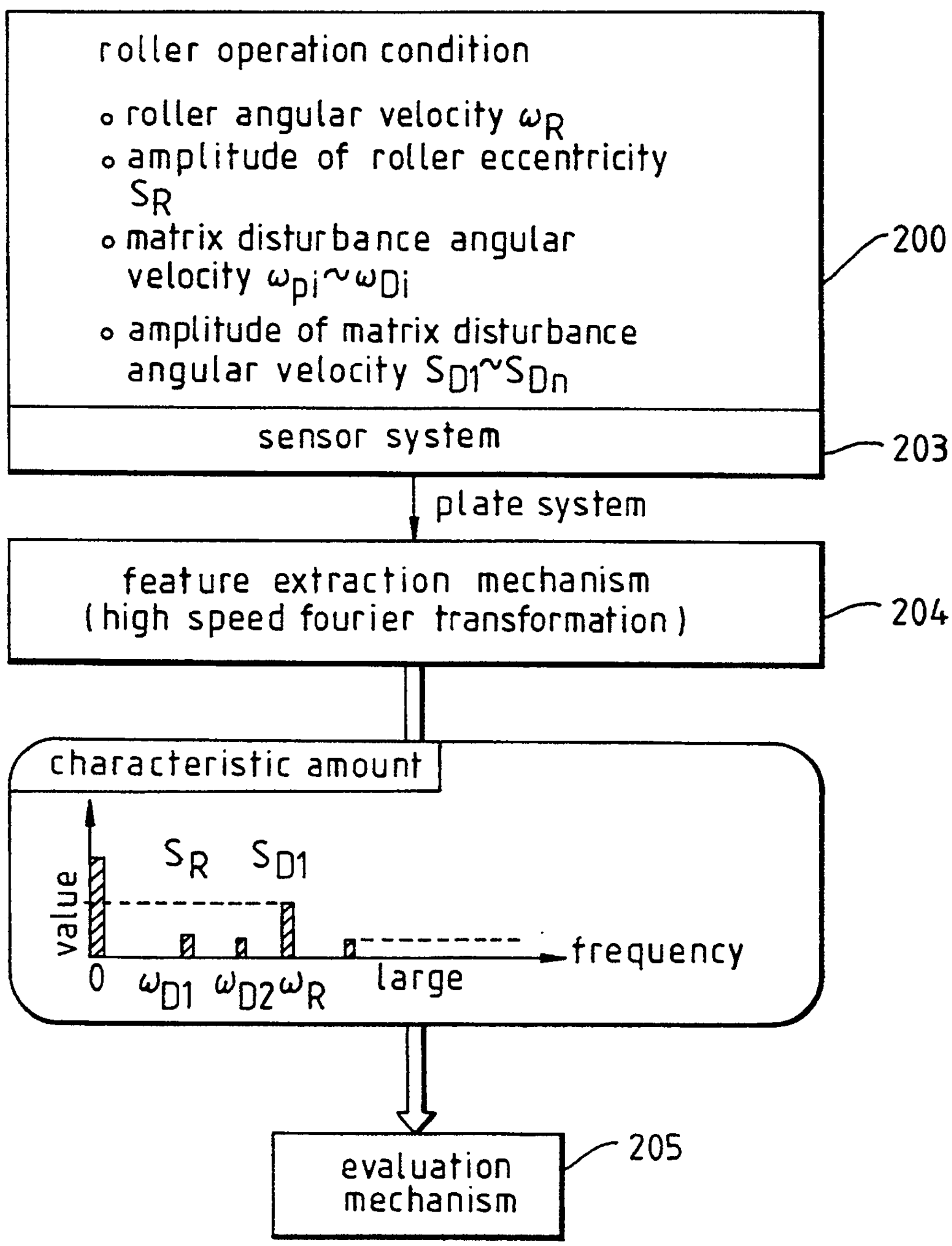
roller operation condition
o roller angular velocity $\omega_R$
o amplitude of roller eccentricity $S_R$
o matrix disturbance angular velocity $\omega_{pi} \sim \omega_{Di}$
o amplitude of matrix disturbance angular velocity $S_{D1} \sim S_{Dn}$
sensor system
200
203
plate system
feature extraction mechanism (high speed fourier transformation)
204
characteristic amount
value
$S_R$
$S_{D1}$
0
$\omega_{D1}$
$\omega_{D2}$
$\omega_R$
large
frequency
evaluation mechanism
205

FIG. 34

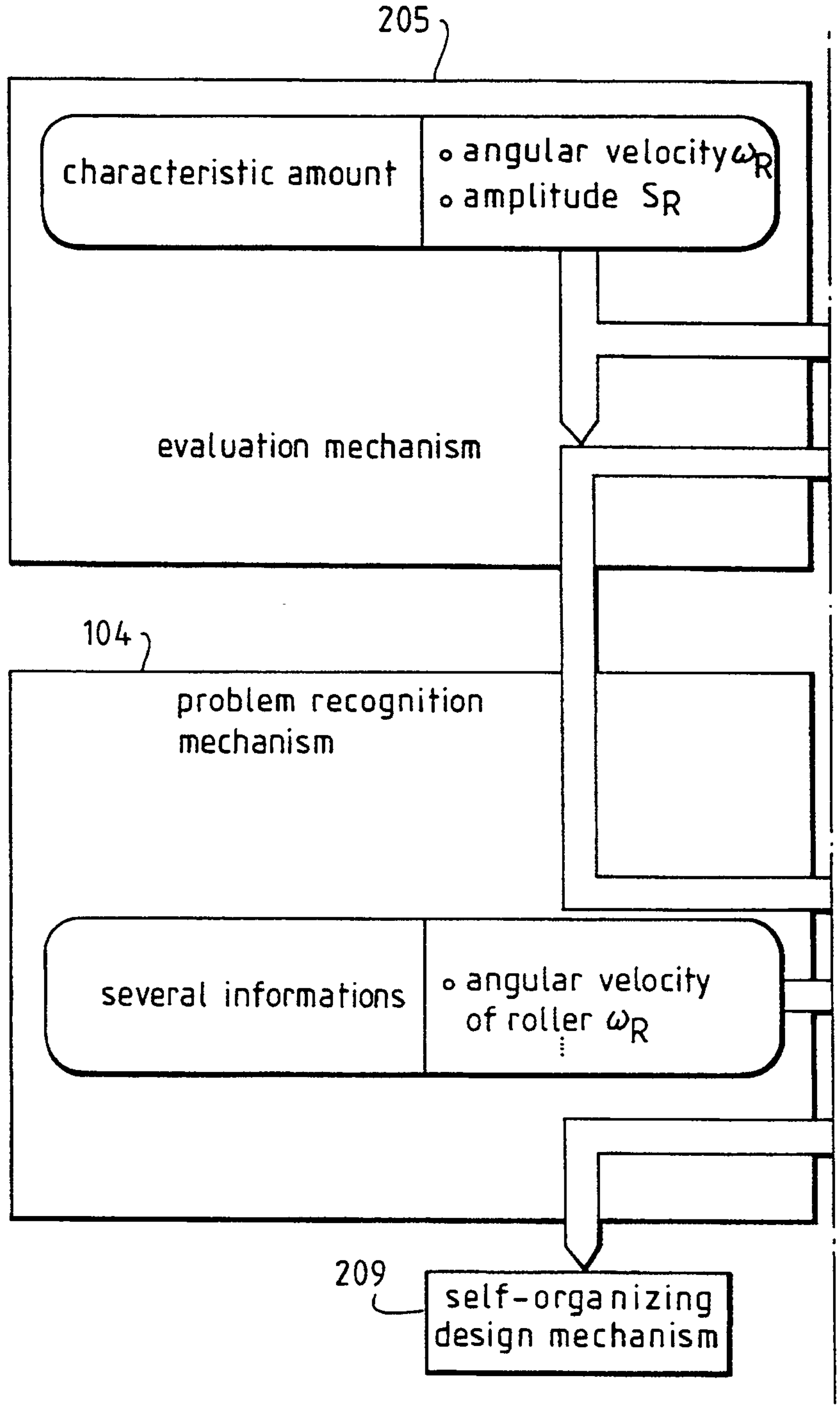
205
characteristic amount
o angular velocity $\omega_R$
o amplitude $S_R$
evaluation mechanism
104
problem recognition mechanism
several informations
o angular velocity of roller $\omega_R$
209
self-organizing design mechanism

FIG. 34 contd.

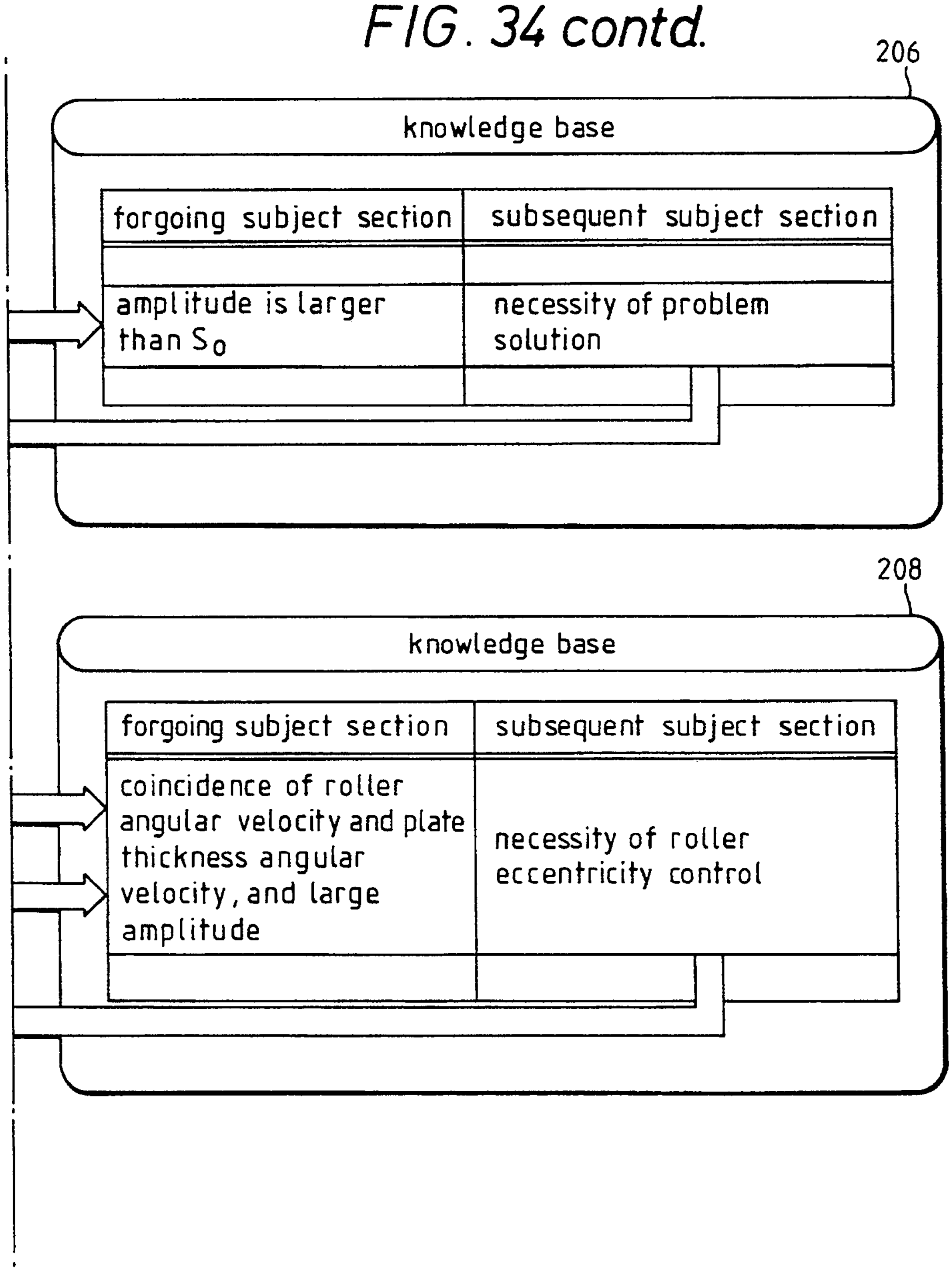
206
knowledge base
forgoing subject section
subsequent subject section
amplitude is larger than $S_0$
necessity of problem solution
208
knowledge base
forgoing subject section
subsequent subject section
coincidence of roller angular velocity and plate thickness angular velocity, and large amplitude
necessity of roller eccentricity control

FIG. 35

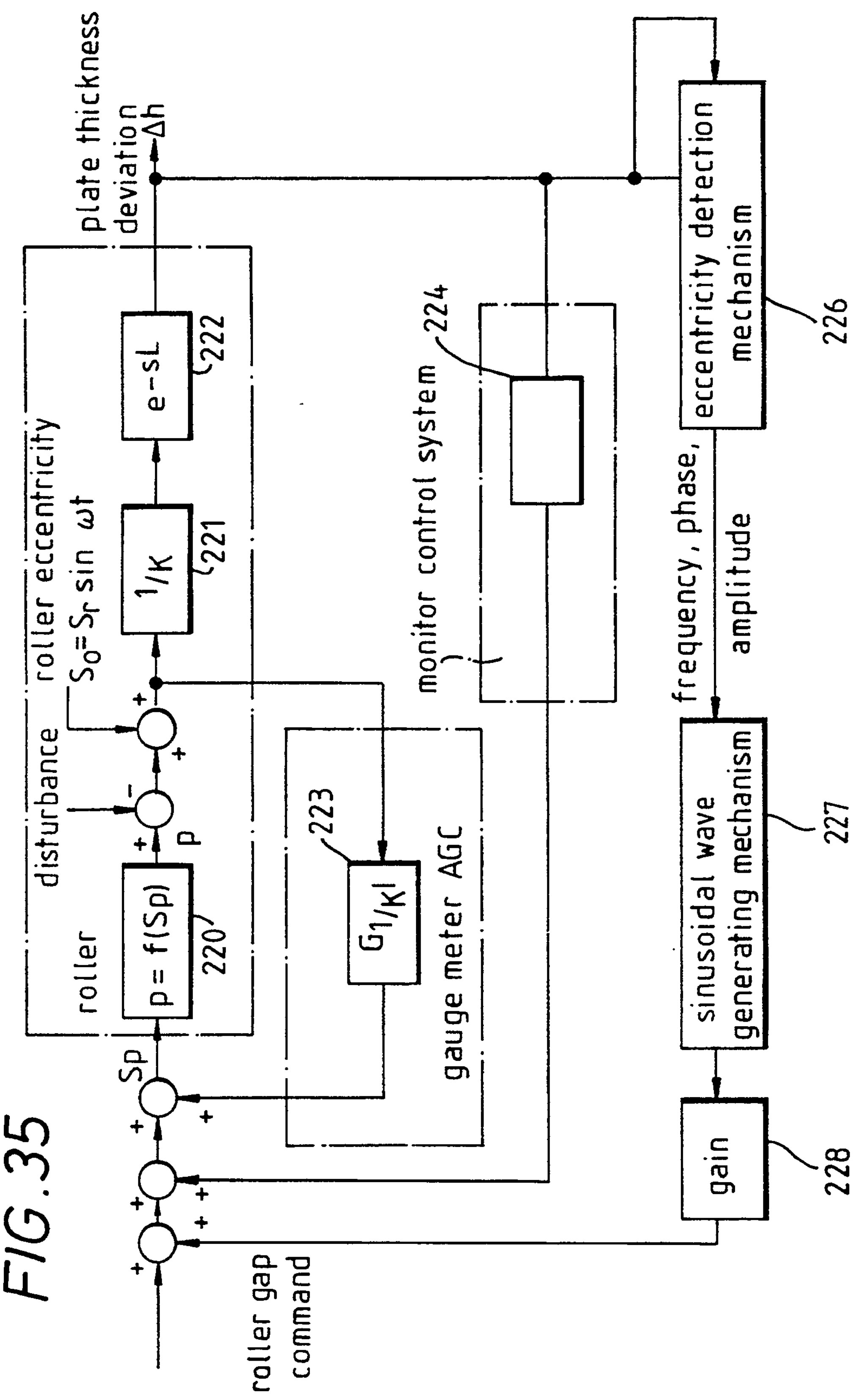

plate thickness deviation Δh
roller eccentricity
$S_0 = S_r \sin \omega t$
disturbance
roller
p = f(Sp)
220
p
Sp
$1/K$
221
e-sL
222
$G_{1/K'}$
223
gauge meter AGC
monitor control system
224
eccentricity detection mechanism
226
frequency, phase, amplitude
sinusoidal wave generating mechanism
227
gain
228
roller gap command

FIG. 36

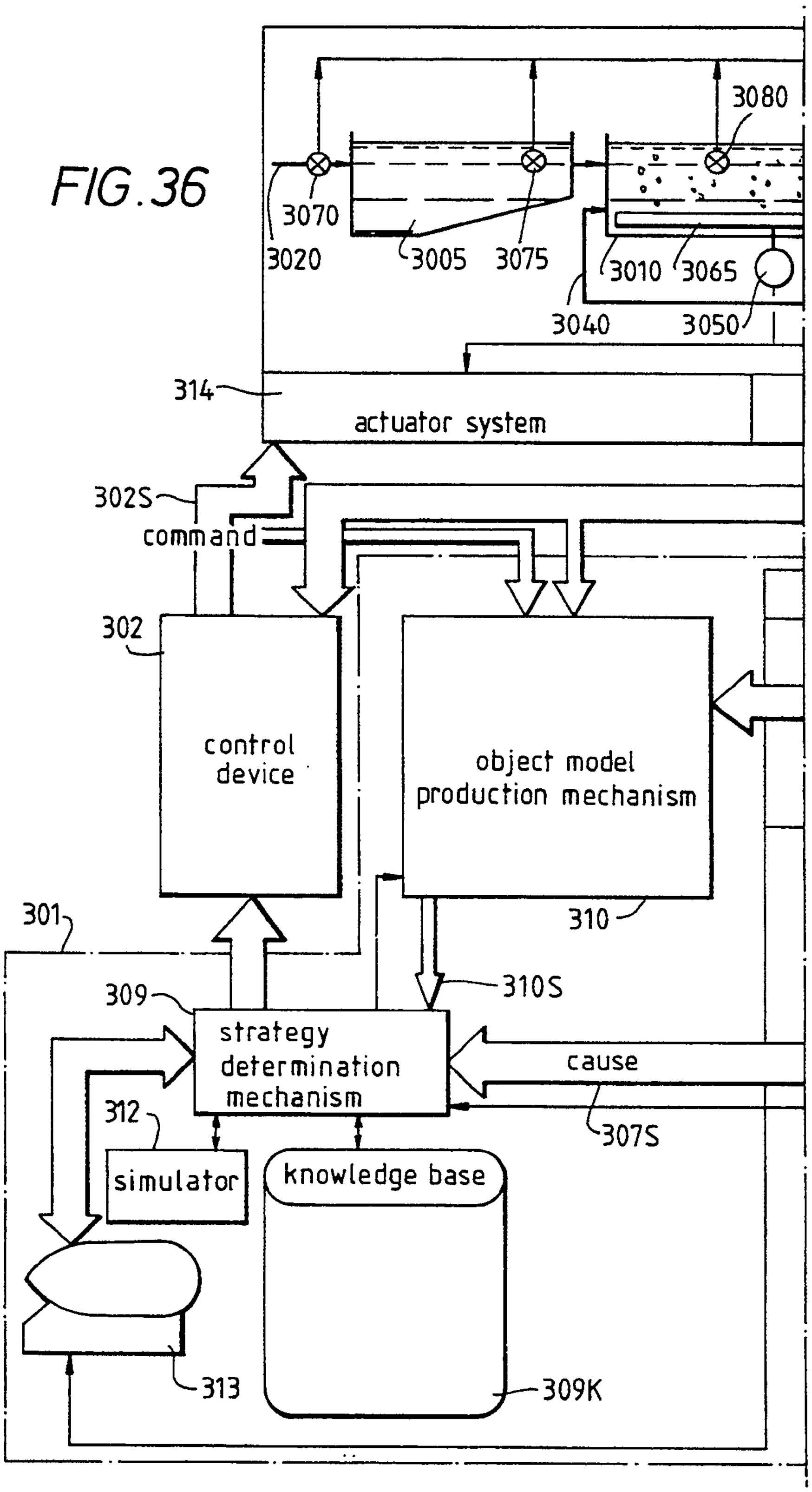
3080
3070
3020
3005
3075
3010
3065
3040
3050
314
actuator system
302S
command
302
control device
object model production mechanism
310
301
309
310S
strategy determination mechanism
cause
307S
312
simulator
knowledge base
313
309K

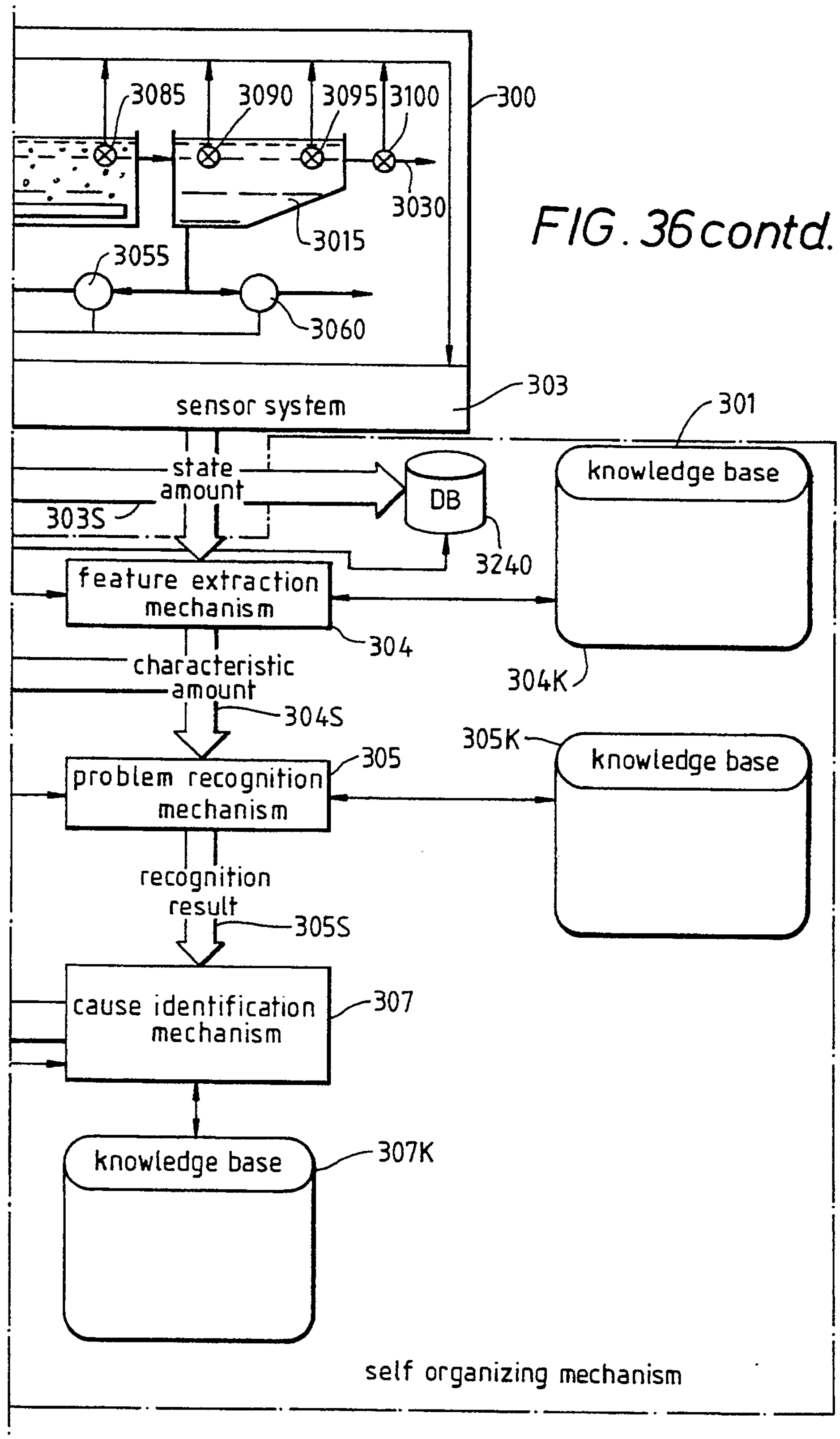
3085
3090
3095
3100
300
3030
3015
3055
3060
sensor system
303
301
state amount
303S
DB
3240
knowledge base
feature extraction mechanism
304
304K
characteristic amount
304S
305K
knowledge base
problem recognition mechanism
305
recognition result
305S
cause identification mechanism
307
knowledge base
307K
self organizing mechanism

FIG. 36 contd.

FIG. 37

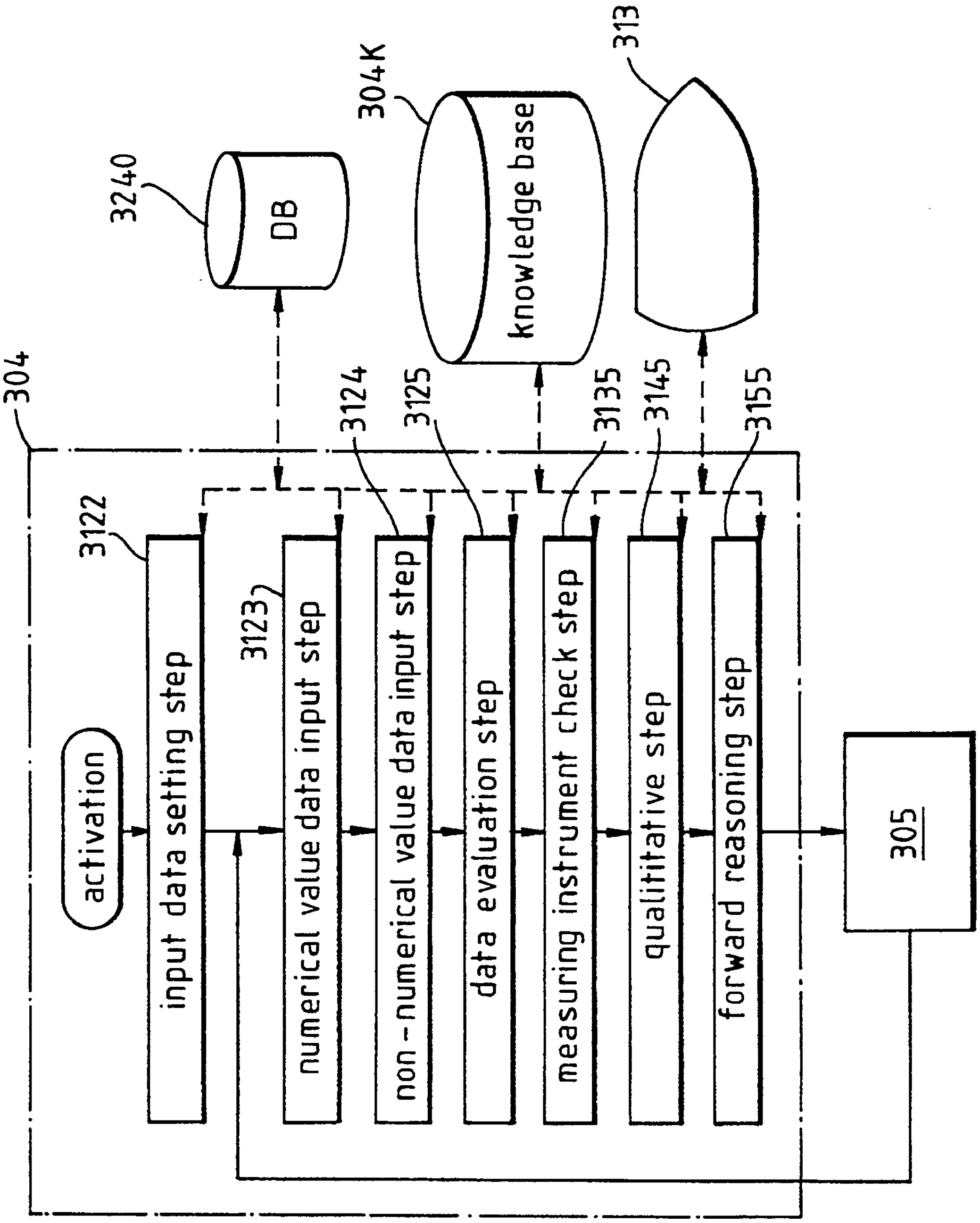
activation
input data setting step
numerical value data input step
non-numerical value data input step
data evaluation step
measuring instrument check step
qualititative step
forward reasoning step
305
DB
knowledge base
3240
304K
313
304
3122
3123
3124
3125
3135
3145
3155

FIG. 38

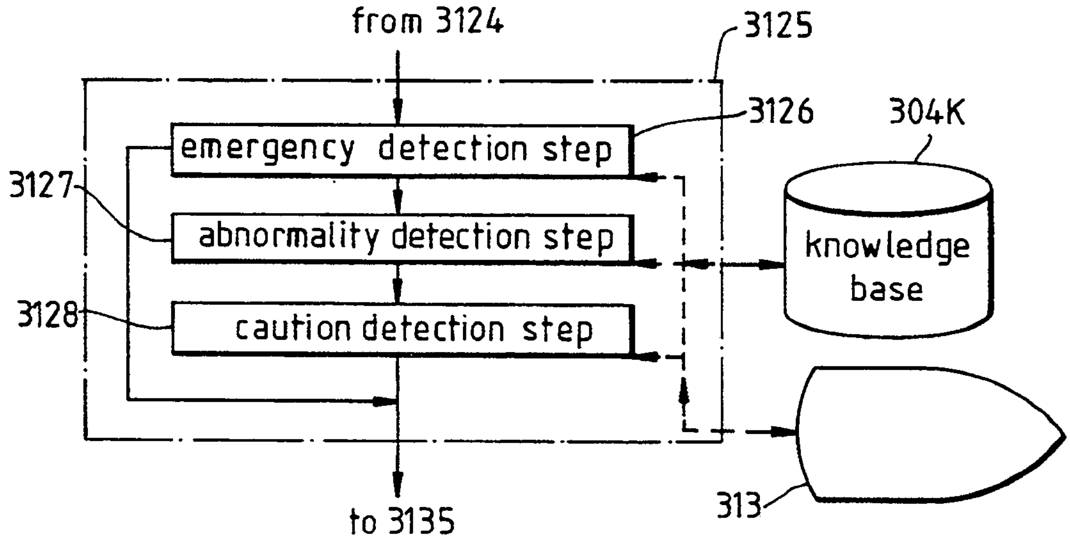
from 3124
3125
3126
304K
emergency detection step
3127
abnormality detection step
knowledge base
3128
caution detection step
313
to 3135

FIG. 39

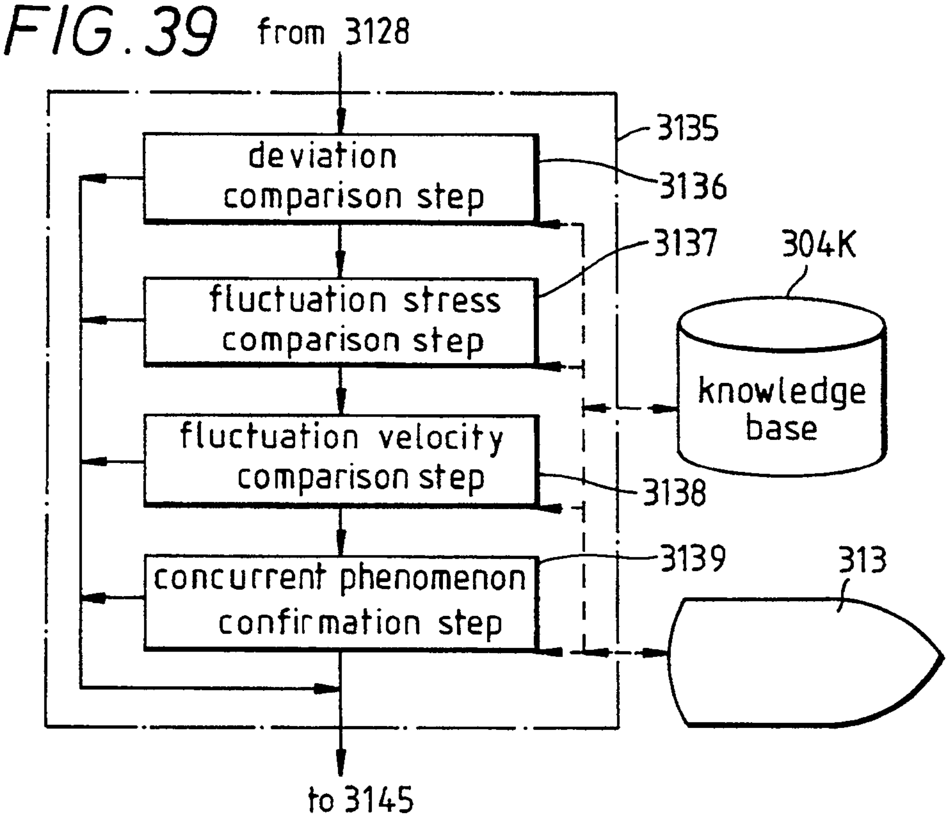
from 3128
3135
deviation comparison step
3136
3137
304K
fluctuation stress comparison step
knowledge base
fluctuation velocity comparison step
3138
3139
313
concurrent phenomenon confirmation step
to 3145

FIG. 40

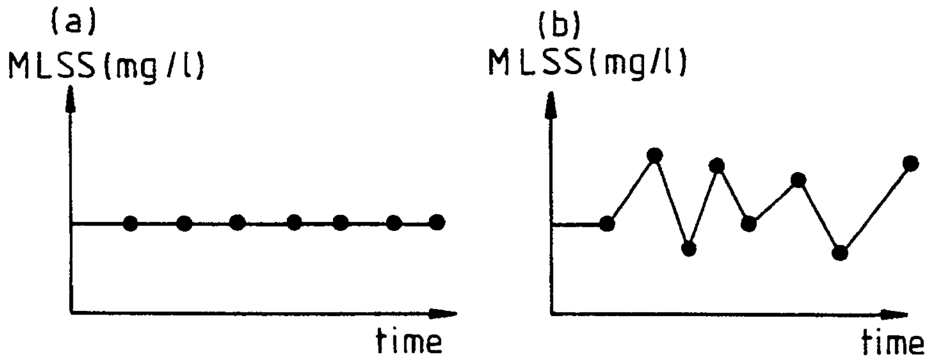


FIG. 41

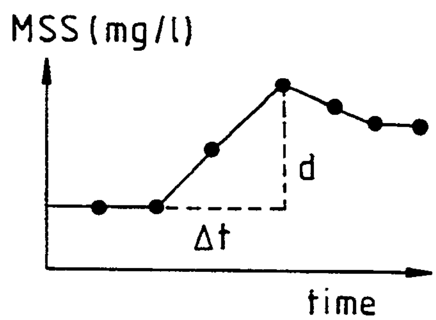


FIG. 42

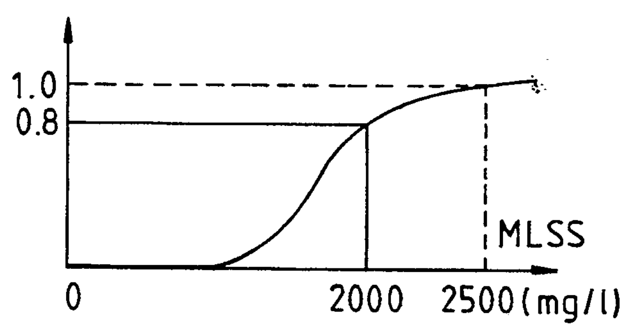

FIG. 43

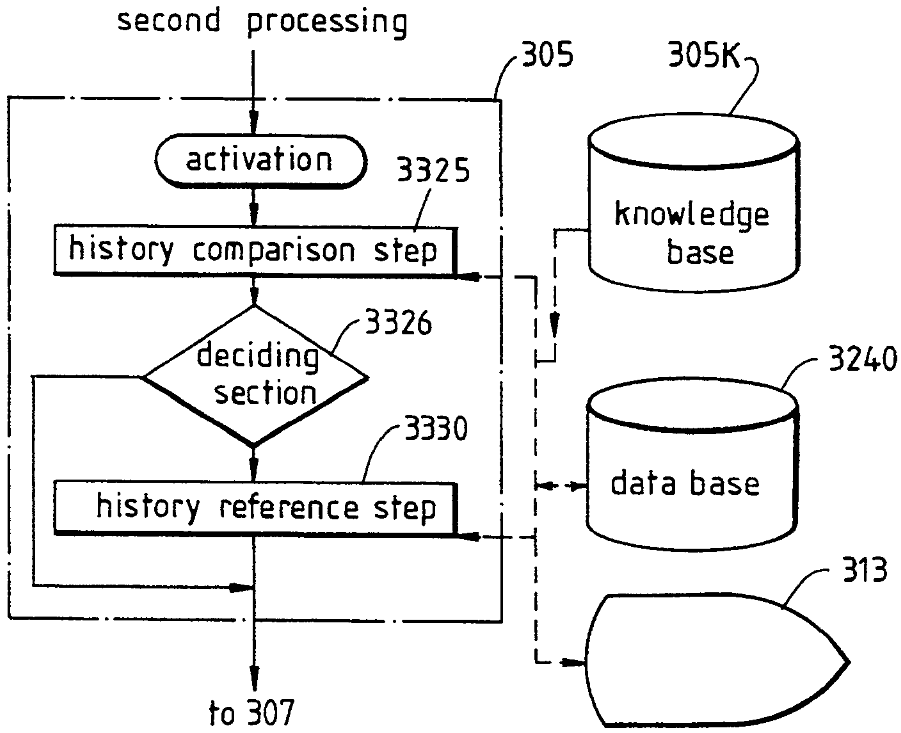
second processing
305
305K
activation
3325
history comparison step
knowledge base
3326
deciding section
3240
3330
data base
history reference step
313
to 307

FIG. 44

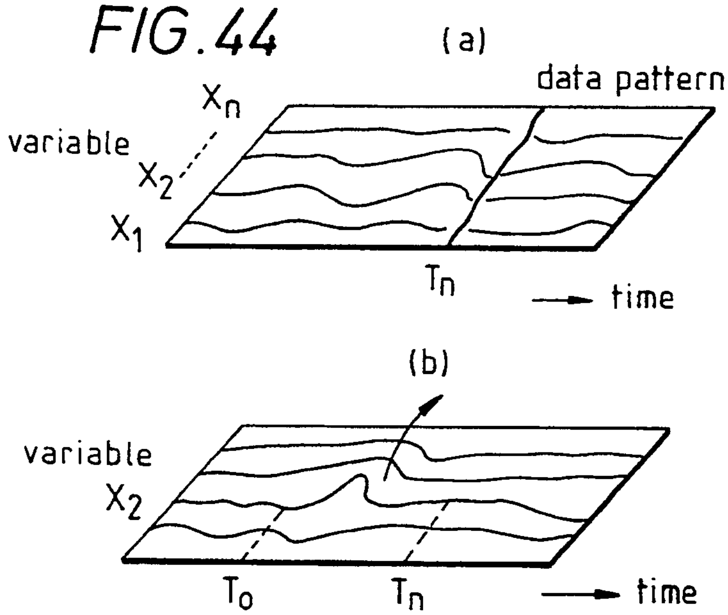
(a)
data pattern
variable
$X_n$
$X_2$
$X_1$
$T_n$
time
(b)
variable
$X_2$
$T_0$
$T_n$
time

FIG. 45

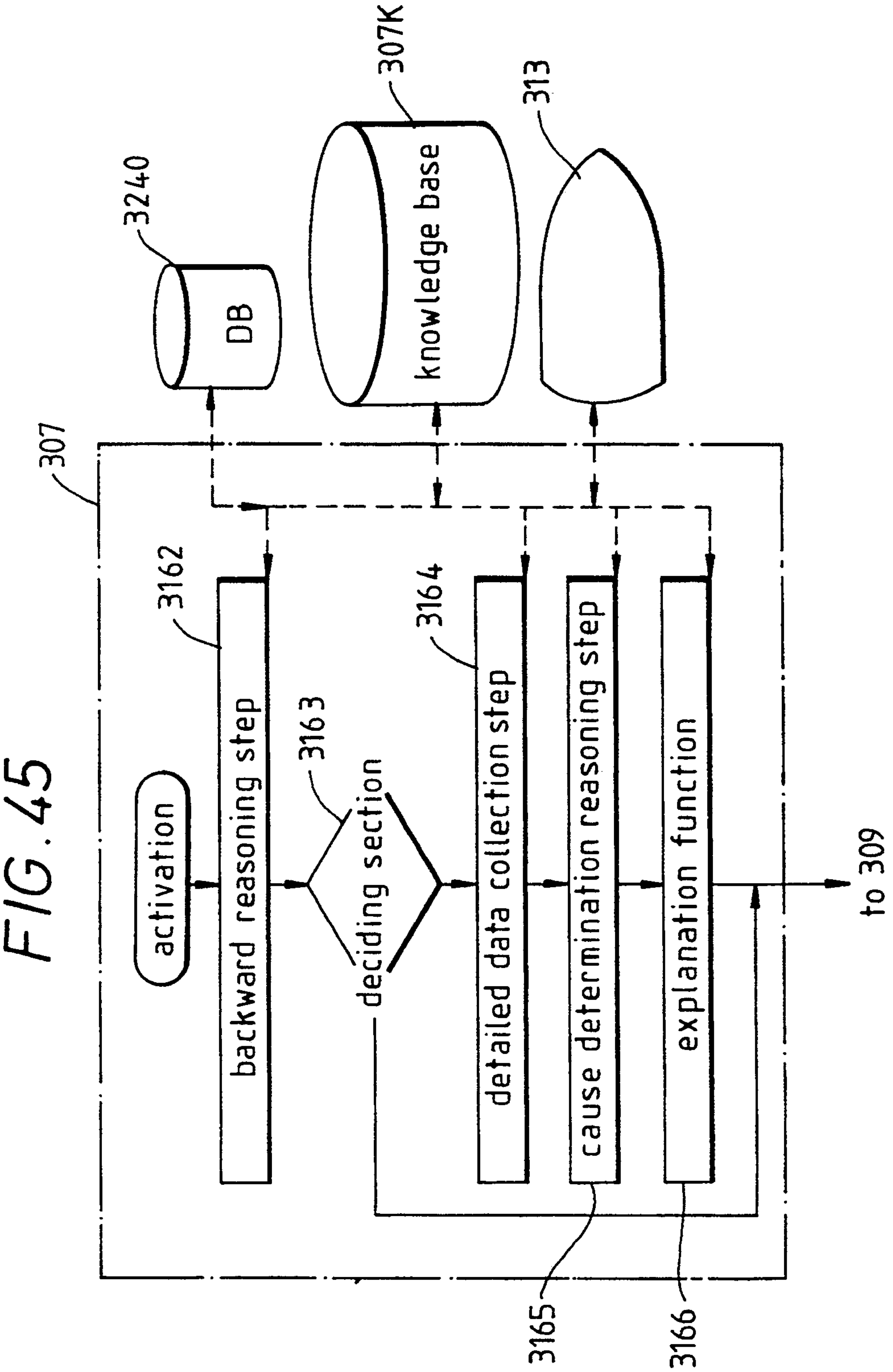

307
3240
DB
307K
knowledge base
313
activation
backward reasoning step
3162
3163
deciding section
3164
detailed data collection step
cause determination reasoning step
explanation function
to 309
3165
3166

FIG. 46

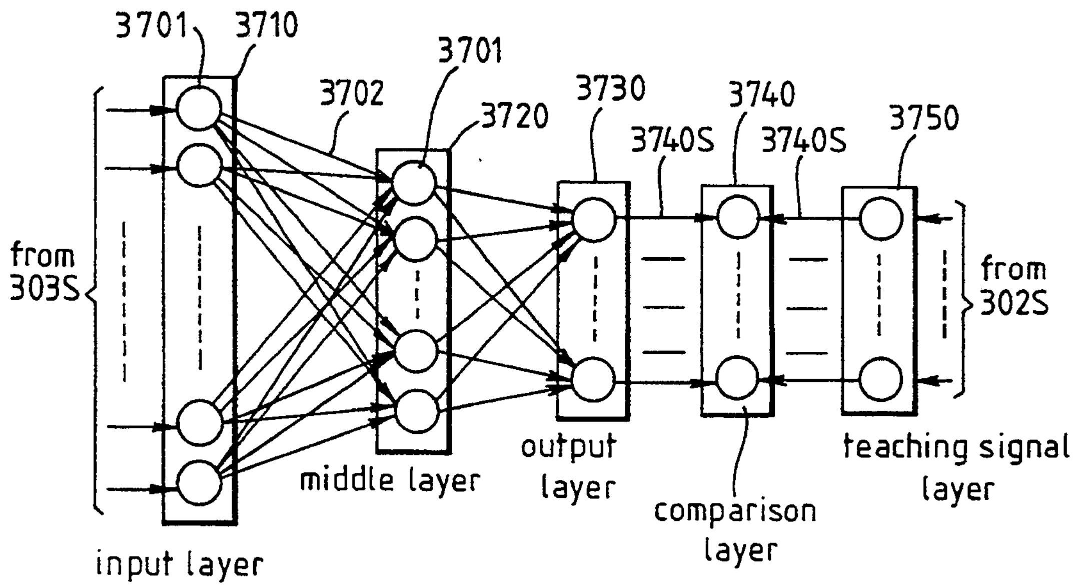


FIG. 47

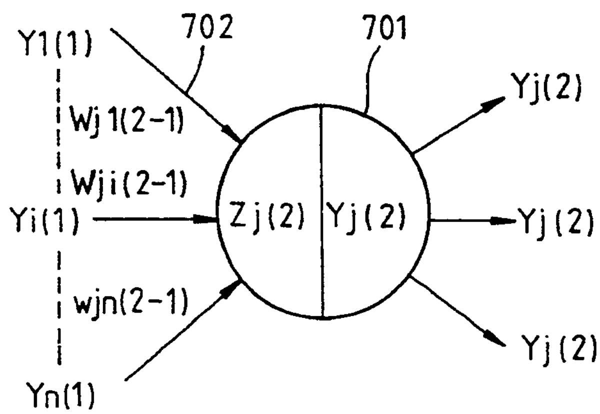


FIG. 48

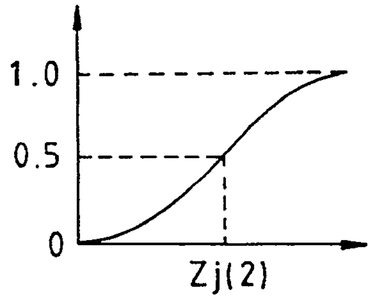

FIG. 49

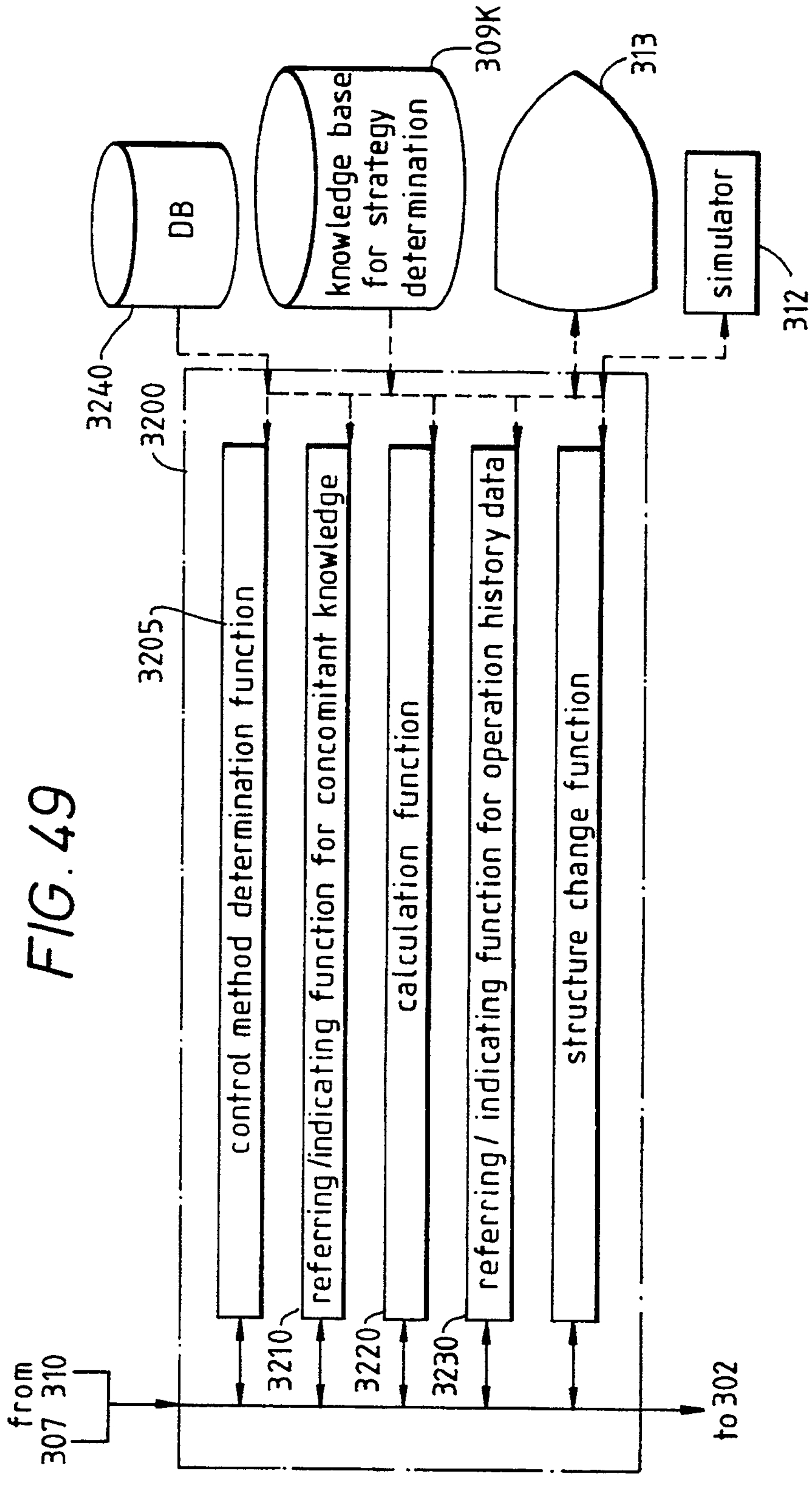
3240
DB
knowledge base for strategy determination
309K
313
simulator
312
3200
3205
control method determination function
referring/indicating function for concomitant knowledge
calculation function
referring/ indicating function for operation history data
structure change function
3210
3220
3230
from 307 310
to 302

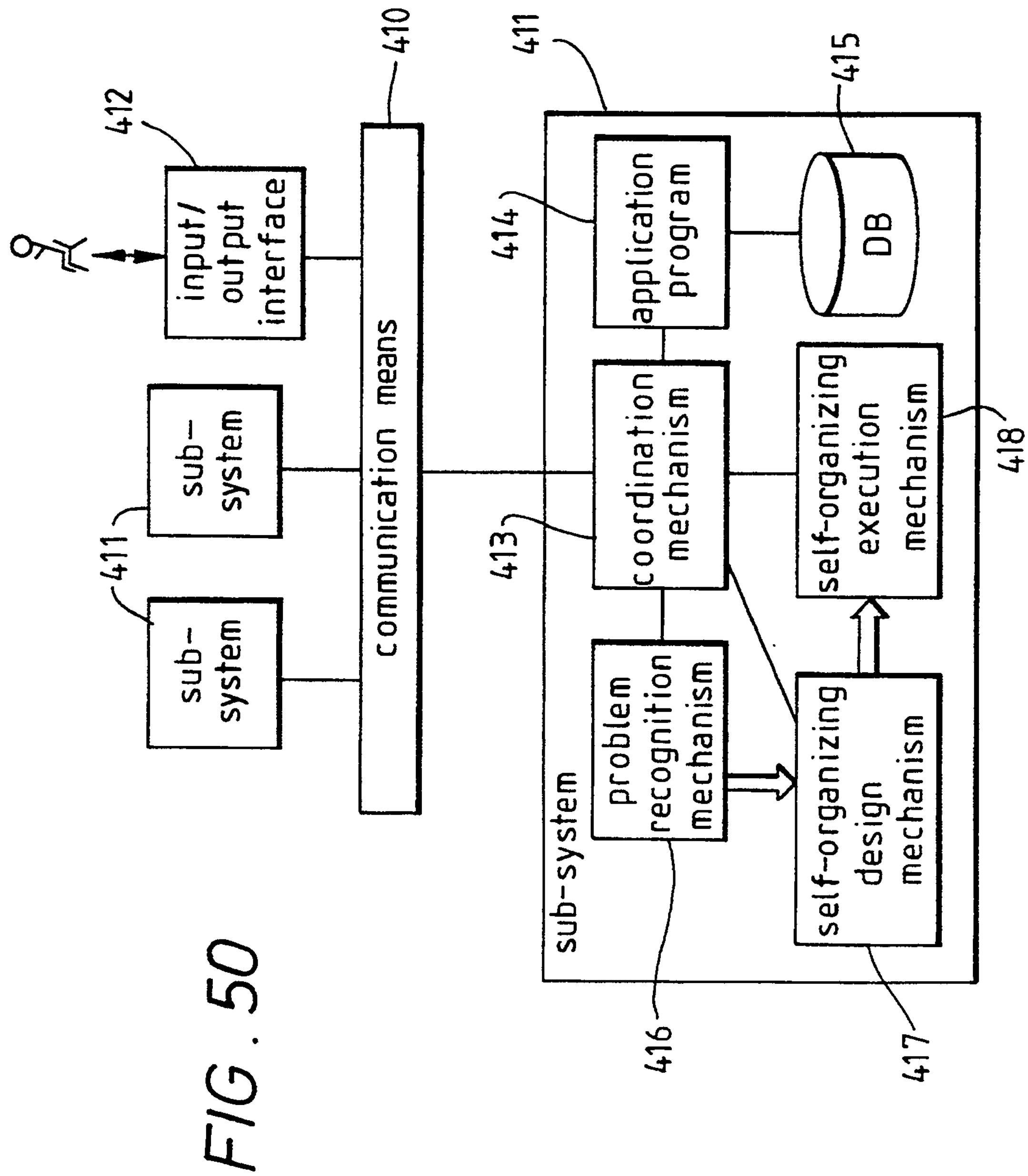
412
410
411
415
input/ output interface
communication means
application program
DB
414
sub-system
sub-system
411
coordination mechanism
413
self-organizing execution mechanism
418
problem recognition mechanism
self-organizing design mechanism
sub-system
416
417

FIG. 50

FIG. 51

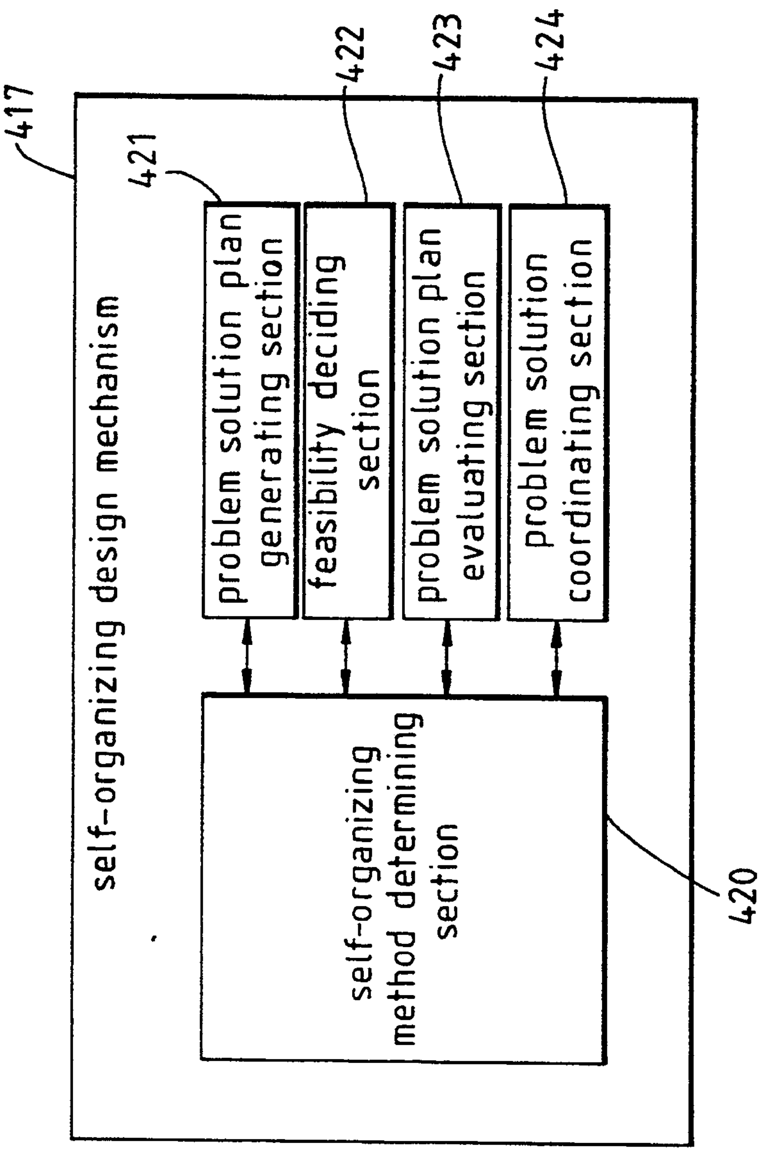
417
self-organizing design mechanism
421
problem solution plan generating section
422
feasibility deciding section
423
problem solution plan evaluating section
424
problem solution coordinating section
self-organizing method determining section
420

FIG. 52

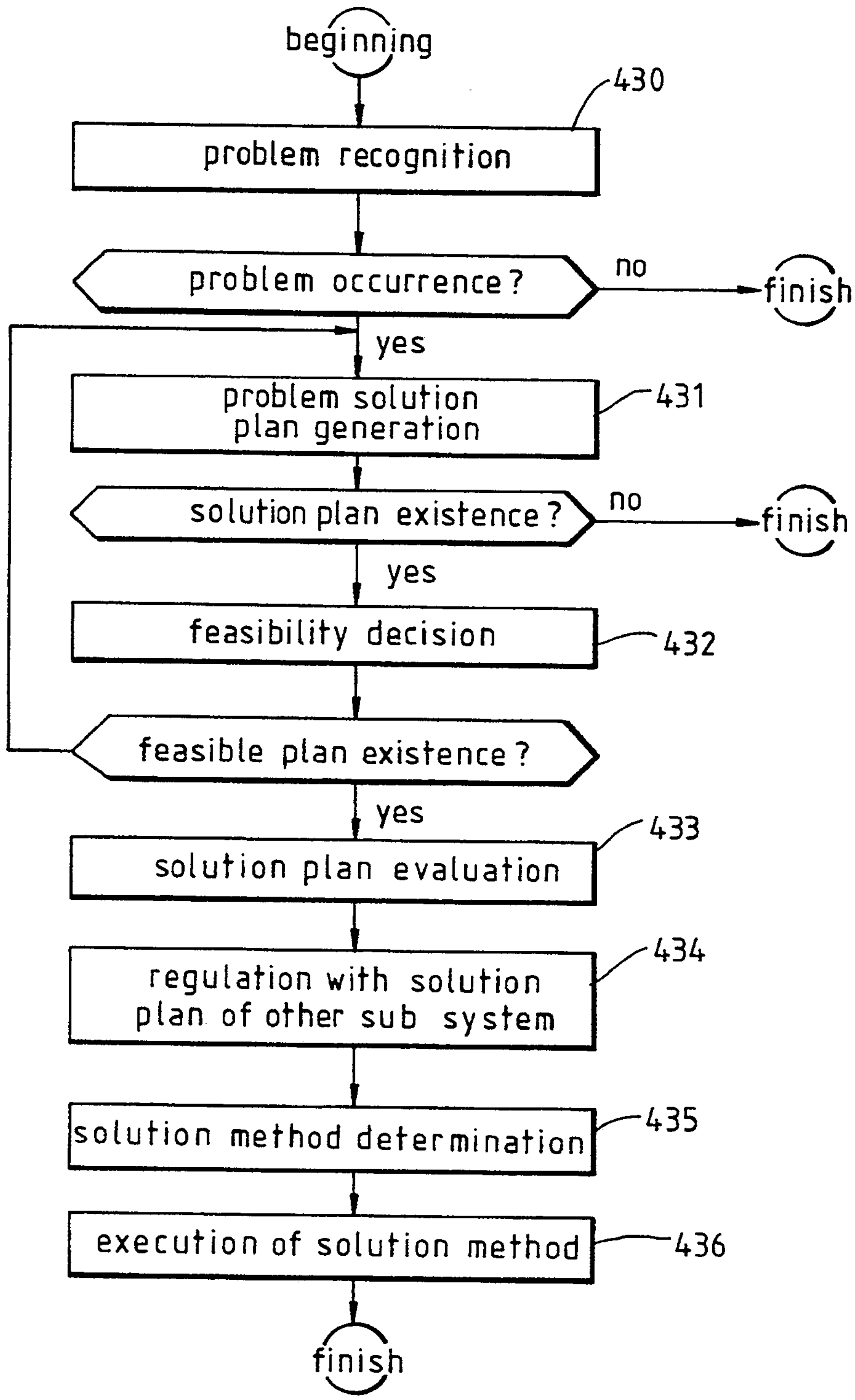
beginning
430
problem recognition
problem occurrence?
no
finish
yes
problem solution plan generation
431
solution plan existence?
no
finish
yes
feasibility decision
432
feasible plan existence?
yes
solution plan evaluation
433
regulation with solution plan of other sub system
434
solution method determination
435
execution of solution method
436
finish

FIG. 53

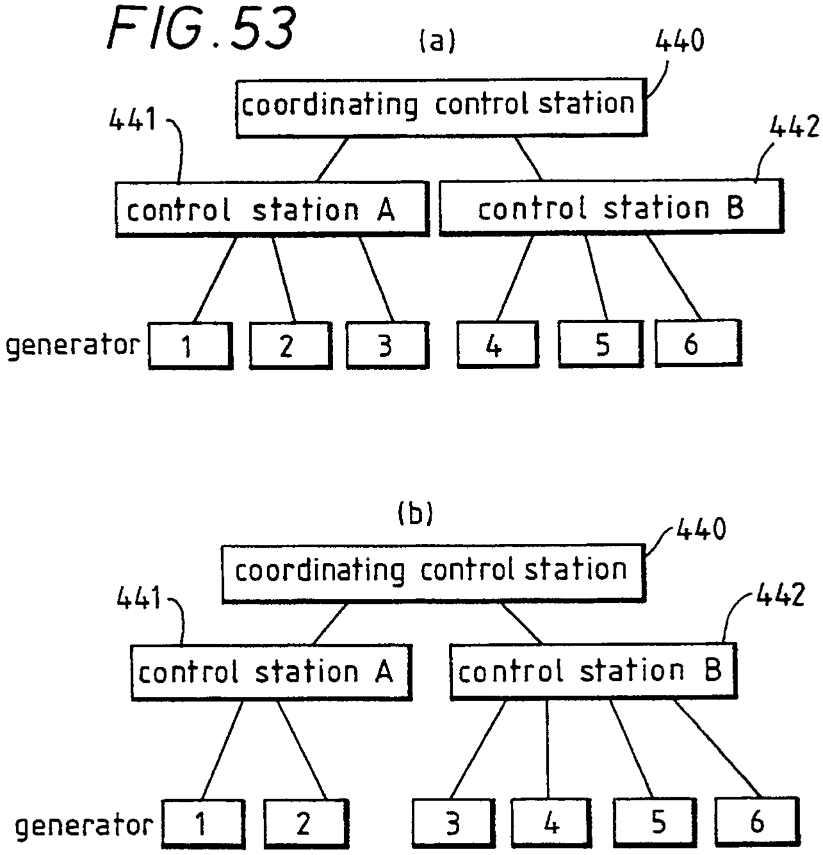
(a)
440
coordinating control station
441
442
control station A
control station B
generator
1
2
3
4
5
6
(b)
440
coordinating control station
441
442
control station A
control station B
generator
1
2
3
4
5
6

FIG. 54

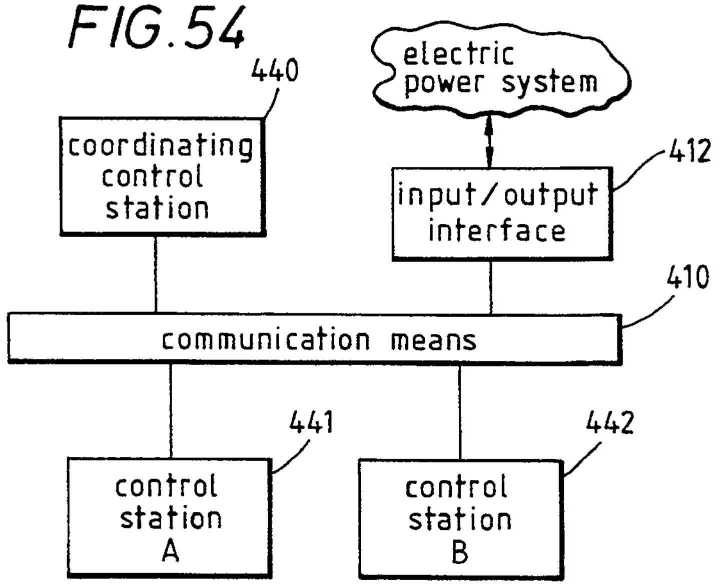
440
coordinating control station
electric power system
412
input/output interface
410
communication means
441
442
control station A
control station B